# EUROPEAN PATENT SPECIFICATION

(11) **EP 4 246 840 B1**
(45) Date of publication and mention of the grant of the patent: **13.08.2025**
(21) Application number: 22902502.8
(22) Date of filing: 08.12.2022
(51) Int. Cl.: G06F 1/16, H04M 1/02

(54) **TURNING MECHANISM AND ELECTRONIC DEVICE**
DREHMECHANISMUS UND ELEKTRONISCHE VORRICHTUNG
MÉCANISME DE ROTATION ET DISPOSITIF ÉLECTRONIQUE

(30) Priority: 26.01.2022 CN 202210095238
(43) Date of publication of application: 20.09.2023
(73) Proprietor: Honor Device Co., Ltd., Shenzhen, Guangdong 518040 (CN)
(72) Inventor: JIN, Kaifang, Shenzhen, Guangdong 518040 (CN); CHEN, Guimin, Xi'an, Shaanxi 710049 (CN); CHEN, Ruihao, Shenzhen, Guangdong 518040 (CN); DONG, Shaohong, Shenzhen, Guangdong 518040 (CN)
(74) Representative: Isarpatent
(86) International application number: PCT/CN2022/137675
(87) International publication number: WO 2023/142713

(56) References cited:
- EP-A1- 4 063 674
- WO-A1-2021/115462
- CN-A- 112 769 986
- CN-A- 113 315 860
- CN-A- 113 833 741
- CN-A- 113 923 279
- US-A1- 2020 329 178

## Description

Priority is claimed to Chinese Patent Application No. 202210095238.1, filed with the China National Intellectual Property Administration on January 26, 2022 and entitled "ROTARY MECHANISM AND ELECTRONIC DEVICE".

### TECHNICAL FIELD

This disclosure generally relates to the field of electronic technologies, and the invention in particular relates to an electronic device including a rotary mechanism.

### BACKGROUND

With the development of foldable screen technologies, foldable electronic devices have become a hot technology. At present, a rotary mechanism configured to realize a foldable function of an electronic device is generally provided with a locking member. The locking member may provide damping force for the electronic device in a folded state and an unfolded state, so as to maintain the electronic device in a current state. However, the locking member is generally fixed to a base of the rotary mechanism. Due to a limited mounting space at the base, the disposing of the locking member may increase a thickness of the base, which is not conducive to rationalization and thinning of a structure of the rotary mechanism and is not conducive to thin design of the electronic device.

WO 2021/115462 A1 relates to the technical field of electronic devices. Provided are a rotary shaft mechanism and an electronic device. The rotary shaft mechanism comprises a main shaft assembly and two folding assemblies, which are symmetrically arranged relative to the main shaft assembly; and the two folding assemblies can rotate in a direction facing each other or in a direction away from each other relative to the main shaft assembly. When the folding assemblies are specifically configured, each of the folding assemblies comprises a rotary assembly, a supporting plate and a shell-fixing frame, wherein the rotary assembly is rotationally connected to the main shaft assembly, and the supporting plate is rotationally connected to the shell-fixing frame and is slidably connected to the rotary assembly. By using the rotary shaft mechanism, in the relative rotation process of two shell-fixing frames, two supporting plates rotate in the same direction relative to the shell-fixing frames on corresponding sides, so that the two supporting plates and the main shaft assembly can form a screen-accommodating space similar to a triangle shape, and when the electronic device is in a closed state, the screen-accommodating space can be used for accommodating a bent portion of a flexible screen, such that the flexible screen can be prevented from being damaged by means of pressing, and the service life of the flexible screen can be prolonged.

CN 113833741 A discloses a folding device and electronic equipment. The folding device comprises a main shaft assembly and shells arranged on two sides of the main shaft assembly respectively, wherein swing arms are rotatably connected with the main shaft assembly and are fixedly connected with the shells located on the same side; and supporting plate are rotatably connected with the main shaft assembly and are in sliding connection with the swing arms or the shells located on the same side. According to the folding device, the shells on the two sides rotate relative to the main shaft assembly through the swing arms; the shells rotate to drive the supporting plates to slide relative to the shells, so that the supporting plates and the main shaft assembly jointly define a receiving space for receiving a flexible screen in a closed state of the electronic equipment, and the supporting plates and the main shaft assembly jointly support the surface of the flexible screen to be flat in the flattened state of the electronic equipment, and folding and supporting effects are achieved; meanwhile, the shells on the two sides in the closed state can be completely closed without gaps, so that the whole machine is equal in thickness, and the folding effect is improved.

CN 113315860 A discloses a folding mechanism and an electronic equipment, and belongs to the field of communication equipment. In a folding mechanism, a first shell seat is rotationally arranged on a first screen supporting plate, a second shell seat is rotationally arranged on a second screen supporting plate, and a third screen supporting plate is movably connected with a base part in the supporting direction of the third screen supporting plate; the first shell seat is rotatably connected with the base part through a first swing arm, the second shell seat is rotatably connected with the base part through a second swing arm, the first screen supporting plate is slidably and rotatably connected with the base part through a third swing arm, and the second screen supporting plate is slidably and rotatably connected with the base part through a fourth swing arm. The rotating axes of the first swing arm and the third swing arm are arranged at intervals, the rotating axes of the second swing arm and the fourth swing arm are arranged at intervals, the cover plate is arranged on the side, away from the third screen supporting plate, of the base part, and in an unfolding state, the cover plate covers the first end of the first swing arm. The folding mechanism can prevent the bending part of the flexible screen from being extruded to be excessively bent, and the service life of the flexible screen can be prolonged.

CN 113923279 A discloses a folding assembly and a foldable electronic device, and relates to the issue that a size of the folding assembly is large when the folding assembly is in a folded state, and the stability of the folding assembly is poor, so as to improve the stability and reliability of the folding assembly, reduce the size of the folding assembly when the folding assembly is in the folded state, and improve the user experience. The folding assembly is applied to the foldable electronic equipment and is used for bearing a flexible display screen. The folding assembly comprises a shaft seat, a first shell and a second shell. The first shell and the second shell are arranged on the two sides of the shaft seat respectively. Door plate swing arms are arranged on the two sides of the center line of the shaft seat above the shaft seat, one end of each door plate swing arm is rotationally connected with the shaft seat, and the other end of each door plate swing arm is rotationally connected with the first shell or the second shell.

### SUMMARY

The object of the present invention is to provide an electronic device with a rotary mechanism, which has simple structures and is conducive to thinning of the electronic device. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing object, in particular the following technical teachings are used:
According to a first aspect of the invention, the invention provides an electronic device, including: a rotary mechanism, a first housing, and a foldable screen, the rotary mechanism being configured to switch between an unfolded state and a folded state. The foldable screen includes a first portion and a third portion connected with each other. The rotary mechanism includes a base, a first swing arm, a first connecting plate, and a first multistable flexible mechanism; the first swing arm being hinged to one side of the base; the first connecting plate being configured to be fixed to the first housing, the first connecting plate and the first swing arm being located on a same side of the base, the first connecting plate being hinged to the one side of the base, and a hinge axis of the first connecting plate with respect to the base and a hinge axis of the first swing arm with respect to the base both extending along a first direction; both the base and the first housing having a supporting surface, the supporting surface of the first housing being configured to support and fix the first portion, and the supporting surface of the base being configured to at least support the third portion in the unfolded state; and the first multistable flexible mechanism being disposed on the first connecting plate, and configured to lock the rotary mechanism in the folded state and the unfolded state.

According to the electronic device in the embodiments of the first aspect of this application, the first multistable flexible mechanism is disposed, and the first multistable flexible mechanism is disposed on the first connecting plate, which can save a space of the rotary mechanism corresponding to the base so as to properly optimize a structural layout of the entire rotary mechanism, thereby being conducive to optimizing a structural layout of the rotary mechanism corresponding to the base, conducive to realizing thin design of the rotary mechanism corresponding to the base, and conducive to thin design of the electronic device. In addition, modular design of the first multistable flexible mechanism and the first connecting plate can also be realized, which facilitates assembly of the first multistable flexible mechanism and the first connecting plate as a whole with other components of the rotary mechanism. Moreover, motion and force transmission of the first multistable flexible mechanism are realized by deformation of some or all members thereof, without friction and wear, which is conducive to prolonging a service life.

According to the invention of the first aspect of this application, the first swing arm slides with respect to the first connecting plate and perpendicular to the first direction when the rotary mechanism switches between the unfolded state and the folded state.

In some embodiments of the first aspect of this application, the first multistable flexible mechanism has a first stable state and a second stable state, and the first multistable flexible mechanism cooperates with the first swing arm to switch between the first stable state and the second stable state; in the unfolded state of the rotary mechanism, the supporting surface of the base and the supporting surface of the first housing are arranged coplanarly and have a same orientation, and the first multistable flexible mechanism is in the first stable state, so as to lock the first swing arm at a first locking position of the first swing arm with respect to the first connecting plate; and in the folded state of the rotary mechanism, the supporting surface of the first housing is perpendicular to the supporting surface of the base, and the first multistable flexible mechanism is in the second stable state, so as to lock the first swing arm at a second locking position of the first swing arm with respect to the first connecting plate.

According to the electronic device in the embodiments of the first aspect of this application, the first multistable flexible mechanism cooperates with the first swing arm to lock the first swing arm at the second locking position of the first swing arm with respect to the first connecting plate in the folded state of the rotary mechanism and to lock the first swing arm at the first locking position of the first swing arm with respect to the first connecting plate in the unfolded state of the rotary mechanism, which can save a space of the rotary mechanism corresponding to the base while the folded state and the unfolded state of the electronic device are locked by using the first multistable flexible mechanism, so as to properly optimize a structural layout of the entire rotary mechanism, thereby being conducive to optimizing a structural layout of the rotary mechanism corresponding to the base, conducive to realizing thin design of the rotary mechanism corresponding to the base, and conducive to thin design of the electronic device. In addition, modular design of the first multistable flexible mechanism and the first connecting plate can also be realized, which facilitates assembly of the first multistable flexible mechanism and the first connecting plate as a whole with other components of the rotary mechanism. Moreover, motion and force transmission of the first multistable flexible mechanism are realized by deformation of some or all members thereof, without friction and wear, which is conducive to prolonging the service life.

In some embodiments of the first aspect of this application, the first multistable flexible mechanism includes: a first compliant bistable unit, the first compliant bistable unit including two first compliant beam units, the two first compliant beam units being arranged in the first direction and symmetrically disposed in the first direction, end portions of one ends, which are adjacent to each other, of the two first compliant beam units being respectively fixed with respect to the first swing arm, and end portions of the other ends, which are away from each other, of the two first compliant beam units being respectively fixed with respect to the first connecting plate; where a length dimension of an extension trajectory of each of the first compliant beam units is greater than a vertical distance between the end portion of the one end of the first compliant beam unit and the end portion of the other end of the first compliant beam unit in the first direction. In this way, the structure is simple.

In some embodiments of the first aspect of this application, the first compliant beam unit includes: a first compliant beam, a first rigid member, and a first flexible beam; an end portion of one end of the first compliant beam being fixed with respect to the first swing arm, an end portion of one end of the first flexible beam being fixed with respect to the first connecting plate, and the first rigid member being connected between an end portion of the other end of the first compliant beam and an end portion of the other end of the first flexible beam; where rigidity of the first rigid member is greater than that of the first compliant beam, and the rigidity of the first rigid member is greater than that of the first flexible beam. Therefore, it is conducive to improving rigidity of the entire first compliant beam unit. In this way, it is conducive to improving force required to bend the first compliant beam unit and improving reliability of the locking of the first swing arm by the first multistable flexible mechanism.

In some embodiments of the first aspect of this application, a cross-sectional area of the first rigid member is greater than that of the first compliant beam, and the cross-sectional area of the first rigid member is greater than that of the first flexible beam. Therefore, the rigidity of the first rigid member is greater than the rigidity of the first compliant beam and the rigidity of the first flexible beam.

In some embodiments of the first aspect of this application, both the first compliant beam and the first flexible beam are sheet-shaped. In this way, elastic deformation of the first compliant beam and the first flexible beam can be facilitated.

In some embodiments of the first aspect of this application, the first compliant beam unit is in a shape of a sheet with an equal cross-sectional area everywhere. Therefore, the structure is simple, and the elastic deformation of the first compliant beam unit is better facilitated.

In some embodiments of the first aspect of this application, the rotary mechanism has an intermediate hovering state, the intermediate hovering state being on a switching path of the rotary mechanism switching between the unfolded state and the folded state; and the first multistable flexible mechanism further has a third stable state, the third stable state being on a switching path of the first multistable flexible mechanism switching between the first stable state and the second stable state, and in the intermediate hovering state of the rotary mechanism, the first multistable flexible mechanism is in the third stable state so as to lock the first swing arm at a third locking position of the first swing arm with respect to the first connecting plate, the third locking position being on a switching path of the first swing arm switching between the first locking position and the second locking position. In this way, the entire multistable flexible mechanism can have at least three stable states, so that folding, unfolding, and intermediate hovering between the folded state and the unfolded state of the electronic device can be realized.

In some embodiments of the first aspect of this application, the first multistable flexible mechanism further includes a second compliant bistable unit, the second compliant bistable unit and the first compliant bistable unit being arranged in a sliding direction of the first swing arm with respect to the first connecting plate; the second compliant bistable unit including two second compliant beam units, the two second compliant beam units being arranged in the first direction and symmetrically disposed in the first direction, the two second compliant beam units being symmetrically disposed with respect to a symmetry line of the two first compliant beam units, end portions of one ends, which are adjacent to each other, of the two second compliant beam units being respectively fixed with respect to the first swing arm, end portions of the other ends of the two second compliant beam units being respectively fixed with respect to the first connecting plate, and a length dimension of an extension trajectory of each of the second compliant beam units being greater than a vertical distance between the end portion of the one end of the second compliant beam unit and the end portion of the other end of the second compliant beam unit in the first direction; where at least one of a material, a shape, and a size of the second compliant beam unit is different from that of the first compliant beam unit. In this way, the entire first multistable flexible mechanism has at least three stable states, so that folding, unfolding, and intermediate hovering between the folded state and the unfolded state of the electronic device can be realized. Moreover, the entire first multistable flexible mechanism has advantages such as fewer parts, a simple structure, easy assembly, high reliability, no friction and no wear, being conducive to realization of integrated arrangement of the first multistable flexible mechanism and the first connecting plate, and overall flattening of the first multistable flexible mechanism and the first connecting plate, which can facilitate the connection between the first multistable flexible mechanism and the first connecting plate as a whole and the first swing arm, simplify the structure of the rotary mechanism, and facilitate the thin design of the electronic device.

In some embodiments of the first aspect of this application, the second compliant beam unit includes: a second compliant beam, a second rigid member, and a second flexible beam; an end portion of one end of the second compliant beam being fixed with respect to the first swing arm, an end portion of one end of the second flexible beam being fixed with respect to the first connecting plate, and the second rigid member being connected between an end portion of the other end of the second compliant beam and an end portion of the other end of the second flexible beam; where rigidity of the second rigid member is greater than that of the second compliant beam, and the rigidity of the second rigid member is greater than that of the second flexible beam. Therefore, it is conducive to improving rigidity of the entire second compliant beam unit. In this way, it is conducive to improving force required to bend the second compliant beam unit and improving reliability of the locking of the first swing arm by the first multistable flexible mechanism.

In some embodiments of the first aspect of this application, a cross-sectional area of the second rigid member is greater than that of the second compliant beam, and the cross-sectional area of the second rigid member is greater than that of the second flexible beam. Therefore, the rigidity of the second rigid member is greater than the rigidity of the second compliant beam and the rigidity of the second flexible beam.

In some embodiments of the first aspect of this application, both the second compliant beam and the second flexible beam are sheet-shaped. Therefore, the structure is simple.

In some embodiments of the first aspect of this application, the first compliant beam unit includes: a first compliant beam, a first rigid member, and a first flexible beam; an end portion of one end of the first compliant beam being fixed with respect to the first swing arm, an end portion of one end of the first flexible beam being fixed with respect to the first connecting plate, and the first rigid member being connected between an end portion of the other end of the first compliant beam and an end portion of the other end of the first flexible beam; rigidity of the first rigid member being greater than that of the first compliant beam, and the rigidity of the first rigid member being greater than that of the first flexible beam; where a size of the first compliant beam is different from that of the second compliant beam; and/or a size of the first flexible beam is different from that of the second flexible beam; and/or, the first compliant beam is not parallel to the second compliant beam; and/or, the first flexible beam is not parallel to the second flexible beam. In this way, the entire first multistable flexible mechanism has at least three stable states, so that folding, unfolding, and intermediate hovering between the folded state and the unfolded state of the electronic device can be realized.

In some embodiments of the first aspect of this application, the first compliant beam and the second compliant beam have different length dimensions and/or thickness dimensions.

In some embodiments of the first aspect of this application, the length dimension of the first compliant beam ranges from 5 mm to 30 mm.

In some embodiments of the first aspect of this application, the length dimension of the second compliant beam ranges from 5 mm to 30 mm.

In some embodiments of the first aspect of this application, an absolute value of a difference between the length dimension of the first compliant beam and the length dimension of the second compliant beam ranges from 0.5 mm to 10 mm.

In some embodiments of the first aspect of this application, the thickness dimension of the first compliant beam ranges from 0.1 mm to 2 mm.

In some embodiments of the first aspect of this application, the thickness dimension of the second compliant beam ranges from 0.1 mm to 2 mm.

In some embodiments of the first aspect of this application, an absolute value of a difference between the thickness dimension of the first compliant beam and the thickness dimension of the second compliant beam ranges from 0.1 mm to 1 mm.

In some embodiments of the first aspect of this application, the first flexible beam and the second flexible beam have different length dimensions and/or thickness dimensions.

In some embodiments of the first aspect of this application, the length dimension of the first flexible beam ranges from 5 mm to 30 mm.

In some embodiments of the first aspect of this application, the length dimension of the second flexible beam ranges from 5 mm to 30 mm.

In some embodiments of the first aspect of this application, an absolute value of a difference between the length dimension of the first flexible beam and the length dimension of the second flexible beam ranges from 0.5 mm to 10 mm.

In some embodiments of the first aspect of this application, the thickness dimension of the first flexible beam ranges from 0.1 mm to 2 mm.

In some embodiments of the first aspect of this application, the thickness dimension of the second flexible beam ranges from 0.1 mm to 2 mm.

In some embodiments of the first aspect of this application, an absolute value of a difference between the thickness dimension of the first flexible beam and the thickness dimension of the second flexible beam ranges from 0.1 mm to 1 mm.

In some embodiments of the first aspect of this application, the thickness dimension of the first flexible beam is the same as that of the second flexible beam.

In some embodiments of the first aspect of this application, the length dimension of the first flexible beam is the same as that of the first compliant beam.

In some embodiments of the first aspect of this application, the length dimension of the second flexible beam is the same as that of the second compliant beam.

In some embodiments of the first aspect of this application, the first compliant beam is not parallel to the second compliant beam.

In some embodiments of the first aspect of this application, the first flexible beam is not parallel to the second flexible beam.

In some embodiments of the first aspect of this application, a length of the first rigid member is different from that of the second rigid member.

In some embodiments of the first aspect of this application, the first rigid member is not parallel to the second rigid member.

In some embodiments of the first aspect of this application, the second compliant beam unit is in a shape of a sheet with an equal cross-sectional area everywhere. Therefore, the elastic deformation of the second compliant beam unit can be facilitated, and the structure is simple.

In some not claimed embodiments of the first aspect of this application, the first compliant beam unit is in a shape of a sheet with an equal cross-sectional area everywhere; where a length dimension of the second compliant beam unit is different from that of the first compliant beam unit. Therefore, the elastic deformation of the first compliant beam unit can be facilitated, and the structure is simple. In addition, the entire first multistable flexible mechanism has at least three stable states, so that folding, unfolding, and intermediate hovering between the folded state and the unfolded state of the electronic device can be realized.

In some not claimed embodiments of the first aspect of this application, the first multistable flexible mechanism includes: a connecting block, the connecting block being fixed to the first swing arm, the two first compliant beam units of the first compliant bistable unit being symmetrically disposed with respect to a central axis of the connecting block extending in the sliding direction of the first swing arm, and the end portions of the one ends, which are adjacent to each other, of the two first compliant beam units being fixedly connected to the connecting block. In this way, the two first compliant beam units can be spaced apart from the first connecting plate, so as to facilitate the elastic deformation of the two first compliant beam units.

Specifically, although not claimed, the two second compliant beam units of the second compliant bistable unit are symmetrically disposed with respect to a central axis of the connecting block extending in the sliding direction of the first swing arm, and the end portions of the one ends, which are adjacent to each other, of the two second compliant beam units are fixedly connected to the connecting block. In this way, the two second compliant beam units can be spaced apart from the second connecting plate, so as to facilitate the elastic deformation of the two second compliant beam units.

In some not claimed embodiments of the first aspect of this application, the two first compliant beam units of the first compliant bistable unit are respectively located on two sides of the connecting block in the first direction. Therefore, the structure is simple.

In some not claimed embodiments of the first aspect of this application, the two second compliant beam units of the second compliant bistable unit are respectively located on two sides of the connecting block in the first direction. Therefore, the structure is simple.

In some not claimed embodiments of the first aspect of this application, the two first compliant beam units of the first compliant bistable unit are symmetrically disposed with respect to a central axis of the first swing arm extending in the sliding direction of the first swing arm. In this way, the first compliant bistable unit is evenly stressed.

In some not claimed embodiments of the first aspect of this application, the two second compliant beam units of the second compliant bistable unit are symmetrically disposed with respect to the central axis of the first swing arm extending in the sliding direction of the first swing arm. In this way, the second compliant bistable unit is evenly stressed.

In some not claimed embodiments of the first aspect of this application, the first multistable flexible mechanism includes: two fixed portions, the two fixed portions being oppositely disposed in the first direction and respectively fixed to the first connecting plate so as to define a sliding space with the first connecting plate, a portion of the first swing arm and at least a portion of the first compliant bistable unit being both located in the sliding space, the two first compliant beam units of the first compliant bistable unit being in one-to-one correspondence to the two fixed portions, and each of the first compliant beam units being connected with the first connecting plate through the corresponding fixed portion. In this way, the two first compliant beam units can be spaced apart from the first connecting plate, so as to facilitate the elastic deformation of the two first compliant beam units.

Specifically, although not claimed, the two second compliant beam units of the second compliant bistable unit are in one-to-one correspondence to the two fixed portions, and each of the second compliant beam units is connected with the first connecting plate through the corresponding fixed portion. In this way, the two second compliant beam units can be spaced apart from the first connecting plate, so as to facilitate the elastic deformation of the two second compliant beam units.

In some not claimed embodiments of the first aspect of this application, guide chutes are respectively formed on opposite surfaces of the two fixed portions, and two ends of the first swing arm along the first direction respectively fit into the guide chutes. Therefore, the movement of the first swing arm is guided, and reliability of the sliding of the first swing arm is improved.

According to the invention of the first aspect of this application, the foldable screen further includes a second portion, the second portion being connected to one side of the third portion away from the first portion. The electronic device further includes a second housing, and the rotary mechanism further includes: a second swing arm, a second connecting plate, and a second multistable flexible mechanism. The second swing arm is hinged to the other side of the base. A second connecting plate, the second connecting plate is configured to be fixed to the second housing, the second connecting plate and the second swing arm are located on a same side of the base and hinged to the other side of the base, a hinge axis of the second connecting plate with respect to the base and a hinge axis of the second swing arm with respect to the base both extend along the first direction, and the second swing arm slides with respect to the second connecting plate and perpendicular to the first direction when the rotary mechanism switches between the unfolded state and the folded state. The second housing has a supporting surface, and the supporting surface of the second housing is configured to support and fix the second portion. The second multistable flexible mechanism is disposed on the second connecting plate, and the second multistable flexible mechanism has a first stable state and a second stable state. The second multistable flexible mechanism cooperates with the second swing arm to switch between the first stable state and the second stable state. In the folded state of the rotary mechanism, the supporting surface of the second housing is perpendicular to the supporting surface of the base, and the second multistable flexible mechanism is in the second stable state, so as to lock the second swing arm at a second lock position of the second swing arm with respect to the second connecting plate. In the unfolded state of the rotary mechanism, the supporting surface of the base and the supporting surface of the first housing are arranged coplanarly and have the same orientation, and the second multistable flexible mechanism is in the first stable state, so as to lock the second swing arm at a first lock position of the second swing arm with respect to the second connecting plate.

In some not claimed embodiments of the first aspect of this application, a structure of the second multistable flexible mechanism is the same as that of the first multistable flexible mechanism, a cooperation relationship between the second multistable flexible mechanism and the second swing arm is the same as that between the first multistable flexible mechanism and the first swing arm, and a cooperation relationship between the second multistable flexible mechanism and the second connecting plate is the same as that between the first multistable flexible mechanism and the first connecting plate.

In a possible not claimed implementation of this application, the rotary mechanism further includes: a first connector, one end of the first connector being hinged to one side of the base, the first connecting plate being hinged to the other end of a second connector.

In a possible not claimed implementation of this application, the rotary mechanism further includes: a second connector, one end of the second connector being hinged to the other side of the base, the second connecting plate being hinged to the other end of the second connector.

According to a second aspect, wherein the second aspect and any of its options and implementations bewlo are not claimed as such, this disclosure provides a rotary mechanism, the rotary mechanism including a base, a first swing arm, a first connecting plate, and a first multistable flexible mechanism; the first swing arm being hinged to one side of the base; the first connecting plate and the first swing arm being located on a same side of the base, the first connecting plate being hinged to the one side of the base, and a hinge axis of the first connecting plate with respect to the base and a hinge axis of the first swing arm with respect to the base both extending along a first direction; and the first multistable flexible mechanism being disposed on the first connecting plate, and configured to lock the rotary mechanism in the folded state and the unfolded state.

In some embodiments of the second aspect of this application, the first swing arm slides with respect to the first connecting plate and perpendicular to the first direction when the rotary mechanism switches between the unfolded state and the folded state.

In some embodiments of the second aspect of this application, the first multistable flexible mechanism has a first stable state and a second stable state, and the first multistable flexible mechanism cooperates with the first swing arm to switch between the first stable state and the second stable state; in the folded state of the rotary mechanism, the first multistable flexible mechanism is in the second stable state, so as to lock the first swing arm at a second locking position of the first swing arm with respect to the first connecting plate; and in the unfolded state of the rotary mechanism, the first multistable flexible mechanism is in the first stable state, so as to lock the first swing arm at a first locking position of the first swing arm with respect to the first connecting plate.

In some embodiments of the second aspect of this application, the first connecting plate is configured to be fixed to the first housing. Both the base and the first housing have a supporting surface, the supporting surface of the first housing is configured to support and fix a first portion of the foldable screen, the supporting surface of the base is configured to at least support the third portion of the foldable screen in an unfolded state, in the folded state of the rotary mechanism, the supporting surface of the first housing is perpendicular to the supporting surface of the base, and in the unfolded state of the rotary mechanism, the supporting surface of the base and the supporting surface of the first housing are arranged coplanarly and have the same orientation.

In some embodiments of the second aspect of this application, the first multistable flexible mechanism includes: a first compliant bistable unit, the first compliant bistable unit including two first compliant beam units, the two first compliant beam units being arranged in the first direction and symmetrically disposed in the first direction, end portions of one ends, which are adjacent to each other, of the two first compliant beam units being respectively fixed with respect to the first swing arm, and end portions of the other ends, which are away from each other, of the two first compliant beam units being respectively fixed with respect to the first connecting plate; where a length dimension of an extension trajectory of each of the first compliant beam units is greater than a vertical distance between the end portion of the one end of the first compliant beam unit and the end portion of the other end of the first compliant beam unit in the first direction. In this way, the structure is simple.

In some embodiments of the second aspect of this application, the first compliant beam unit includes: a first compliant beam, a first rigid member, and a first flexible beam; an end portion of one end of the first compliant beam being fixed with respect to the first swing arm, an end portion of one end of the first flexible beam being fixed with respect to the first connecting plate, and the first rigid member being connected between an end portion of the other end of the first compliant beam and an end portion of the other end of the first flexible beam; where rigidity of the first rigid member is greater than that of the first compliant beam, and the rigidity of the first rigid member is greater than that of the first flexible beam. Therefore, it is conducive to improving rigidity of the entire first compliant beam unit. In this way, it is conducive to improving force required to bend the first compliant beam unit and improving reliability of the locking of the first swing arm by the first multistable flexible mechanism.

In some embodiments of the second aspect of this application, a cross-sectional area of the first rigid member is greater than that of the first compliant beam, and the cross-sectional area of the first rigid member is greater than that of the first flexible beam. Therefore, the rigidity of the first rigid member is greater than the rigidity of the first compliant beam and the rigidity of the first flexible beam.

In some embodiments of the second aspect of this application, both the first compliant beam and the first flexible beam are sheet-shaped. In this way, elastic deformation of the first compliant beam and the first flexible beam can be facilitated.

In some embodiments of the second aspect of this application, the first compliant beam unit is in a shape of a sheet with an equal cross-sectional area everywhere. Therefore, the structure is simple.

In some embodiments of the second aspect of this application, the rotary mechanism has an intermediate hovering state, the intermediate hovering state being on a switching path of the rotary mechanism switching between the unfolded state and the folded state; and the first multistable flexible mechanism further has a third stable state, the third stable state being on a switching path of the first multistable flexible mechanism switching between the first stable state and the second stable state, and in the intermediate hovering state of the rotary mechanism, the first multistable flexible mechanism is in the third stable state so as to lock the first swing arm at a third locking position of the first swing arm with respect to the first connecting plate, the third locking position being on a switching path of the first swing arm switching between the first locking position and the second locking position. In this way, the entire first multistable flexible mechanism can have at least three stable states, so that folding, unfolding, and intermediate hovering between the folded state and the unfolded state of the electronic device can be realized.

In some embodiments of the second aspect of this application, the first multistable flexible mechanism further includes a second compliant bistable unit, the second compliant bistable unit and the first compliant bistable unit being arranged in a sliding direction of the first swing arm with respect to the first connecting plate; the second compliant bistable unit including two second compliant beam units, the two second compliant beam units being arranged in the first direction, the two second compliant beam units being symmetrically disposed with respect to a symmetry line of the two first compliant beam units, end portions of one ends, which are adjacent to each other, of the two second compliant beam units being respectively fixed with respect to the first swing arm, end portions of the other ends of the two second compliant beam units being respectively fixed with respect to the first connecting plate, and a length dimension of an extension trajectory of each of the second compliant beam units being greater than a vertical distance between the end portion of the one end of the second compliant beam unit and the end portion of the other end of the second compliant beam unit in the first direction; where at least one of a material, a shape, and a size of the second compliant beam unit is different from that of the first compliant beam unit. In this way, the entire first multistable flexible mechanism has at least three stable states, so that folding, unfolding, and intermediate hovering between the folded state and the unfolded state of the electronic device can be realized. Moreover, the entire first multistable flexible mechanism has advantages such as fewer parts, a simple structure, easy assembly, high reliability, no friction and no wear, being conducive to realization of integrated arrangement of the first multistable flexible mechanism and the first connecting plate, and overall flattening of the first multistable flexible mechanism and the first connecting plate, which can facilitate the connection between the first multistable flexible mechanism and the first connecting plate as a whole and the first swing arm, simplify the structure of the rotary mechanism, and facilitate the thin design of the electronic device.

In some embodiments of the second aspect of this application, the second compliant beam unit includes: a second compliant beam, a second rigid member, and a second flexible beam; an end portion of one end of the second compliant beam being fixed with respect to the first swing arm, an end portion of one end of the second flexible beam being fixed with respect to the first connecting plate, and the second rigid member being connected between an end portion of the other end of the second compliant beam and an end portion of the other end of the second flexible beam; where rigidity of the second rigid member is greater than that of the second compliant beam, and the rigidity of the second rigid member is greater than that of the second flexible beam. Therefore, it is conducive to improving rigidity of the entire second compliant beam unit. In this way, it is conducive to improving force required to bend the second compliant beam unit and improving reliability of the locking of the first swing arm by the first multistable flexible mechanism.

In some embodiments of the second aspect of this application, a cross-sectional area of the second rigid member is greater than that of the second compliant beam, and the cross-sectional area of the second rigid member is greater than that of the second flexible beam. Therefore, the rigidity of the second rigid member is greater than the rigidity of the second compliant beam and the rigidity of the second flexible beam.

In some embodiments of the second aspect of this application, both the second compliant beam and the second flexible beam are sheet-shaped. Therefore, the structure is simple.

In some embodiments of the second aspect of this application, the first compliant beam unit includes: a first compliant beam, a first rigid member, and a first flexible beam; an end portion of one end of the first compliant beam being fixed with respect to the first swing arm, an end portion of one end of the first flexible beam being fixed with respect to the first connecting plate, and the first rigid member being connected between an end portion of the other end of the first compliant beam and an end portion at the other end of the first flexible beam; rigidity of the first rigid member being greater than that of the first compliant beam, and the rigidity of the first rigid member being greater than that of the first flexible beam; where a size of the first compliant beam is different from that of the second compliant beam; and/or a size of the first flexible beam is different from that of the second flexible beam; and/or, the first compliant beam is not parallel to the second compliant beam; and/or, the first flexible beam is not parallel to the second flexible beam. In this way, the entire first multistable flexible mechanism has at least three stable states, so that folding, unfolding, and intermediate hovering between the folded state and the unfolded state of the electronic device can be realized.

In some embodiments of the second aspect of this application, the first compliant beam and the second compliant beam have different length dimensions and/or thickness dimensions.

In some embodiments of the second aspect of this application, the length dimension of the first compliant beam ranges from 5 mm to 30 mm.

In some embodiments of the second aspect of this application, the length dimension of the second compliant beam ranges from 5 mm to 30 mm.

In some embodiments of the second aspect of this application, an absolute value of a difference between the length dimension of the first compliant beam and the length dimension of the second compliant beam ranges from 0.5 mm to 10 mm.

In some embodiments of the second aspect of this application, the thickness dimension of the first compliant beam ranges from 0.1 mm to 2 mm.

In some embodiments of the second aspect of this application, the thickness dimension of the second compliant beam ranges from 0.1 mm to 2 mm.

In some embodiments of the second aspect of this application, an absolute value of a difference between the thickness dimension of the first compliant beam and the thickness dimension of the second compliant beam ranges from 0.1 mm to 1 mm.

In some embodiments of the second aspect of this application, the first flexible beam and the second flexible beam have different length dimensions and/or thickness dimensions.

In some embodiments of the second aspect of this application, the length dimension of the first flexible beam ranges from 5 mm to 30 mm.

In some embodiments of the second aspect of this application, the length dimension of the second flexible beam ranges from 5 mm to 30 mm.

In some embodiments of the second aspect of this application, an absolute value of a difference between the length dimension of the first flexible beam and the length dimension of the second flexible beam ranges from 0.5 mm to 10 mm.

In some embodiments of the second aspect of this application, the thickness dimension of the first flexible beam ranges from 0.1 mm to 2 mm.

In some embodiments of the second aspect of this application, the thickness dimension of the second flexible beam ranges from 0.1 mm to 2 mm.

In some embodiments of the second aspect of this application, an absolute value of a difference between the thickness dimension of the first flexible beam and the thickness dimension of the second flexible beam ranges from 0.1 mm to 1 mm.

In some embodiments of the second aspect of this application, the thickness dimension of the first flexible beam is the same as that of the second flexible beam.

In some embodiments of the second aspect of this application, the first compliant beam is not parallel to the second compliant beam.

In some embodiments of the second aspect of this application, the first flexible beam is not parallel to the second flexible beam.

In some embodiments of the second aspect of this application, a length of the first rigid member is different from that of the second rigid member.

In some embodiments of the second aspect of this application, the first rigid member is not parallel to the second rigid member.

In some embodiments of the second aspect of this application, the second compliant beam unit is in a shape of a sheet with an equal cross-sectional area everywhere. Therefore, the elastic deformation of the second compliant beam unit can be facilitated, and the structure is simple.

In some embodiments of the second aspect of this application, the first compliant beam unit is in a shape of a sheet with an equal cross-sectional area everywhere; where a length dimension of the second compliant beam unit is different from that of the first compliant beam unit. Therefore, the elastic deformation of the first compliant beam unit can be facilitated, and the structure is simple. In addition, the entire first multistable flexible mechanism has at least three stable states, so that folding, unfolding, and intermediate hovering between the folded state and the unfolded state of the electronic device can be realized.

In some embodiments of the second aspect of this application, the first multistable flexible mechanism includes: a connecting block, the connecting block being fixed to the first swing arm, the two first compliant beam units of the first compliant bistable unit being symmetrically disposed with respect to a central axis of the connecting block extending in the sliding direction of the first swing arm, and the end portions of the one ends, which are adjacent to each other, of the two first compliant beam units being fixedly connected to the connecting block. In this way, the two first compliant beam units can be spaced apart from the first connecting plate, so as to facilitate the elastic deformation of the two first compliant beam units.

Specifically, the two second compliant beam units of the second compliant bistable unit are symmetrically disposed with respect to a central axis of the connecting block extending in the sliding direction of the first swing arm, and the end portions of the one ends, which are adjacent to each other, of the two second compliant beam units are fixedly connected to the connecting block. In this way, the two second compliant beam units can be spaced apart from the second connecting plate, so as to facilitate the elastic deformation of the two second compliant beam units.

In some embodiments of the second aspect of this application, the two first compliant beam units of the first compliant bistable unit are respectively located on two sides of the connecting block in the first direction. Therefore, the structure is simple.

In some embodiments of the second aspect of this application, the two second compliant beam units of the second compliant bistable unit are respectively located on two sides of the connecting block in the first direction. Therefore, the structure is simple.

In some embodiments of the second aspect of this application, the two first compliant beam units of the first compliant bistable unit are symmetrically disposed with respect to a central axis of the first swing arm extending in the sliding direction of the first swing arm. In this way, the first compliant bistable unit is evenly stressed.

In some embodiments of the second aspect of this application, the two second compliant beam units of the second compliant bistable unit are symmetrically disposed with respect to the central axis of the first swing arm extending in the sliding direction of the first swing arm. In this way, the second compliant bistable unit is evenly stressed.

In some embodiments of the second aspect of this application, the first multistable flexible mechanism includes: two fixed portions, the two fixed portions being oppositely disposed in the first direction and respectively fixed to the first connecting plate so as to define a sliding space with the first connecting plate, a portion of the first swing arm and at least a portion of the first compliant bistable unit being both located in the sliding space, the two first compliant beam units of the first compliant bistable unit being in one-to-one correspondence to the two fixed portions, and each of the first compliant beam units being connected with the first connecting plate through the corresponding fixed portion. In this way, the two first compliant beam units can be spaced apart from the first connecting plate, so as to facilitate the elastic deformation of the two first compliant beam units.

Specifically, the two second compliant beam units of the second compliant bistable unit are in one-to-one correspondence to the two fixed portions, and each of the second compliant beam units is connected with the first connecting plate through the corresponding fixed portion. In this way, the two second compliant beam units can be spaced apart from the first connecting plate, so as to facilitate the elastic deformation of the two second compliant beam units.

In some embodiments of the second aspect of this application, guide chutes are respectively formed on opposite surfaces of the two fixed portions, and two ends of the first swing arm along the first direction respectively fit into the guide chutes. Therefore, the movement of the first swing arm is guided, and reliability of the sliding of the first swing arm is improved.

In some embodiments of the second aspect of this application, the rotary mechanism further includes: a second swing arm, a second connecting plate, and a second multistable flexible mechanism. The second swing arm is hinged to the other side of the base. The second connecting plate and the second swing arm are located on a same side of the base and hinged to the other side of the base, a hinge axis of the second connecting plate with respect to the base and a hinge axis of the second swing arm with respect to the base both extend along the first direction, and the second swing arm slides with respect to the second connecting plate and perpendicular to the first direction when the rotary mechanism switches between the unfolded state and the folded state. The second multistable flexible mechanism is disposed on the second connecting plate, and the second multistable flexible mechanism has a first stable state and a second stable state. The second multistable flexible mechanism cooperates with the second swing arm to switch between the first stable state and the second stable state. In the folded state of the rotary mechanism, the second multistable flexible mechanism is in the second stable state, so as to lock the second swing arm at a second lock position of the second swing arm with respect to the second connecting plate. In the unfolded state of the rotary mechanism, the second multistable flexible mechanism is in the first stable state, so as to lock the second swing arm at a first lock position of the second swing arm with respect to the second connecting plate.

Exemplarily, the second connecting plate is configured to be fixed to the second housing, the second housing has a supporting surface, the supporting surface of the second housing is configured to support a second portion of the foldable screen, in the folded state of the rotary mechanism, the supporting surface of the second housing is perpendicular to the supporting surface of the base, and in the unfolded state of the rotary mechanism, the supporting surface of the base and the supporting surface of the second housing are arranged coplanarly and have the same orientation.

In some embodiments of the second aspect of this application, a structure of the second multistable flexible mechanism is the same as that of the first multistable flexible mechanism, a cooperation relationship between the second multistable flexible mechanism and the second swing arm is the same as that between the first multistable flexible mechanism and the first swing arm, and a cooperation relationship between the second multistable flexible mechanism and the second connecting plate is the same as that between the first multistable flexible mechanism and the first connecting plate.

In a possible implementation of this application, the rotary mechanism further includes: a first connector, one end of the first connector being hinged to one side of the base, the first connecting plate being hinged to the other end of a second connector.

In a possible implementation of this application, the rotary mechanism further includes: a second connector, one end of the second connector being hinged to the other side of the base, the second connecting plate being hinged to the other end of the second connector.

For the technical effects brought by any one of the design manners in the second aspect, reference may be made to the technical effects brought by different design manners in the first aspect, and details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1a is a schematic diagram of a partial structure of a first rotary mechanism not according to invention;
FIG. 1b is a partially enlarged view circled at H according to the rotary mechanism shown in FIG. 1a which does not belong to the invention;
FIG. 2 is a three-dimensional view of a first electronic device according to an embodiment of this application;
FIG. 3 is a three-dimensional view of the first electronic device in an unfolded state according to an embodiment of this application;
FIG. 4 is a three-dimensional view of the first electronic device in a folded state according to an embodiment of this application;
FIG. 5 is a three-dimensional view of a support apparatus in the electronic device shown in FIG. 2 to FIG. 4;
FIG. 6 is a schematic exploded view of the support apparatus in the electronic device shown in FIG. 5;
FIG. 7 is a partial side view of the support apparatus shown in FIG. 5 to FIG. 6;
FIG. 8 is a three-dimensional view of the rotary mechanism shown in FIG. 5 to FIG. 6, in which the rotary mechanism is in the unfolded state;
FIG. 9 is a partially enlarged view of the rotary mechanism shown in FIG. 8, in which the rotary mechanism is in the unfolded state;
FIG. 10 is a partially enlarged view of the rotary mechanism shown in FIG. 8, in which the rotary mechanism is in the folded state;
FIG. 11 is a schematic diagram of cooperation among a first connecting plate, a first swing arm, and a first multistable flexible mechanism shown in FIG. 8;
FIG. 12 is a schematic exploded view of the first connecting plate, the first swing arm, and the first multistable flexible mechanism shown in FIG. 8;
FIG. 13 is a partial schematic diagram of the first multistable flexible mechanism shown in FIG. 8;
FIG. 14 is a graph of a curve between force on the first multistable flexible mechanism shown in FIG. 8 to FIG. 13 and moving displacement of a connecting block;
FIG. 15 is a schematic diagram of the first multistable flexible mechanism shown in FIG. 8 to FIG. 13 in a first stable state;
FIG. 16 is a schematic diagram of the first multistable flexible mechanism shown in FIG. 8 to FIG. 13 in a third stable state;
FIG. 17 is a schematic diagram of the first multistable flexible mechanism shown in FIG. 8 to FIG. 13 in a second stable state;
FIG. 18 is a schematic exploded view of a partial structure of the rotary mechanism shown in FIG. 8, in which the rotary mechanism is in the unfolded state;
FIG. 19 is a schematic diagram of a partial structure of a first door panel in the rotary mechanism shown in FIG. 8;
FIG. 20 is an enlarged view of a part circled at F according to the rotary mechanism shown in FIG. 9;
FIG. 21 is a schematic diagram of cooperation among a first swing arm, a second swing arm, and two third gears in the rotary mechanism shown in FIG. 8;
FIG. 22 is a schematic diagram of a second first multistable flexible mechanism according to an embodiment of this application;
FIG. 23 is a schematic diagram of a third first multistable flexible mechanism according to an embodiment of this application;
FIG. 24 is a schematic diagram of a fourth first multistable flexible mechanism according to an embodiment of this application;
FIG. 25 is a schematic diagram of a fifth first multistable flexible mechanism according to an embodiment of this application;
FIG. 26 is a schematic diagram of a sixth first multistable flexible mechanism according to an embodiment of this application;
FIG. 27 is a schematic diagram of cooperation of a seventh first multistable flexible mechanism with a first connecting plate and a first swing arm according to an embodiment of this application;
FIG. 28 is a graph of a curve between force on the first multistable flexible mechanism shown in FIG. 27 and the moving displacement of the connecting block;
FIG. 29 is a schematic diagram of the first multistable flexible mechanism shown in FIG. 27 in the first stable state; and
FIG. 30 is a schematic diagram of the first multistable flexible mechanism shown in FIG. 27 in the second stable state.

### DESCRIPTION OF EMBODIMENTS

In the embodiments of this application, terms "first", "second", and "third" are used merely for the purpose of description, and shall not be construed as indicating or implying relative importance or implying a quantity of indicated technical features. Therefore, a feature limited by "first", "second", or "third" may explicitly or implicitly include one or more of the features.

In the descriptions of the embodiments of this application, it should be noted that, unless otherwise explicitly specified or defined, the term "mounting", "joining", and "connection" should be understood in a broad sense. For example, the "connection" may be a detachable connection or a non-detachable connection; may be a direct electrical connection, or an indirect connection through an intermediary. "Fixed connection" means that components are connected to each other and a relative position relationship remains unchanged after the connection. "Rotatable connection" means that components are connected to each other and can be rotated with respect to each other after the connection. "Slidable connection" means that components are connected to each other and can be slid with respect to each other after the connection.

In the descriptions of the embodiments of this application, terms "include", "comprise", and any variants thereof are intended to cover a non-exclusive inclusion. Therefore, a process, method, item, or apparatus that includes a series of elements not only includes such elements, but also includes other elements not specified expressly, or may include inherent elements of the process, method, item, or apparatus. Without more limitations, elements defined by the sentence "including one ..." does not exclude that there are still other same elements in the process, method, item, or apparatus which includes the element.

This application provides an electronic device. The electronic device is a foldable electronic device. The foldable electronic device may include various electronic devices that have a foldable screen and can change unfolded states or folded states of the foldable screen and the electronic devices. Under different usage requirements, the foldable electronic device may be unfolded to the unfolded state, or folded to the folded state, or in an intermediate hovering state between the unfolded state and the folded state. That is, the intermediate hovering state is on a switching path of the electronic device switching between the folded state and the unfolded state. Therefore, the foldable electronic device has at least two states, i.e., an unfolded state and a folded state. In some cases, a third state may be further included, that is, an intermediate hovering state between the unfolded state and the folded state. It may be understood that the intermediate hovering state is not merely a unique state, but may be any one or more states on the switching path of the electronic device between the unfolded state and the folded state.

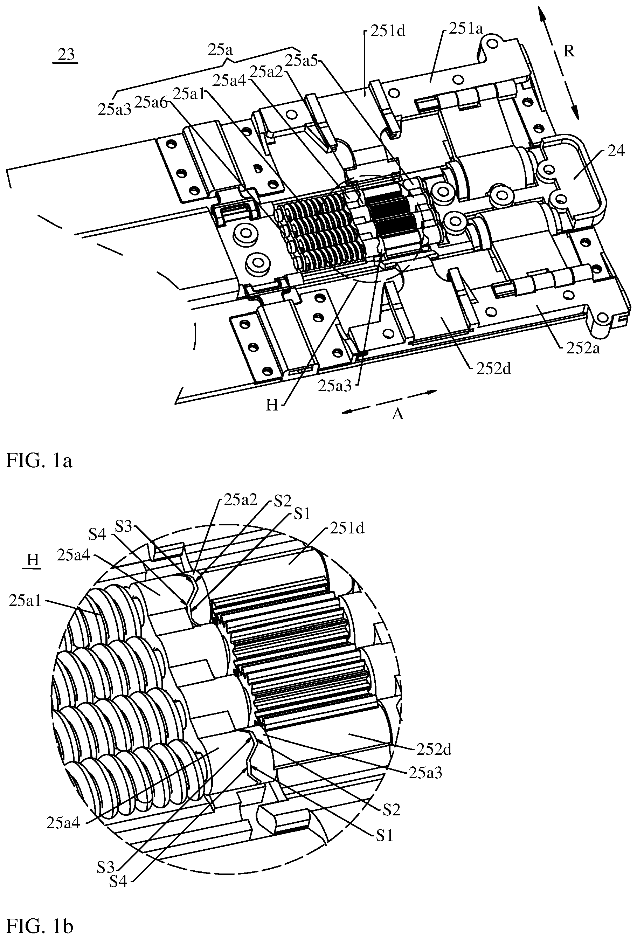

The foldable electronic device includes a foldable screen, a first housing, a second housing, and a rotary mechanism. The first housing, the second housing, and the rotary mechanism are configured to fix the foldable screen. Moreover, the rotary mechanism is configured to realize relative unfolding and folding of the first housing and the second housing, so as to realize folding and unfolding of the electronic device. Specifically, referring to FIG. 1a, FIG. 1a is a schematic diagram of a partial structure of a first rotary mechanism 23 according to an embodiment of this application. In this embodiment, the rotary mechanism 23 may include: a base 24, a first swing arm 251d, a second swing arm 252d, a first connecting plate 251a, a second connecting plate 252a, and a locking member 25a. Specifically, the first connecting plate 251a and the second connecting plate 252a are respectively hinged to two opposite sides of the base 24. Moreover, the first connecting plate 251a is fixed to the first housing, and the second connecting plate 252a is fixed to the second housing. In this way, the first connecting plate 251a can be unfolded and folded with the first housing and with respect to the base 24, and the second connecting plate 252a can be unfolded and folded with the second housing and with respect to the base 24.

As shown in FIG. 1a, the first connecting plate 251a and the second connecting plate 252a extend with respect to a hinge axis of the base 24 and along a first direction A.

In the unfolded state, an angle between the first housing and the base is approximately 180°, and an angle between the second housing and the base is approximately 180°. In the folded state, the angle between the first housing and the base is approximately 90°, the angle between the second housing and the base is approximately 90°, and the first housing is opposite the second housing.

To enable the electronic device 100 to be maintained in a current state when currently in the unfolded state or the folded state, the first swing arm 251d is hinged to the base 24 and the first swing arm 251d is in sliding fit with the first connecting plate 251a (in a direction indicated by a dotted arrow R in FIG. 1a), and the second swing arm 252d is hinged to the base 24 and the second swing arm 252d is in sliding fit with the second connecting plate 252a (in the direction indicated by the dotted arrow R in FIG. 1a). Moreover, the locking member 25a provides damping force for the hinging of the first swing arm 251d with respect to the base 24. In this way, when a user does not exert force on the first housing, the first housing and the base can be maintained at a current angle. In other words, the first housing no longer rotates with respect to the base. The locking member 25a provides damping force for the hinging of the second swing arm 252d with respect to the base 24. In this way, when the user does not exert force on the second housing, the second housing and the base can be maintained at a current angle. In other words, the second housing no longer rotates with respect to the base.

Specifically, the locking member 25a is fixed to the base 24. Moreover, the locking member 25a may include a spring member 25a1, a first cam 25a2 disposed on the first swing arm 251d, a second cam 25a3 disposed on the second swing arm 252d, a concave wheel 25a4, a circlip 25a5, and a baffle 25a6.

The circlip 25a5 and the baffle 25a6 are disposed on the base 24 and fixed with respect to the base 24. The circlip 25a5 and the baffle 25a6 are spaced apart in the first direction A.

The first cam 25a2 corresponds to a concave wheel 25a4 and a spring member 25a1. The second cam 25a3 corresponds to a concave wheel 25a4 and a spring member 25a1. An end portion of the first swing arm 251d away from the first cam 25a2 and an end portion of the second swing arm 252d away from the second concave wheel 25a2 both abut against and limit the 25a6.

Specifically, referring to FIG. 1b together, FIG. 1b is a partially enlarged view circled at H according to the rotary mechanism 23 shown in FIG. 1a. A surface of the first cam 25a2 on the first swing arm 251d and facing the corresponding concave wheel 25a4 has a convex surface S1 and a concave surface S2 recessed with respect to the convex surface S1. A surface of the second cam 25a3 on the second swing arm 252d and facing the corresponding concave wheel 25a4 has a convex surface S1 and a concave surface S2 recessed with respect to the convex surface S1. The convex surface S1 and the concave surface S2 on each cam are alternately arranged in a circumferential direction of the cam. A surface of each concave wheel 25a4 facing the corresponding cam also has a concave surface S4 and a convex surface S3 alternately arranged along a circumferential direction of the concave wheel 25a4. The spring member 25a1 is pre-stressed between the baffle 25a6 and the corresponding concave wheel 25a4. In the folded state and the unfolded state, the convex surface S3 on the concave wheel 25a4 fits different concave surface S2 on the cam, and similarly, the convex surface S1 on the cam fits different concave surface S4 on the concave wheel 25a4.

When the user drives the first housing and the second housing to cause the first swing arm 251d to rotate with respect to the base 24 and the second swing arm 252d to rotate with respect to the base 24, the convex surface S3 on the concave wheel 25a4 gradually switches from fitting with one concave surface S2 on the cam to fitting with another concave surface S2. In this process, pressure on the spring member 251a1 gradually increases first and then is gradually released. At the same time, the concave wheel 25a4 produces axial displacement with a change in the pressure on the spring member 251a1. In this way, the rotary mechanism 23 can be facilitated to switch between the folded state and the unfolded state. When there is no external force exerted by the user, damping force can be provided for the rotation of the first swing arm 251d with respect to the base 24 and the rotation of the second swing arm 252d with respect to the base 24 by using elastic force of the spring member 25a1, thereby facilitating the rotary mechanism 23 to be maintained in the current folded state or unfolded state.

Therefore, the locking member 25a has more parts, and the locking member 25a having more parts causes an assembly process to be complicated and cumbersome, which is not conducive to operations of workers. In addition, the more parts also increase manufacturing costs. Moreover, during the operation of the locking member 25a, there is friction in the fitting between the concave wheel and the cam. After long-term use, the concave wheel and the cam are severely worn, which results in friction attenuation, affects damping feel, and may shorten the service life of the locking member 25a. In addition, the entire locking member 25a is disposed on the base 24. The locking member 25a has more parts, and a mounting space at the base 24 is limited. The disposing of the locking member 25a causes an overall thickness of the rotary mechanism 23 corresponding to the base 24 to be thicker, which is not conducive to design of overall thinning of the rotary mechanism 23 corresponding to the base 24, and is not conducive to the thinning of the electronic device 100.

In order to address the above technical problems, an improved idea of this application is that the locking member 25a, which provides damping force for the rotation of the first swing arm 251d with respect to the base 24, is disposed on the first connecting plate 251a. Moreover, the locking member 25a is replaced with the first multistable flexible mechanism. That is, in the rotary mechanism according to this embodiment of this application, the first multistable flexible mechanism is disposed. Moreover, the first multistable flexible mechanism is disposed on the first connecting plate 251a, and the first multistable flexible mechanism cooperates with the first swing arm 251d, so as to lock the first swing arm 251d at a second locking position of the first swing arm 251d with respect to the first connecting plate 251a in the folded state of the rotary mechanism 23. The first swing arm 251d is locked at a first locking position of the first swing arm 251d with respect to the first connecting plate 251a in the unfolded state of the rotary mechanism 23. In this way, the space of the rotary mechanism 23 corresponding to the base 24 can be saved while the folded state and the unfolded state of the electronic device are locked by using the first multistable flexible mechanism, so as to properly optimize a structural layout of the entire rotary mechanism 23. Moreover, compared with the locking member 25a, the first multistable flexible mechanism has a simple structure, which is conducive to optimizing a structural layout of the rotary mechanism 23 corresponding to the base 24 and conducive to realizing thin design of the rotary mechanism 23 corresponding to the base 24, thereby facilitating the thin design of the electronic device. In addition, modular design of the first multistable flexible mechanism and the first connecting plate 251a can also be realized, which facilitates assembly of the first multistable flexible mechanism and the first connecting plate 251a as a whole with other components of the rotary mechanism 23. Moreover, motion and force transmission of the first multistable flexible mechanism are realized by deformation of some or all members thereof, without friction and wear, which is conducive to prolonging the service life.

Based on the above improved idea, technical solutions related to the embodiments of this application will be introduced below.

Prior to the introduction to the embodiments of this application, some technical terms that will be mentioned in the embodiments of this application are introduced first. Specifically,

A flexible mechanism (also known as a compliant mechanism) refers to a mechanism that realizes transfer and conversion of force, motion or energy by flexible deformation of member elements. Specifically, the flexible mechanism refers to a mechanical structure. Part or all of the mechanical structure is formed by a flexible member. When the above flexible member deforms, the mechanical structure may cause displacement of a structure connected to the flexible member due to the deformation of the flexible member.

A multistable flexible mechanism refers to a mechanism in which a flexible member of the flexible mechanism has two or more stable states with minimum local potential energy (that is, has at least a first stable state and a second stable state) during deformation, and the mechanism may pass through an unstable state with maximum local potential energy when switching between two adjacent stable states. When there are two stable states (i.e., the first stable state and the second stable state) in the multistable flexible mechanism, the multistable flexible mechanism is a bistable flexible mechanism. The bistable flexible mechanism refers to a mechanism having two stable states with minimum local potential energy during the deformation of the flexible member of the flexible mechanism. The first stable state refers to an initial state of the multistable flexible mechanism. In the state, the flexible member of the multistable flexible mechanism does not deform. When the flexible member of the multistable flexible mechanism deforms under external force exerted by the user, deformation energy may be continuously stored. When the deformation of the multistable flexible mechanism reaches a certain degree, the unstable state with maximum local potential energy may be reached. When the unstable state is passed, the flexible member may automatically deform to next stable state. It may be understood that, when the user exerts no external force on the flexible member of the multistable flexible mechanism, in the stable state, the multistable flexible mechanism can be maintained in the current state by using its own structural configuration and bending deformation of the flexible member.

A central axis refers to a center line of an axisymmetric structure, and all axisymmetric structures may overlap when folded through this line. The central axis represents an axis of a rotating body and a symmetry line of a non-rotating body.

The foldable electronic device provided in this application includes, but is not limited to, a mobile phone, a tablet personal computer (tablet personal computer), a laptop computer (laptop computer), a personal digital assistant (personal digital assistant, PDA), a personal computer, a notebook computer, an onboard device, a wearable device, a walkman, a radio, a TV, a speaker, and the like. The wearable device includes, but is not limited to, a smart bracelet, a smartwatch, a smart head-mounted display, a smart glass, and the like.

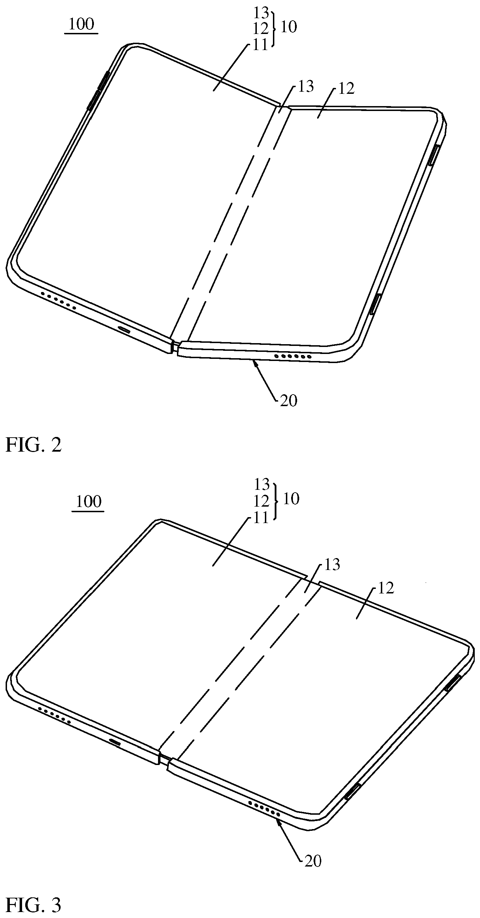

Referring to FIG. 2, FIG. 2 is a three-dimensional view of a first electronic device 100 according to an embodiment of this application. In this embodiment, the electronic device 100 includes a foldable screen 10 and a support apparatus 20. It may be understood that FIG. 2 only schematically shows some components included in the electronic device 100. Actual shapes, actual sizes, actual positions, and actual structures of these components are not limited in FIG. 2.

The foldable screen 10 can be configured to display information and provide an interaction interface for a user. In embodiments of this application, the foldable screen 10 may be, but is not limited to, an organic light-emitting diode (organic light-emitting diode, OLED) display screen, an active-matrix organic light-emitting diode (active-matrix organic light-emitting diode, AMOLED) display screen, a mini light-emitting diode (mini organic light-emitting diode) display screen, a micro light-emitting diode (micro organic light-emitting diode) display screen, a micro organic light-emitting diode (micro organic light-emitting diode) display screen, a quantum dot light-emitting diode (quantum dot light emitting diodes, QLED) display screen, and/or the like.

The foldable screen 10 can switch between an unfolded state and a folded state. In the folded state, the foldable screen 10 may be folded into a first portion 11 and a second portion 12. The foldable screen 10 further includes a third portion 13 located between the first portion 11 and the second portion 12. At least the third portion 13 of the foldable screen 10 is made of a flexible material. The first portion 11 and the second portion 12 may be made of a flexible material or a rigid material, or partially made of a rigid material and partially made of a flexible material, which is not specifically limited herein.

Referring to FIG. 3, FIG. 3 is a three-dimensional view of the first electronic device 100 in an unfolded state according to an embodiment of this application. In a case that the foldable screen 10 is in the unfolded state, the first portion 11, the second portion 12, and the third portion 13 are arranged coplanarly and have a same orientation. In this state, a large-screen display can be implemented, which may provide a user with richer information and bring better user experience.

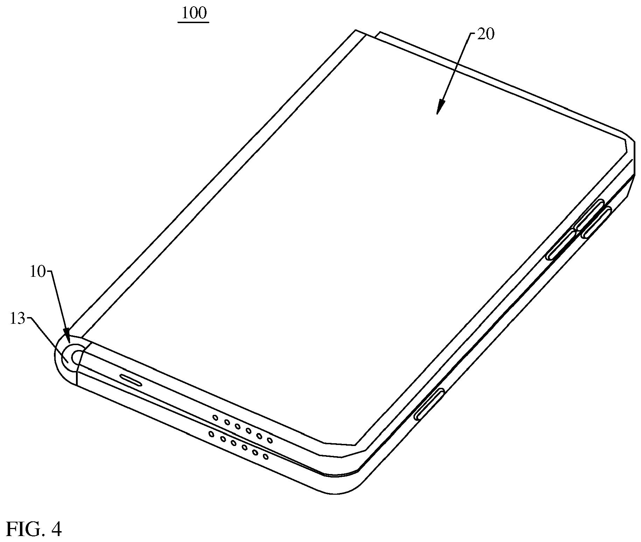

Referring to FIG. 4, FIG. 4 is a three-dimensional view of the first electronic device 100 in a folded state according to an embodiment of this application. When the foldable screen 10 is in the folded state, the third portion 13 is in a bent state, and the first portion 11 (not shown in FIG. 4) is opposite the second portion 12 (not shown in FIG. 4). In this state, the foldable screen 10 is invisible to the user. The support apparatus 20 is located outside the foldable screen 10 to protect the foldable screen 10 from being scratched by a hard object. In addition, in this state, a volume of the foldable electronic device 100 can be reduced to facilitate storage of the foldable electronic device 100.

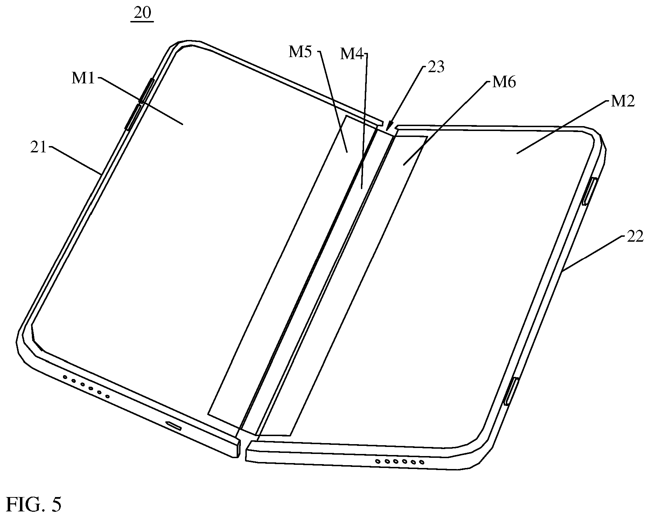

The support apparatus 20 is configured to support the foldable screen 10 and allow the foldable screen 10 to switch between the unfolded state and the folded state. Referring to FIG. 5, FIG. 5 is a three-dimensional view of the support apparatus 20 in the electronic device 100 shown in FIG. 2 to FIG. 4. In this embodiment, the support apparatus 20 includes a first housing 21, a second housing 22, and a rotary mechanism 23. It may be understood that FIG. 5 only schematically shows some components included in the support apparatus 20. Actual shapes, sizes, positions, and configurations of these components are not limited in FIG. 5.

The support apparatus 20 has a supporting surface. The supporting surface may be configured to support the foldable screen 10. Through the support of the supporting surface, in the unfolded state, the foldable screen 10 can be flat, and a display surface of the foldable screen 10 is flat.

The first housing 21 is configured to fix and support the first portion 11 of the foldable screen 10 in FIG. 2. Specifically, the first housing 21 has a supporting surface M1. The first housing 21 fixes and supports the first portion 11 of the foldable screen 10 in FIG. 2 by using the supporting surface M1. Exemplarily, a connection relationship between the supporting surface M1 and the first portion 11 includes, but is not limited to, gluing.

The second housing 22 is configured to fix and support the second portion 12 of the foldable screen 10 in FIG. 2. Specifically, the second housing 22 has a supporting surface M2. The second housing 22 fixes and supports the second portion 12 of the foldable screen 10 in FIG. 2 by using the supporting surface M2. Exemplarily, a connection relationship between the supporting surface M2 and the second portion 12 includes, but is not limited to, gluing.

The first housing 21 and/or the second housing 22 may respectively form a mounting space for mounting electronic components such as a circuit board, a battery, a receiver, a speaker, and a camera of the electronic device 100. The circuit board may integrate electronic components such as a main controller, a storage unit, an antenna module, and a power management module of the electronic device 100. The battery may supply power to the electronic components such as the foldable screen 10, the circuit board, the receiver, the speaker, and the camera. The first housing 21 and the second housing 22 may have equal thicknesses, or may have thicknesses that are not equal, which is not limited in this embodiment of this application.

In some embodiments, the mounting space may be disposed in both the first housing 21 and the second housing 22, to distribute the electronic components of the above electronic device 100 in the housings on the two sides. In some other embodiments, the mounting space may be disposed in only the first housing 21, to centrally distribute the electronic components of the above electronic device 100 in the first housing 21. Alternatively, the mounting space may be disposed in both the first housing 21 and the second housing 22, but most of the components of the above electronic device 100 are disposed in the second housing 22, and a small part is disposed in the first housing 21, so that the first housing 21 is lighter, to better facilitate folding and unfolding.

The first housing 21 may be a structural whole, or may be assembled by a plurality of portions. Similarly, the second housing 22 may be a structural whole or may be assembled by a plurality of portions.

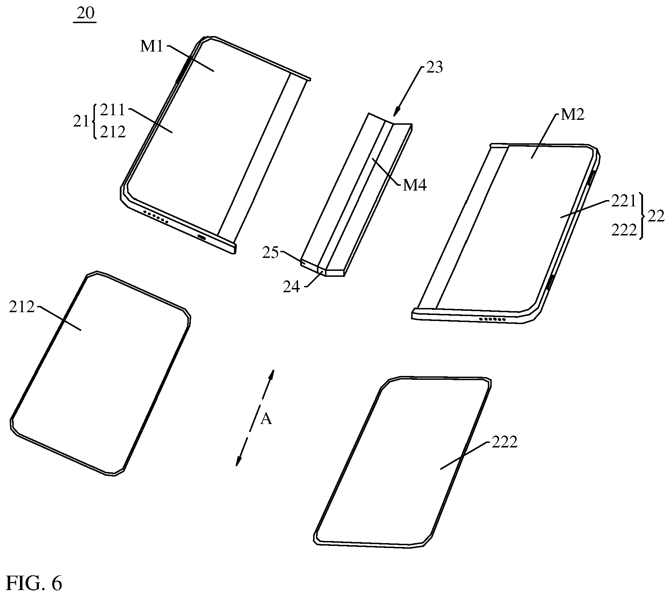

In some embodiments, referring to FIG. 6, FIG. 6 is a schematic exploded view of the support apparatus 20 in the electronic device 100 shown in FIG. 5. The first housing 21 includes a first intermediate frame 211 and a first back cover 212. The supporting surface M1 is located on the first intermediate frame 211. The first back cover 212 is fixed to one side of the first intermediate frame 211 away from the supporting surface M1. A surface of the first back cover 212 away from the supporting surface M1 of the first intermediate frame 211 is an exterior surface. The mounting space on the first housing 21 is defined by the first intermediate frame 211 and the first back cover 212.

The second housing 22 includes a second intermediate frame 221 and a second back cover 222. The supporting surface M2 is located on the second intermediate frame 221. The second back cover 222 is fixed to one side of the second intermediate frame 221 away from the supporting surface M2. A surface of the second back cover 222 away from the supporting surface M2 of the second intermediate frame 221 is an exterior surface. The mounting space on the second housing 22 is defined by the second intermediate frame 221 and the second back cover 222.

The rotary mechanism 23 is configured to support the third portion 13 of the foldable screen 10. Moreover, the rotary mechanism 23 is connected between the first housing 21 and the second housing 22. The first housing 21 and the second housing 22 are rotatably connected by using the rotary mechanism 23, so as to realize relative rotation between the first housing 21 and the second housing 22. Specifically, as shown in FIG. 6, a rotation axis of rotation of the first housing 21 with respect to the second housing 22 extends along the first direction A. In some embodiments, the rotary mechanism 23 is connected between the first intermediate frame 211 of the first housing 21 and the second intermediate frame 221 of the second housing 22. In other embodiments, the rotary mechanism 23 may be alternatively connected between the first back cover 212 of the first housing 21 and the second back cover 222 of the second housing 22.

The rotary mechanism 23 may be configured to switch between an unfolded state and a folded state. The rotary mechanism 23 switches between the unfolded state and the folded state, so as to allow the entire electronic device 100 to switch between the unfolded state and the folded state.

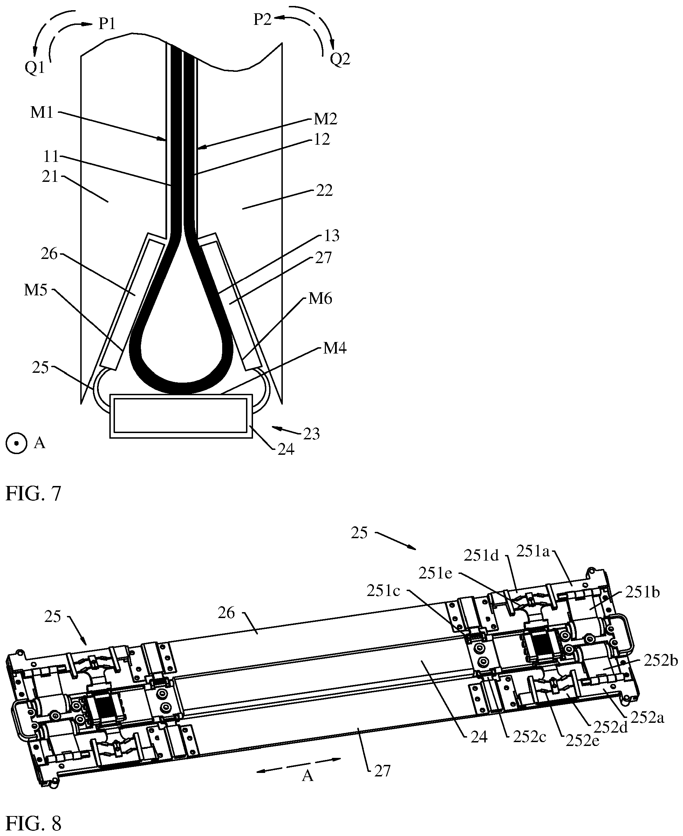

Specifically, referring to FIG. 7, FIG. 7 is a partial side view of the support apparatus 20 shown in FIG. 5 to FIG. 6. During the switching from the unfolded state to the folded state, the rotary mechanism 23 can drive the first housing 21 and the second housing 22 to rotate toward each other. In this process, a rotation direction of the first housing 21 (a direction as indicated by an arrow P1 in FIG. 7) is opposite a rotation direction of the second housing 22 (a direction as indicated by an arrow P2 in FIG. 7). When the rotary mechanism 23 switches to the folded state, the first housing 21 and the second housing 22 face each other, and the supporting surface M1 of the first housing 21 and the supporting surface M2 of the second housing 22 face each other. In this case, the supporting surface M1 of the first housing 21 and the supporting surface M2 of the second housing 22 may be at a slight angle or parallel to each other to enable the two housings to be completely closed, thereby realizing the folding of the first housing 21 and the second housing 22, so that the first portion 11 and the second portion 12 of the foldable screen 10 can be oppositely arranged to switch the electronic device 100 to the folded state as a whole.

In addition, during the switching from the folded state to the unfolded state, the rotary mechanism 23 can drive the first housing 21 and the second housing 22 to rotate away from each other. In this process, a rotation direction of the first housing 21 (a direction as indicated by an arrow Q1 in FIG. 7) is opposite a rotation direction of the second housing 22 (a direction as indicated by an arrow Q2 in FIG. 7). When the rotary mechanism 23 switches to the unfolded state, the supporting surface M1 of the first housing 21 and the supporting surface M2 of the second housing 22 are coplanar and have a same orientation. In this way, the first housing 21 and the second housing 22 can be unfolded, so that the first portion 11 and the second portion 12 of the foldable screen 10 are coplanar and have a same orientation, and the electronic device 100 is switched to the unfolded state as a whole.

"The supporting surface M1 of the first housing 21 and the supporting surface M2 of the second housing 22 are coplanar and have a same orientation" means that the supporting surface M1 of the first housing 21 and the supporting surface M2 of the second housing 22 may be at 180°. Certainly, a tolerance of a specific angle is also allowed, for example, a tolerance within ±10°. In other words, an angle between the supporting surface M1 of the first housing 21 and the supporting surface M2 of the second housing 22 ranges from 170° to 190°.

Still referring to FIG. 6 and FIG. 7, the rotary mechanism 23 includes: a base 24, a first door panel 26, a second door panel 27, and a rotary assembly 25. FIG. 7 only schematically shows some components included in the rotary mechanism 23. Actual shapes, sizes, positions, and structures of these components are not limited in FIG. 7. The first direction A shown in FIG. 7 is a direction perpendicular to paper.

The base 24 has a supporting surface M4. In the unfolded state, the supporting surface M4 on the base 24 is suitable for supporting the third portion 13 of the foldable screen 10, so as to ensure flatness of the foldable screen 10 in the unfolded state. In the folded state, the third portion 13 of the foldable screen 10 is in a bent state, and a certain gap may be maintained between the third portion 13 and the base 24, so as to prevent damage caused by extrusion with the base 24 due to elastic deformation of the foldable screen 10 in the case of falling. Certainly, it may be understood that, in other examples, in the folded state, the supporting surface M4 of the base 24 may alternatively support the third portion 13. For example, a middle region of the supporting surface M4 of the base 24 is connected to the third portion 13 by gluing so as to fit and support the third portion 13.

Specifically, in the folded state of the electronic device 100, the supporting surface M4 of the base 24 is perpendicular to the supporting surface M1 of the first housing 21 (however, in an actual scenario, a tolerance of a specific angle is also allowed, and an angle between the supporting surface M1 of the first housing 21 and the supporting surface M4 of the base 24 ranges, for example, from 80° to 100°). The supporting surface M4 of the base 24 is perpendicular to the supporting surface M2 of the second housing 22 (however, in an actual scenario, a tolerance of a specific angle is also allowed, and an angle between the supporting surface M2 of the second housing 22 and the supporting surface M4 of the base 24 ranges, for example, from 80° to 100°).

The base 24 extends in the first direction A. In other words, a length direction of the base 24 is the first direction A. In this way, the length direction of the base 24 is consistent with that of the electronic device 100 in the folded state, which is conducive to increasing a length of the supporting surface M4 on the base 24, thereby increasing an area of the supporting surface M4. So, the supporting surface M4 can reliably support the third portion 13 of the foldable screen 10. Certainly, it may be understood that, in another example, alternatively, a width direction of the base 24 may be the first direction A.

To enable the foldable screen 10 to be folded into a water drop shape when the electronic device 100 is in the folded state, an inward folding angle (R angle) of the third portion 13 is increased to prolong a service life of the foldable screen 10. The first door panel 26 and the second door panel are arranged on two sides of the supporting surface M4 of the base 24 in the width direction. The first door panel 26 and the second door panel 27 are respectively formed in a flat-panel shape.

Specifically, the first door panel 26 has a supporting surface M5, and the second door panel 27 has a supporting surface M6. Both the supporting surface M5 and the supporting surface M6 fit the third portion 13 of the foldable screen 10 to support the third portion 13 of the foldable screen 10. The supporting surface M5 is located between the supporting surface M4 and the supporting surface M1 (see FIG. 5), and the supporting surface M6 is located between the supporting surface M4 and the supporting surface M2 (see FIG. 5). Moreover, the rotary assembly 25 can allow the first door panel 26 to rotate with respect to the base 24 and the second door panel 27 to rotate also with respect to the base 24.

During the switching of the electronic device 100 from the unfolded state to the folded state, as shown in FIG. 7, the first door panel 26 rotates with respect to the base 24 along the rotation direction P1, and the second door panel 27 rotates with respect to the base 24 along the direction P2 opposite the direction P1. That is, end portions of the first door panel 26 and the second door panel 27 away from the base 24 are close to each other, and end portions of the first door panel 26 and the second door panel 27 near the base 24 are far away from each other, so that the foldable screen 10 is bent between the first door panel 26 and the second door panel 27. Therefore, the first door panel 26, the base 24, and the second door panel 27 form a nearly triangular accommodating cavity, and the third portion 13 of the foldable screen 10 is accommodated in the triangular accommodating cavity and may be in a shape of a water drop. In this way, the inward folding angle (R angle) of the third portion 13 can be increased, and the service life of the foldable screen 10 can be prolonged.

Conversely, when the electronic device 100 switches from the folded state to the unfolded state, the first door panel 26 rotates with respect to the base 24 in a direction opposite the rotation direction P1 (the direction as indicated by Q1 in FIG. 7), and the second door panel 27 rotates with respect to the base 24 in a direction opposite the direction P2 (the direction as indicated by Q2 in FIG. 7). That is, the first door panel 26 and the second door panel 27 deviate from each other until the supporting surface M5 of the first door panel 26, the supporting surface M4 of the base 24, and the supporting surface M6 of the second door panel 27 are coplanar and have a same orientation, so that the foldable screen 10 is unfolded and the foldable screen 10 is supported.

It may be understood that "the supporting surface M5 of the first door panel 26, the supporting surface M4 of the base 24, and the supporting surface M6 of the second door panel 27 are coplanar" means that an angle between any two of the supporting surface M5 of the first door panel 26, the supporting surface M4 of the base 24, and the supporting surface M6 of the second door panel 27 is 180°. Certainly, in an actual scenario, a certain error is also allowed. For example, the angle between any two ranges from 80° to 100°.

It may be understood that, in some other examples, alternatively, the rotary mechanism 23 may not be provided with the first door panel 26 and the second door panel 27, but the supporting surface M5 is provided on the first connecting plate 251a described hereinafter, and the supporting surface M6 is provided on the second connecting plate 252a.

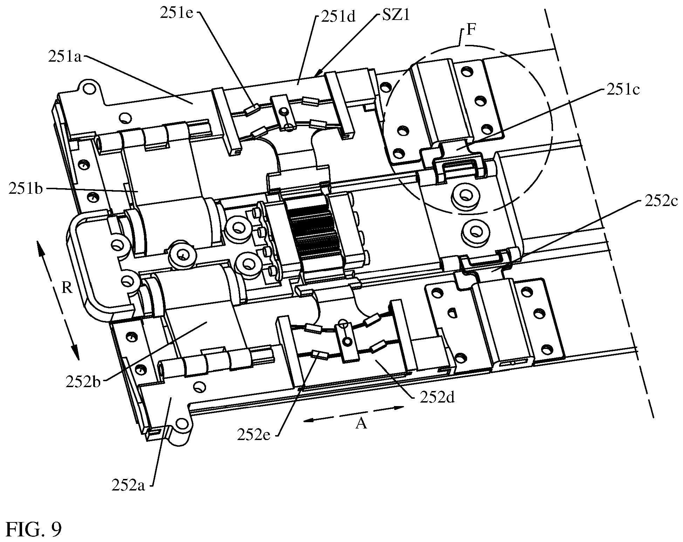

To realize folding and unfolding of the electronic device 100, referring to FIG. 8 and FIG. 9, FIG. 8 is a three-dimensional view of the rotary mechanism 23 shown in FIG. 5 to FIG. 6, in which the rotary mechanism 23 is in the unfolded state. FIG. 9 is a partially enlarged view of the rotary mechanism 23 shown in FIG. 8, in which the rotary mechanism 23 is in the unfolded state. Specifically, the rotary assembly 25 includes the first connecting plate 251a, a first connector 251b, the first swing arm 251d, a first hinge 251c, a first multistable flexible mechanism 251e, the second connecting plate 252a, a second connector 252b, the second swing arm 252d, a second hinge 252c, and a second multistable flexible mechanism 252e. It may be understood that FIG. 8 and FIG. 9 only schematically show some components included in the rotary assembly 25. Actual shapes, sizes, positions, and structures of these components are not limited in FIG. 8 and FIG. 9. There may be one or more rotary assemblies 25. In the specific examples shown in FIG. 8 and FIG. 9, there are two rotary assemblies 25, but this does not constitute a special limitation on this application.

The first connecting plate 251a is fixed to the first housing 21. Specifically, the first connecting plate 251a is fixed to the first intermediate frame 211. Exemplarily, the first connecting plate 251a may be fixed to the first intermediate frame 211 in a manner such as threaded connection, riveting, or bonding, or may be integrally formed with the first intermediate frame 211.

The first connecting plate 251a is hinged to one side of the base 24 (e.g., one side in the width direction). Specifically, the first connecting plate 251a is hinged to the one side of the base 24 by using the first connector 251b. In other words, one end of the first connector 251b is hinged to the one side of the base 24. The first connector 251b extends along the first direction A with respect to a hinge axis of the base 24. The first connecting plate 251a is hinged to the other end of the first connector 251b, and the first connecting plate 251a extends along the first direction A with respect to a hinge axis of the first connector 251b.

The first swing arm 251d and the first connecting plate 251a are located on a same side of the base 24. Moreover, the first swing arm 251d is hinged to the one side of the base 24. The first swing arm 251d extends along the first direction A with respect to the hinge axis of the base 24. The first swing arm 251d and the first connecting plate 251a are spaced apart in the first direction A. During the switching of the rotary mechanism 23 between the unfolded state and the folded state, the first swing arm 251d may slide with respect to the first connecting plate 251a in a direction perpendicular to the first direction A (the direction indicated by the dotted arrow R in FIG. 9).

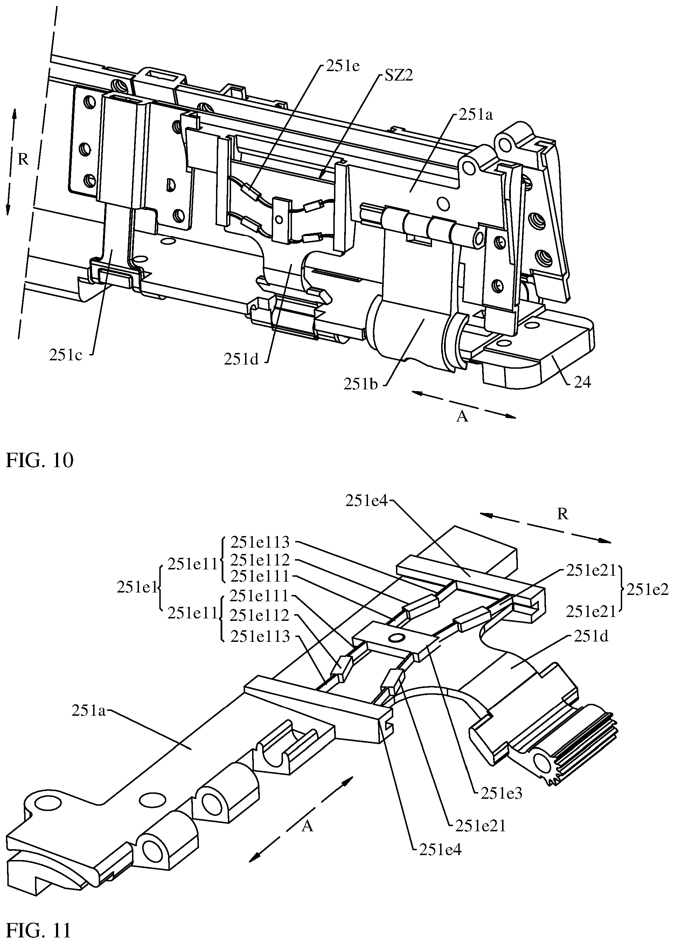

Referring to FIG. 9 and FIG. 10, FIG. 10 is a partially enlarged view of the rotary mechanism 23 shown in FIG. 8, in which the rotary mechanism 23 is in the folded state. The first swing arm 251d, when sliding with respect to the first connecting plate 251a in the direction perpendicular to the first direction A, may slide to a first locking position of the first swing arm 251d with respect to the first connecting plate 251a (SZ1 as marked in FIG. 9 is a location of the first swing arm 251d) and a second locking position of the first swing arm 251d with respect to the first connecting plate 251a (SZ2 as marked in FIG. 10 is a location of the first swing arm 251d). When the first swing arm 251d slides to the first locking position with respect to the first connecting plate 251a, the rotary mechanism 23 is in the unfolded state. When the first swing arm 251d slides to the second locking position with respect to the first connecting plate 251a, the rotary mechanism 23 is in the folded state.

The first multistable flexible mechanism 251e is disposed on the first connecting plate 251a. Moreover, the first multistable flexible mechanism 251e has a first stable state and a second stable state. The first multistable flexible mechanism 251e cooperates with the first swing arm 251d. Moreover, the first multistable flexible mechanism 251e switches between the first stable state and the second stable state as the first swing arm 251d slides with respect to the first connecting plate 251a.

As shown in FIG. 9, in the unfolded state of the rotary mechanism 23, the first multistable flexible mechanism 251e is in the first stable state, so as to lock the first swing arm 251d at the first locking position (the position as indicated by SZ1 in FIG. 9). Alternatively, as shown in FIG. 10, in the folded state of the rotary mechanism 23, the first multistable flexible mechanism 251e is in the second stable state, so as to lock the first swing arm 251d at the second locking position (the position as indicated by SZ2 in FIG. 10). In other words, in the unfolded state of the rotary mechanism 23, the first multistable flexible mechanism 251e can restrict the sliding of the first swing arm 251d with respect to the first connecting plate 251a, so as to lock the first swing arm 251d at the first locking position. In the folded state of the rotary mechanism 23, the first multistable flexible mechanism 251e can also restrict the sliding of the first swing arm 251d with respect to the first connecting plate 251a, so as to lock the first swing arm 251d at the second locking position. A degree of deformation of a flexible member in the first multistable flexible mechanism 251e in the second stable state is greater than that of the flexible member in the first multistable flexible mechanism 251e in the first stable state.

In this way, when the first multistable flexible mechanism 251e locks the first swing arm 251d at the first locking position and no external force is exerted by the user on the first housing 21, the first swing arm 251d no longer slides along the first connecting plate 251a, so that the rotary mechanism 23 can be maintained in the current unfolded state. When the first multistable flexible mechanism 251e locks the first swing arm 251d at the second locking position and no external force is exerted by the user on the first housing 21, the first swing arm 251d no longer slides along the first connecting plate 251a, so that the rotary mechanism 23 can be maintained in the current folded state.

Specifically, due to the hinging of the first connector 251b to the base 24, the hinging of the first connecting plate 251a to the first connector 251b, the hinging of the first swing arm 251d to the base 24, and the sliding connection between the first connecting plate 251a and the first swing arm 251d, the first connector 251b, the first swing arm 251d, the first connecting plate 251a, and the base 24 can constitute a slider-crank mechanism. When the force exerted by the user on the first housing 21 causes the first connecting plate 251a to rotate with respect to the base 24, under mechanical linkage among the base 24, the first connecting plate 251a, the first connector 251b, the first swing arm 251d, and the like, relative sliding between the first swing arm 251d and the first connecting plate 251a may be synchronously driven, so as to realize the folding or unfolding of the electronic device 100. When the first multistable flexible mechanism 251e disposed on the first connecting plate 251a locks the first swing arm 251d at the first locking position or the second locking position to restrict the sliding of the first swing arm 251d with respect to the first connecting plate 251a, the rotation of the first connecting plate 251a with respect to the base 24 is also restricted under the mechanical linkage among the base 24, the first connecting plate 251a, the first connector 251b, the first swing arm 251d, and the like. Therefore, at the first locking position and the second locking position, the first connecting plate 251a no longer rotates with respect to the base 24, so that a purpose of maintaining the electronic device 100 in the current unfolded state or folded state is realized.

In the rotary mechanism 23 according to the embodiments of this application, the first multistable flexible mechanism 251e is disposed. Moreover, the first multistable flexible mechanism 251e is disposed on the first connecting plate 251a, and the first multistable flexible mechanism 251e cooperates with the first swing arm 251d, so as to lock the first swing arm 251d at the second locking position of the first swing arm 251d with respect to the first connecting plate 251a in the folded state of the rotary mechanism 23. The first swing arm 251d is locked at the first locking position of the first swing arm 251d with respect to the first connecting plate 251a in the unfolded state of the rotary mechanism 23. In this way, the space of the rotary mechanism 23 corresponding to the base 24 can be saved while the folded state and the unfolded state of the electronic device 100 are locked by using the first multistable flexible mechanism 251e, so as to properly optimize a structural layout of the entire rotary mechanism 23, thereby being conducive to optimizing a structural layout of the rotary mechanism 23 corresponding to the base 24. Moreover, compared with the locking member 25a in FIG. 1a, the first multistable flexible mechanism 251e has a simple structure and is conducive to realizing thin design of the rotary mechanism 23 corresponding to the base 24, thereby facilitating thin design of the electronic device 100. In addition, modular design of the first multistable flexible mechanism 251e and the first connecting plate 251a can also be realized, which facilitates assembly of the first multistable flexible mechanism 251e and the first connecting plate 251a as a whole with other components of the rotary mechanism 23. Moreover, motion and force transmission of the first multistable flexible mechanism 251e are realized by deformation of some or all members thereof, without friction and wear, which is conducive to prolonging the service life.

In some examples, the first swing arm 251d, when sliding with respect to the first connecting plate 251a in the direction perpendicular to the first direction A, may slide to a third locking position of the first swing arm 251d with respect to the first connecting plate 251a. The third locking position is between the first locking position and the second locking position. That is, the third locking position is on a switching path of the first swing arm 251d switching between the first locking position and the second locking position. The first multistable flexible mechanism 251e further has a third stable state, and the third stable state is on a switching path of the first multistable flexible mechanism 251e switching between the first stable state and the second stable state. The first multistable flexible mechanism 251e cooperates with the first swing arm 251d, and the first multistable flexible mechanism 251e switches among the first stable state, the second stable state, and the third stable state as the first swing arm 251d slides with respect to the first connecting plate 251a. When the rotary mechanism 23 is in an intermediate hovering state, the first multistable flexible mechanism 251e is in the third stable state, so as to lock the first swing arm 251d at the third locking position. In this way, when no external force is exerted by the user, the first swing arm 251d no longer slides along the first connecting plate 251a, so that the rotary mechanism 23 can be maintained in the current intermediate hovering state.

It may be understood that "the third locking position is on a switching path of the first swing arm 251d switching between the first locking position and the second locking position" refers to a motion trajectory of the first swing arm 251d moving between the first locking position and the second locking position with respect to the first connecting plate 251a. Similar descriptions in the following may be used for same understanding.

It may be understood that the intermediate hovering state is on a switching path of the rotary mechanism 23 between the folded state and the unfolded state. In other words, the rotary mechanism 23 may pass through the intermediate hovering state during the switching between the folded state and the unfolded state. In the intermediate hovering state, an angle between the supporting surface M1 of the first housing 21 and the supporting surface M4 of the base 24 is greater than 90° and less than 180°. For example, in the intermediate hovering state, the angle between the supporting surface M1 of the first housing 21 and the supporting surface M4 of the base 24 may be any value greater than 125° and less than 165°. In this way, different usage requirements of the user can be met.

Moreover, there may be one or more intermediate hovering states. When there are a plurality of intermediate hovering states, in different intermediate hovering states, the angle between the supporting surface M1 of the first housing 21 and the supporting surface M4 of the base 24 varies. Certainly, it may be understood that, in another example, alternatively, the electronic device 100 may not have the intermediate hovering state. In this way, there is no need to use the first multistable flexible mechanism 251e to lock the first swing arm 251d at the third locking position.

A structure of the electronic device 100 is described in detail below with two examples regarding whether the electronic device 100 has an intermediate hovering state.

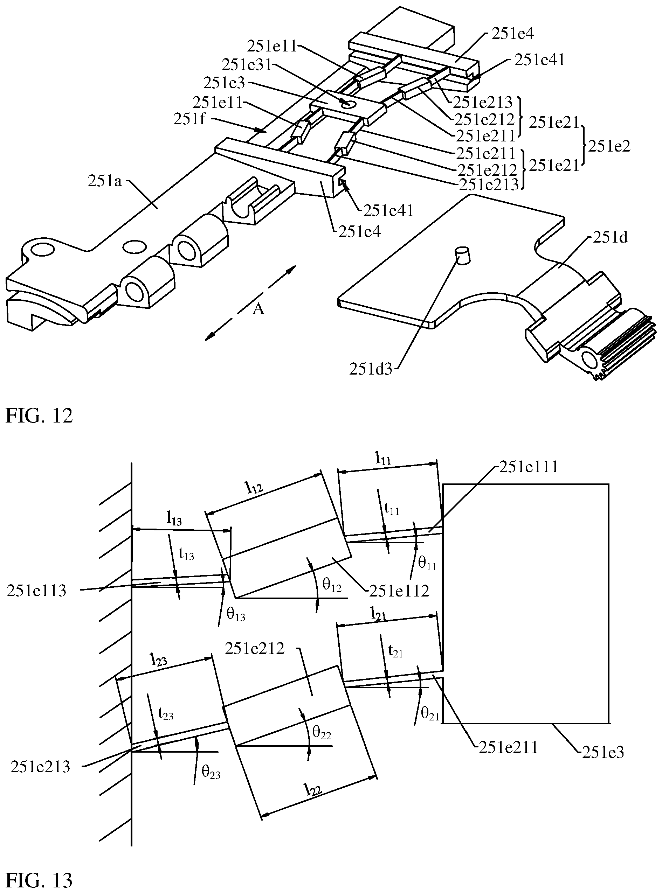

Referring to FIG. 11 and FIG. 12, FIG. 11 is a schematic diagram of cooperation among the first connecting plate 251a, the first swing arm 251d, and the first multistable flexible mechanism 251e shown in FIG. 8. FIG. 12 is a schematic exploded view of the first connecting plate 251a, the first swing arm 251d, and the first multistable flexible mechanism 251e shown in FIG. 8. The first multistable flexible mechanism 251e includes: a connecting block 251e3, a fixed portion 251e4, a first compliant bistable unit 251e1, and a second compliant bistable unit 251e2.

The connecting block 251e3 is fixed to the first swing arm 251d. The connecting block 251e3 and the first swing arm 251d are connected by, but not limited to, clamping, welding, gluing, or screwing. Exemplarily, referring to FIG. 11 and FIG. 12, a positioning hole 251e31 is formed in the connecting block 251e3, a positioning column 251d3 is formed on the first swing arm 251d, and the positioning column 251d3 fits into the positioning hole 251e31. In another example, the positioning hole may be disposed in the first swing arm 251d, and the positioning column may be disposed on the connecting block 251e3. In another example, alternatively, the connecting block 251e3 and the first swing arm 251d may be integrally formed.

Specifically, the connecting block 251e3 may be located in a middle region of the first swing arm 251d in the first direction A. In this way, when the connecting block 251e3 moves with the first swing arm 251d, it is beneficial to ensure uniformity of the force on the connecting block 251e3, so as to balance force on two first compliant beam units connected to the connecting block 251e3 as described below. Exemplarily, the connecting block 251e3 is symmetrically disposed with respect to a central axis of the first swing arm 251d extending in a sliding direction of the first swing arm 251d.

The connecting block 251e3 is made of, but not limited to, metal or plastic. The connecting block 251e3 may be formed in a shape of a cube, a cylinder, or a triangular prism.

There are two fixed portions 251e4. The two fixed portions 251e4 are oppositely disposed in the first direction A and respectively fixed to the first connecting plate 251a. Moreover, the two fixed portions 251e4 may define a sliding space 251f with the first connecting plate 251a. A portion of the first swing arm 251d, the first compliant bistable unit 251e1, and the second compliant bistable unit 251e2 may be accommodated in the sliding space 251f.

Exemplarily, the fixed portions 251e4 may protrude from a surface of the first connecting plate 251a, and a portion of the first connecting plate 251a between the two fixed portions 251e4 is recessed so that the first connecting plate 251a and the two fixed portions 251e4 define the sliding space 251f with a larger depth dimension to accommodate the first swing arm 251d, the first compliant bistable unit 251e1, and the second compliant bistable unit 251e2. In another example, the surface of the first connecting plate 251a is recessed to form the sliding space 251f, and sidewalls on two sides of the sliding space 251f along the first direction A respectively form the two fixed portions 251e4. In yet another example, the fixed portions 251e4 may protrude from the surface of the first connecting plate 251a, so as to define the sliding space 251f with the surface of the first connecting plate 251a.

The fixed portions 251e4 and the first connecting plate 251a are connected by, but not limited to, gluing, welding, clamping, or screwing. In another example, alternatively, the fixed portions 251e4 and the first connecting plate 251a may be integrally formed. In this way, it is beneficial to improve strength of the connection between the fixed portions 251e4 and the first connecting plate 251a and improve reliability of the connection between the fixed portions 251e4 and the first connecting plate 251a.

Guide chutes 251e41 are respectively formed on opposite surfaces of the two fixed portions 251e4. Two ends of the first swing arm 251d along the first direction A fit into the guide chutes 251e41 respectively. The guide chutes 251e41 are disposed, and the sliding of the first swing arm 251d with respect to the first connecting plate 251a can be guided by using the guide chutes 251e41, which improves reliability of operation of the first swing arm 251d and can also realize cooperation between the first swing arm 251d and the first connecting plate 251a.

Still referring to FIG. 11 and FIG. 12, the first compliant bistable unit 251e1 includes two first compliant beam units 251e11. The two first compliant beam units 251e11 are arranged in the first direction A.

Specifically, the two first compliant beam units 251e11 are respectively located on two sides of the connecting block 251e3 in the first direction A, and the two first compliant beam units 251e11 are symmetrically disposed with respect to the connecting block 251e3. Since the connecting block 251e3 is symmetrically disposed with respect to the central axis of the first swing arm 251d extending in the sliding direction of the first swing arm 251d, the two first compliant beam units 251e11 can be symmetrically disposed with respect to the central axis of the first swing arm 251d extending in the sliding direction of the first swing arm 251d. Therefore, the force on the two first compliant beam units 251e11 can be balanced, and the two can synchronously deform.

It may be understood that, in another example, alternatively, the two first compliant beam units 251e11 may not be located on the two sides of the connecting block 251e3 in the first direction A, provided that the two first compliant beam units 251e11 are symmetrically disposed with respect to a central axis of the connecting block 251e3 extending in the sliding direction of the first swing arm 251d.

End portions of one ends, which are adjacent to each other, of the two first compliant beam units 251e11 are respectively connected to the connecting block 251e3. Specifically, each of the end portions of the one ends, which are adjacent to each other, of the first compliant beam units 251e11 and the connecting block 251e3 are connected by, but not limited to, welding, gluing, or clamping. Alternatively, the two first compliant beam units 251e11 and the connecting block 251e3 are integrally formed. In this way, it is beneficial to improve strength of the connection between the connecting block 251e3 and each of the first compliant beam units 251e11 and ensure reliability of the connection.

It may be understood that, in another example, alternatively, the first multistable flexible mechanism 251e may not include the connecting block 251e3, and the end portions of the one ends, which are adjacent to each other, of the two first compliant beam units 251e11 are directly connected to the first swing arm 251d, provided that the end portions of the one ends, which are adjacent to each other, of the two first compliant beam units 251e11 are relatively fixed to the first swing arm 251d.

Herein, "the end portions of the one ends, which are adjacent to each other, of the two first compliant beam units 251e11 are relatively fixed to the first swing arm 251d" means that the end portions of the one ends, which are adjacent to each other, of the two first compliant beam units 251e11 and the first swing arm 251d cannot move with respect to each other, and a relative position relationship between the two remains unchanged. Similar descriptions in the following may be used for same understanding.

The two first compliant beam units 251e11 are in one-to-one correspondence to the two fixed portions 251e4. Each of the first compliant beam units 251e11 is located between the corresponding fixed portion 251e4 and the connecting block 251e3. An end portion at the other end of each of the first compliant beam units 251e11 is connected to a surface of the corresponding fixed portion 251e4 facing the other fixed portion 251e4, so as to be connected to the first connecting plate 251a through the corresponding fixed portion 251e4. Each of the first compliant beam units 251e11 and the corresponding fixed portion 251e4 are connected by, but not limited to, welding, gluing, or clamping. Alternatively, the first compliant beam unit 251e11 and the corresponding fixed portion 251e4 may be integrally formed. In this way, it is beneficial to improve strength of the connection between the fixed portion 251e4 and the corresponding first compliant beam unit 251e11 and ensure reliability of the connection.

In this embodiment of this application, each of the first compliant beam units 251e11 is located between the corresponding fixed portion 251e4 and the connecting block 251e3, which helps to space the first compliant beam unit 251e11 apart from the first connecting plate 251a, thereby facilitating elastic deformation of the first compliant beam unit 251e11.

It may be understood that, in another example, alternatively, the first multistable flexible mechanism 251e may not include the fixed portion 251e4, and end portions of the other ends, which are away from each other, of the two first compliant beam units 251e11 are directly connected to the first connecting plate 251a, provided that the end portions of the other ends, which are away from each other, of the two first compliant beam units 251e11 are relatively fixed to the first connecting plate 251a.

Specifically, a length dimension of an extension trajectory of the first compliant beam unit 251e11 from the end portion of the one end of the first compliant beam unit 251e11 and the end portion of the other end of the first compliant beam unit 251e11 is greater than a vertical distance between the end portion of the one end of the first compliant beam unit 251e11 and the end portion of the other end of the first compliant beam unit 251e11 in the first direction A. Therefore, when external force is applied to the first compliant beam unit 251e11, the deformation of the first compliant beam unit 251e11 can be facilitated.

Still referring to FIG. 11 and FIG. 12, the first compliant beam unit 251e11 includes: a first compliant beam 251e111, a first rigid member 251e112, and a first flexible beam 251e113.

An end portion of one end of the first compliant beam 251e111 is connected to the connecting block 251e3. The first compliant beam 251e111 is in a shape of a sheet. That is, the first compliant beam 251e111 is a sheet-shaped elastic piece structure. The first compliant beam 251e111 is disposed in the shape of the sheet, which can facilitate bending elastic deformation of the first compliant beam 251e111.

An end portion of one end of the first flexible beam 251e113 is connected to the corresponding fixed portion 251e4. The first flexible beam 251e113 is also in a shape of a sheet. That is, the first flexible beam 251e113 is a sheet-shaped elastic piece structure. The first flexible beam 251e113 is disposed in the shape of the sheet, which can facilitate bending elastic deformation of the first flexible beam 251e113.

The first rigid member 251e112 is connected between an end portion of the other end of the first compliant beam 251e111 and an end portion of the other end of the first flexible beam 251e113. Rigidity of the first rigid member 251e112 is greater than rigidity of the first compliant beam 251e111 and rigidity of the first flexible beam 251e113. The rigidity of the first rigid member 251e112 is greater than the rigidity of the first flexible beam 251e113 and greater than the rigidity of the first compliant beam 251e111, so as to help to improve rigidity of the entire first compliant beam unit 251e11. In this way, it is conducive to improving force required to bend the first compliant beam unit 251e11 and improving reliability of the locking of the first swing arm 251d by the first multistable flexible mechanism 251e. Certainly, this application is not limited thereto. In another example, alternatively, the rigidity of the first rigid member 251e112 may be equal to the rigidity of the first compliant beam 251e111 and the rigidity of the first flexible beam 251e113.

Further, a cross-sectional area of the first rigid member 251e112 is greater than a cross-sectional area of the first compliant beam 251e111 and greater than a cross-sectional area of the first flexible beam 251e113, so that the rigidity of the first rigid member 251e112 is greater than the rigidity of the first compliant beam 251e111 and greater than the rigidity of the first flexible beam 251e113. Exemplarily, the first rigid member 251e112, the first compliant beam 251e111, and the first flexible beam 251e113 are made of a same material, and the cross-sectional area of the first rigid member 251e112 is greater than the cross-sectional area of the first compliant beam 251e111 and greater than the cross-sectional area of the first flexible beam 251e113. Certainly, this application is not limited thereto. In another example, alternatively, the first rigid member 251e112 may be made of a material with relatively high rigidity, and the first compliant beam 251e111 and the first flexible beam 251e113 may be made of a material with relatively low rigidity. In this case, the cross-sectional area of the first rigid member 251e112 may be greater than, equal to, or less than the cross-sectional area of the first compliant beam 251e111 and the cross-sectional area of the first flexible beam 251e113, provided that the rigidity of the first rigid member 251e112 is greater than the rigidity of the first compliant beam 251e111 and greater than the rigidity of the first flexible beam 251e113.

Exemplarily, the first rigid member 251e112 is in a shape of a cube, a cylinder, or a triangular prism. The first rigid member 251e112 is made of, but not limited to, metal, plastic, or a combination thereof.

The first rigid member 251e112 and the first compliant beam 251e111 may be connected by gluing, clamping, welding, or screwing. Alternatively, the first rigid member 251e112 and the first compliant beam 251e111 may be integrally formed. In this way, it is beneficial to simplify a processing technology of the first compliant beam unit 251e11 and reduce manufacturing costs of the first compliant beam unit 251e11.

The first rigid member 251e112 and the first flexible beam 251e113 may be connected by gluing, clamping, welding, or screwing. Alternatively, the first rigid member 251e112 and the first flexible beam 251e113 may be integrally formed. In this way, it is beneficial to simplify the processing technology of the first compliant beam unit 251e11 and reduce the manufacturing costs of the first compliant beam unit 251e11. Specifically, the first rigid member 251e112, the first compliant beam 251e111, and the first flexible beam 251e113 are integrally formed. In this way, it is beneficial to simplify the processing technology of the first compliant beam unit 251e11 and reduce the manufacturing costs of the first compliant beam unit 251e11.

Still referring to FIG. 11 and FIG. 12, the second compliant bistable unit 251e2 and the first compliant bistable unit 251e1 are arranged in a sliding direction of the first swing arm 251d with respect to the first connecting plate 251a.

Specifically, the second compliant bistable unit 251e2 includes two second compliant beam units 251e21. The two second compliant beam units 251e21 are arranged in the first direction A, and the two second compliant beam units 251e21 are symmetrically disposed with respect to a symmetry line of the two first compliant beam units 251e11, so as to realize reliability of operation of the first multistable flexible mechanism 251e. Specifically, the two second compliant beam units 251e21 are respectively located on two sides of the connecting block 251e3 in the first direction A, and the two second compliant beam units 251e21 are symmetrically disposed with respect to the connecting block 251e3. Since the connecting block 251e3 is in the middle region of the first swing arm 251d in the first direction, the two second compliant beam units 251e21 can be symmetrically disposed with respect to the central axis of the first swing arm 251d extending in the sliding direction of the first swing arm 251d. Therefore, the force on the two second compliant beam units 251e21 can be balanced, and the two can synchronously deform.

It may be understood that, in another example, alternatively, the two second compliant beam units 251e21 may not be located on the two sides of the connecting block 251e3 in the first direction A, provided that the two second compliant beam units 251e21 are symmetrically disposed with respect to the symmetry line of the two first compliant beam units 251e11.

End portions of one ends, which are adjacent to each other, of the two second compliant beam units 251e21 are respectively connected to the connecting block 251e3. Specifically, each of the end portions of the one ends, which are adjacent to each other, of the second compliant beam units 251e21 and the connecting block 251e3 are connected by, but not limited to, welding, gluing, or clamping. Alternatively, the two second compliant beam units 251e21 and the connecting block 251e3 are integrally formed. In this way, it is beneficial to improve strength of the connection between the connecting block 251e3 and each of the second compliant beam units 251e21 and ensure reliability of the connection.

It may be understood that, in another example, alternatively, the first multistable flexible mechanism 251e may not include the connecting block 251e3, and the end portions of the one ends, which are adjacent to each other, of the two second compliant beam units 251e21 are directly connected to the first swing arm 251d, provided that the end portions of the one ends, which are adjacent to each other, of the two second compliant beam units 251e21 are relatively fixed to the first swing arm 251d.

The two second compliant beam units 251e21 are in one-to-one correspondence to the two fixed portions 251e4. Each of the second compliant beam units 251e21 is located between the corresponding fixed portion 251e4 and the connecting block 251e3. An end portion of the other end of each of the second compliant beam units 251e21 is connected to the corresponding fixed portion 251e4, so as to be connected to the first connecting plate 251a through the corresponding fixed portion 251e4. Each of the second compliant beam units 251e21 and the corresponding fixed portion 251e4 are connected by, but not limited to, welding, gluing, or clamping. Alternatively, the second compliant beam unit 251e21 and the corresponding fixed portion 251e4 may be integrally formed. In this way, it is beneficial to improve strength of the connection between the fixed portion 251e4 and the corresponding second compliant beam unit 251e21 and ensure reliability of the connection.

In this embodiment of this application, each of the second compliant beam units 251e21 is located between the corresponding fixed portion 251e4 and the connecting block 251e3, which helps to space the second compliant beam unit 251e21 apart from the first connecting plate 251a, thereby facilitating elastic deformation of the second compliant beam unit 251e21.

It may be understood that, in another example, when the first multistable flexible mechanism 251e does not include the fixed portion 251e4, end portions at the other ends, which are away from each other, of the two second compliant beam units 251e21 are directly connected to the first connecting plate 251a, provided that the end portions at the other ends, which are away from each other, of the two second compliant beam units 251e21 are relatively fixed to the first connecting plate 251a.

Specifically, a length dimension of an extension trajectory of the second compliant beam unit 251e21 from the end portion of the one end of the second compliant beam unit 251e21 and the end portion of the other end of the second compliant beam unit 251e21 is greater than a vertical distance between the end portion of one end of the second compliant beam unit 251e21 and the end portion of the other end of the second compliant beam unit 251e21 in the first direction A. Therefore, when external force is applied to the second compliant beam unit 251e21, the deformation of the second compliant beam unit 251e21 can be facilitated.

Still referring to FIG. 11 and FIG. 12, the second compliant beam unit 251e21 includes: a second compliant beam 251e211, a second rigid member 251e212, and a second flexible beam 251e213.

An end portion of one end of the second compliant beam 251e211 is connected to the connecting block 251e3. The second compliant beam 251e211 is in a shape of a sheet. That is, the second compliant beam 251e211 is a sheet-shaped elastic piece structure. The second compliant beam 251e211 is disposed in the shape of the sheet, which can facilitate bending elastic deformation of the second compliant beam 251e211.

An end portion of one end of the second flexible beam 251e213 is connected to the corresponding fixed portion 251e4. The second flexible beam 251e213 is in a shape of a sheet. That is, the second flexible beam 251e213 is a sheet-shaped elastic piece structure. The second flexible beam 251e213 is disposed in the shape of the sheet, which can facilitate bending elastic deformation of the second flexible beam 251e213.

The second rigid member 251e212 is connected between an end portion of the other end of the second compliant beam 251e211 and an end portion of the other end of the second flexible beam 251e213. Rigidity of the second rigid member 251e212 is greater than rigidity of the second compliant beam 251e211 and rigidity of the second flexible beam 251e213. The rigidity of the second rigid member 251e212 is greater than the rigidity of the second flexible beam 251e213 and greater than the rigidity of the second compliant beam 251e211, so as to help to improve rigidity of the entire second compliant beam unit 251e21. In this way, it is conducive to improving force required to bend the second compliant beam unit 251e21 and improving reliability of the locking of the first swing arm 251d by the first multistable flexible mechanism 251e. Certainly, this application is not limited thereto. In another example, alternatively, the rigidity of the second rigid member 251e212 may be equal to the rigidity of the second compliant beam 251e211 and the rigidity of the second flexible beam 251e213.

Further, a cross-sectional area of the second rigid member 251e212 is greater than a cross-sectional area of the second compliant beam 251e211 and greater than a cross-sectional area of the second flexible beam 251e213, so that the rigidity of the second rigid member 251e212 is greater than the rigidity of the second compliant beam 251e211 and greater than the rigidity of the second flexible beam 251e213. Exemplarily, the second rigid member 251e212, the second compliant beam 251e211, and the second flexible beam 251e213 are made of a same material, and the cross-sectional area of the second rigid member 251e212 is greater than the cross-sectional area of the second compliant beam 251e211 and greater than the cross-sectional area of the second flexible beam 251e213. Certainly, this application is not limited thereto. In another example, alternatively, the second rigid member 251e212 may be made of a material with relatively high rigidity, and the second compliant beam 251e211 and the second flexible beam 251e213 may be made of a material with relatively low rigidity. In this case, the cross-sectional area of the second rigid member 251e212 may be greater than, equal to, or less than the cross-sectional area of the second compliant beam 251e211 and the cross-sectional area of the second flexible beam 251e213, provided that the rigidity of the second rigid member 251e212 is greater than the rigidity of the second compliant beam 251e211 and greater than the rigidity of the second flexible beam 251e213.

Exemplarily, the second rigid member 251e212 is in a shape of a cube, a cylinder, or a triangular prism. The second rigid member 251e212 is made of, but not limited to, metal, plastic, or a combination thereof.

The second rigid member 251e212 and the second compliant beam 251e211 may be connected by gluing, clamping, welding, or screwing. Alternatively, the second rigid member 251e212 and the second compliant beam 251e211 may be integrally formed. In this way, it is beneficial to simplify a processing technology of the second compliant beam unit 251e21 and reduce manufacturing costs of the second compliant beam unit 251e21.

The second rigid member 251e212 and the second flexible beam 251e213 may be connected by gluing, clamping, welding, or screwing. Alternatively, the second rigid member 251e212 and the second flexible beam 251e213 may be integrally formed. In this way, it is beneficial to simplify the processing technology of the second compliant beam unit 251e21 and reduce the manufacturing costs of the second compliant beam unit 251e21. Specifically, the second rigid member 251e212, the second compliant beam 251e211, and the second flexible beam 251e213 are integrally formed. In this way, it is beneficial to simplify the processing technology of the second compliant beam unit 251e21 and reduce the manufacturing costs of the second compliant beam unit 251e21.

The second compliant bistable unit 251e2 is different from the first compliant bistable unit 251e1. Specifically, at least one of a material, a shape, and a size of the second compliant beam unit 251e21 is different from that of the first compliant beam unit 251e11. In other words, the material of the second compliant beam unit 251e21 may be different from that of the first compliant beam unit 251e11, the shape of the second compliant beam unit 251e21 may be different from that of the first compliant beam unit 251e11, the size of the second compliant beam unit 251e21 may be different from that of the first compliant beam unit 251e11, any two of the material, the shape, and the size of the second compliant beam unit 251e21 may be different from those of the first compliant beam unit 251e11, or the material, the shape, and the size of the second compliant beam unit 251e21 may all be different from those of the first compliant beam unit 251e11. At least one of the material, the shape, and the size of the second compliant beam unit 251e21 is different from that of the first compliant beam unit 251e11, so that the first multistable flexible mechanism 251e can have at least three stable states, to enable the electronic device 100 to switch among the unfolded state, the folded state, and the intermediate hovering state.

Differences between the first compliant beam unit 251e11 and the second compliant beam unit 251e21 in the first multistable flexible mechanism 251e are described below with different embodiments. The following descriptions about size parameters of the first multistable flexible mechanism 251e and parallelism or non-parallelism between related components are all descriptions about the first multistable flexible mechanism 251e in the first stable state (i.e., the initial state). Herein, the first stable state (i.e., the initial state) is a stable state in the different stable states of the first multistable flexible mechanism 251e in which the first compliant beam unit 251e11 and the second compliant beam unit 251e21 do not deform.

In some embodiments, the first compliant beam 251e111 and the second compliant beam 251e211 are different in size. In this way, the structure is simple and easy to be implemented, and the first compliant beam unit 251e11 and the second compliant beam unit 251e21 can have at least different sizes, so that the first multistable flexible mechanism 251e can have at least three stable states, to enable the electronic device 100 to switch among the unfolded state, the folded state, and the intermediate hovering state.

In some embodiments in which the first compliant beam 251e111 and the second compliant beam 251e211 are different in size, referring to FIG. 13, FIG. 13 is a partial schematic diagram of the first multistable flexible mechanism 251e shown in FIG. 8. A length dimension 1₁₁ of the first compliant beam 251e111 and a length dimension 1₂₁ of the second compliant beam 251e211 are different. Certainly, it may be understood that, when the second compliant bistable unit 251e2 and the first compliant bistable unit 251e1 are different in another aspect such as shape, size, or material, the length dimension 1₁₁ of the first compliant beam 251e111 and the length dimension 1₂₁ of the second compliant beam 251e211 may be alternatively the same.

Specifically, the length dimension 1₁₁ of the first compliant beam 251e111 ranges from 5 mm to 30 mm. Exemplarily, the length dimension 1₁₁ of the first compliant beam 251e111 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, or 28 mm.

Specifically, the length dimension 1₂₁ of the second compliant beam 251e211 ranges from 5 mm to 30 mm. Exemplarily, the length dimension 1₂₁ of the second compliant beam 251e211 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, or 28 mm.

Specifically, when the length dimension 1₁₁ of the first compliant beam 251e111 and the length dimension 1₂₁ of the second compliant beam 251e211 are different, an absolute value of a difference between the length dimension 1₁₁ of the first compliant beam 251e111 and the length dimension 1₂₁ of the second compliant beam 251e211 ranges from 0.5 mm to 10 mm. Exemplarily, the absolute value of the difference between the length dimension 1₁₁ of the first compliant beam 251e111 and the length dimension 1₂₁ of the second compliant beam 251e211 is 1 mm, 1.5 mm, 2 mm, 2.5 mm, 3 mm, 3.5 mm, 4 mm, 4.5 mm, 5 mm, 5.5 mm, 6 mm, 6.5 mm, or 7 mm.

In some other embodiments in which the first compliant beam 251e111 and the second compliant beam 251e211 are different in size, a thickness dimension t₁₁ of the first compliant beam 251e111 and a thickness dimension t₂₁ of the second compliant beam 251e211 are different. Certainly, it may be understood that, when the second compliant bistable unit 251e2 and the first compliant bistable unit 251e1 are different in another aspect such as shape, size, or material, the thickness dimension t₁₁ of the first compliant beam 251e111 and the thickness dimension t₂₁ of the second compliant beam 251e211 may be alternatively the same.

Specifically, the thickness dimension t₁₁ of the first compliant beam 251e111 ranges from 0.1 mm to 2 mm. Exemplarily, the thickness dimension t₁₁ of the first compliant beam 251e111 is 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, or 1.9 mm.

Specifically, the thickness dimension t₂₁ of the second compliant beam 251e211 ranges from 0.1 mm to 2 mm. Exemplarily, the thickness dimension t₂₁ of the second compliant beam 251e211 is 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, or 1.9 mm.

Specifically, when the thickness dimension t₁₁ of the first compliant beam 251e111 and the thickness dimension t₂₁ of the second compliant beam 251e211 are different, an absolute value of a difference between the thickness dimension t₁₁ of the first compliant beam 251e111 and the thickness dimension t₂₁ of the second compliant beam 251e211 ranges from 0.1 mm to 1 mm. Exemplarily, the absolute value of the difference between the thickness dimension t₁₁ of the first compliant beam 251e111 and the thickness dimension t₂₁ of the second compliant beam 251e211 is 0.2 mm, 0.3 mm, 0.4 mm, 0.5 mm, 0.6 mm, 0.7 mm, 0.8 mm, or 0.9 mm.

In still other embodiments in which the first compliant beam 251e111 and the second compliant beam 251e211 are different in size, a width dimension of the first compliant beam 251e111 and a width dimension of the second compliant beam 251e211 are different. Certainly, it may be understood that, when the second compliant bistable unit 251e2 and the first compliant bistable unit 251e1 are different in another aspect such as shape, size, or material, the width dimension of the first compliant beam 251e111 and the width dimension of the second compliant beam 251e211 may be alternatively the same.

In some other embodiments, the first flexible beam 251e113 and the second flexible beam 251e213 are different in size. In this way, the structure is simple and easy to be implemented, and the first compliant beam unit 251e11 and the second compliant beam unit 251e21 can have at least different sizes, so that the first multistable flexible mechanism 251e can have at least three stable states, to enable the electronic device 100 to switch among the unfolded state, the folded state, and the intermediate hovering state.

In some embodiments in which the first flexible beam 251e113 and the second flexible beam 251e213 are different in size, a length dimension l₁₃ of the first flexible beam 251e113 and a length dimension l₂₃ of the second flexible beam 251e213 are different. Certainly, it may be understood that, when the second compliant bistable unit 251e2 and the first compliant bistable unit 251e1 are different in another aspect such as shape, size, or material, the length dimension 1₁₃ of the first flexible beam 251e113 and the length dimension 1₂₃ of the second flexible beam 251e213 may be alternatively the same.

Specifically, the length dimension 1₁₃ of the first flexible beam 251e113 ranges from 5 mm to 30 mm. Exemplarily, the length dimension l₁₃ of the first flexible beam 251e113 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, or 28 mm.

To prevent impossible realization of a plurality of stable states caused by impossible simultaneous deformation of the first flexible beam 251e113 and the first compliant beam 251e111 during the sliding of the connecting block 251e3 with the first swing arm 251d due to a large difference between the length dimensions of the first flexible beam 251e113 and the first compliant beam 251e111, the length dimension 1₁₃ of the first flexible beam 251e113 and the length dimension 1₁₁ of the first compliant beam 251e111 are the same. Certainly, a certain difference between the length dimension 1₁₃ of the first flexible beam 251e113 and the length dimension 1₁₁ of the first compliant beam 251e111 is also allowed. For example, an absolute value of a difference between the length dimensions of the two ranges from 0 to 5 mm. For example, the absolute value of the difference between the length dimensions of the two is 0.5 mm, 1 mm, 1.5 mm, 2.5 mm, 3 mm, 3.5 mm, 4 mm, or 4.5 mm.

Specifically, the length dimension 1₂₃ of the second flexible beam 251e213 ranges from 5 mm to 30 mm. Exemplarily, the length dimension 1₂₃ of the second flexible beam 251e213 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, or 28 mm.

To prevent impossible realization of a plurality of stable states caused by impossible simultaneous deformation of the second flexible beam 251e213 and the second compliant beam 251e211 during the sliding of the connecting block 251e3 with the first swing arm 251d due to a large difference between the length dimensions of the second flexible beam 251e213 and the second compliant beam 251e211, the length dimension 1₂₃ of the second flexible beam 251e213 and the length dimension 1₂₁ of the second compliant beam 251e211 are the same. Certainly, a certain difference between the length dimension 1₂₃ of the second flexible beam 251e213 and the length dimension 1₂₁ of the second compliant beam 251e211 is also allowed. For example, an absolute value of a difference between the length dimensions of the two ranges from 0 to 5 mm. For example, the absolute value of the difference between the length dimensions of the two is 0.5 mm, 1 mm, 1.5 mm, 2.5 mm, 3 mm, 3.5 mm, 4 mm, or 4.5 mm.

Specifically, when the length dimension 1₁₃ of the first flexible beam 251e113 and the length dimension 1₂₃ of the second flexible beam 251e213 are different, an absolute value of a difference between the length dimension 1₁₃ of the first flexible beam 251e113 and the length dimension l₂₃ of the second flexible beam 251e213 ranges from 0.5 mm to 10 mm. Exemplarily, the absolute value of the difference between the length dimension 1₁₃ of the first flexible beam 251e113 and the length dimension 1₂₃ of the second flexible beam 251e213 is 1 mm, 1.5 mm, 2 mm, 2.5 mm, 3 mm, 3.5 mm, 4 mm, 4.5 mm, 5 mm, 5.5 mm, 6 mm, 6.5 mm, or 7 mm.

In some other embodiments in which the first flexible beam 251e113 and the second flexible beam 251e213 are different in size, a thickness dimension t₁₃ of the first flexible beam 251e113 and a thickness dimension t₂₃ of the second flexible beam 251e213 are different. Certainly, it may be understood that, when the second compliant bistable unit 251e2 and the first compliant bistable unit 251e1 are different in another aspect such as shape, size, or material, the thickness dimension t₁₃ of the first flexible beam 251e113 and the thickness dimension t₂₃ of the second flexible beam 251e213 may be alternatively the same.

Specifically, the thickness dimension t₁₃ of the first flexible beam 251e113 ranges from 0.1 mm to 2 mm. Exemplarily, the thickness dimension t₁₃ of the first flexible beam 251e113 is 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, or 1.9 mm.

Specifically, the thickness dimension t₁₃ of the first flexible beam 251e113 and the thickness dimension t₁₁ of the first compliant beam 251e111 may be the same. In this way, the structure is simple. Certainly, the thickness dimension t₁₃ of the first flexible beam 251e113 and the thickness dimension t₁₁ of the first compliant beam 251e111 may be different. In this case, an absolute value of a difference between the thickness dimensions of the two ranges from 0.1 mm to 1 mm. Exemplarily, the absolute value of the difference between the thickness dimension t₁₁ of the first compliant beam 251e111 and the thickness dimension t₁₃ of the first flexible beam 251e113 is 0.2 mm, 0.3 mm, 0.4 mm, 0.5 mm, 0.6 mm, 0.7 mm, 0.8 mm, or 0.9 mm.

Specifically, the thickness dimension t₂₃ of the second flexible beam 251e213 ranges from 0.1 mm to 2 mm. Exemplarily, the thickness dimension t₂₃ of the second flexible beam 251e213 is 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, or 1.9 mm.

Specifically, the thickness dimension t₂₃ of the second flexible beam 251e213 and the thickness dimension t₂₁ of the second compliant beam 251e211 may be the same. In this way, the structure is simple. Certainly, the thickness dimension t₂₃ of the second flexible beam 251e213 and the thickness dimension t₂₁ of the second compliant beam 251e211 may be different. In this case, an absolute value of a difference between the thickness dimensions of the two ranges from 0.1 mm to 1 mm. Exemplarily, the absolute value of the difference between the thickness dimension t₂₃ of the second flexible beam 251e213 and the thickness dimension t₂₁ of the second compliant beam 251e211 is 0.2 mm, 0.3 mm, 0.4 mm, 0.5 mm, 0.6 mm, 0.7 mm, 0.8 mm, or 0.9 mm.

Specifically, when the thickness dimension t₁₃ of the first flexible beam 251e113 and the thickness dimension t₂₃ of the second flexible beam 251e213 are different, an absolute value of a difference between the thickness dimension t₁₃ of the first flexible beam 251e113 and the thickness dimension t₂₃ of the second flexible beam 251e213 ranges from 0.1 mm to 1 mm. Exemplarily, the absolute value of the difference between the thickness dimension t₁₃ of the first flexible beam 251e113 and the thickness dimension t₂₃ of the second flexible beam 251e213 is 0.2 mm, 0.3 mm, 0.4 mm, 0.5 mm, 0.6 mm, 0.7 mm, 0.8 mm, or 0.9 mm.

In some embodiments, the first compliant beam 251e111 is not parallel to the second compliant beam 251e211. In other words, an angle θ₁₁ between the first compliant beam 251e111 and the first direction A is different from an angle θ₂₁ between the second compliant beam 251e211 and the first direction A. In this way, the second compliant beam unit 251e21 and the first compliant beam unit 251e11 can have different shapes, the structure is simple and easy to be implemented, and the first multistable flexible mechanism 251e can have at least three stable states, to enable the electronic device 100 to switch among the unfolded state, the folded state, and the intermediate hovering state.

Certainly, it may be understood that, in another example, alternatively, the first compliant beam 251e111 and the second compliant beam 251e211 may be parallel.

Specifically, the angle θ₁₁ between the first compliant beam 251e111 and the first direction A ranges from 0 to 45°. Exemplarily, the angle θ₁₁ between the first compliant beam 251e111 and the first direction A is 2°, 5°, 7°, 8°, 10°, 14°, 15°, 18°, 20°, 25°, 28°, 30°, 32°, or 35°.

Specifically, the angle θ₂₁ between the second compliant beam 251e211 and the first direction A ranges from 0 to 45°. Exemplarily, the angle θ₂₁ between the first compliant beam 251e111 and the first direction A is 2°, 5°, 7°, 8°, 10°, 14°, 15°, 18°, 20°, 25°, 28°, 30°, 32°, or 35°.

Specifically, an angle between the first compliant beam 251e111 and the second compliant beam 251e211 (i.e., |θ₂₁-θ₁₁|) ranges from 0 to 35°. Exemplarily, the angle between the first compliant beam 251e111 and the second compliant beam 251e211 (i.e., |θ₂₁-θ₁₁|) is 2°, 3°, 4°, 5°, 6°, 7°, 8°, 9°, 10°, 14°, 15°, 18°, or 20°.

In still other embodiments, the first flexible beam 251e113 is not parallel to the second flexible beam 251e213. In other words, an angle θ₁₃ between the first flexible beam 251e113 and the first direction A is different from an angle θ₂₃ between the second flexible beam 251e213 and the first direction A. In this way, the second compliant beam unit 251e21 and the first compliant beam unit 251e11 can have different shapes, the structure is simple and easy to be implemented, and the first multistable flexible mechanism 251e can have at least three stable states, to enable the electronic device 100 to switch among the unfolded state, the folded state, and the intermediate hovering state. Certainly, it may be understood that, in another example, alternatively, the first flexible beam 251e113 and the second flexible beam 251e213 may be parallel.

Specifically, the angle θ₁₃ between the first flexible beam 251e113 and the first direction A ranges from 0 to 45°. Exemplarily, the angle θ₁₃ between the first flexible beam 251e113 and the first direction A is 2°, 5°, 7°, 8°, 10°, 14°, 15°, 18°, 20°, 25°, 28°, 30°, 32°, or 35°.

Specifically, the angle θ₂₃ between the second flexible beam 251e213 and the first direction A ranges from 0 to 45°. Exemplarily, the angle θ₂₃ between the first flexible beam 251e113 and the first direction A is 2°, 3°, 4°, 5°, 6°, 7°, 8°, 10°, 14°, 15°, 18°, 20°, 25°, 28°, 30°, 32°, or 35°.

Specifically, an angle between the first flexible beam 251e113 and the second flexible beam 251e213 (i.e., |θ₂₃-θ₁₃|) ranges from 0 to 35°. Exemplarily, the angle between the first flexible beam 251e113 and the second flexible beam 251e213 (i.e., |θ₂₃-θ₁₃|) is 2°, 3°, 4°, 5°, 6°, 7°, 8°, 9°, 10°, 14°, 15°, 18°, or 20°.

In still other embodiments, a length 1₁₂ of the first rigid member 251e112 is different from a length of the second rigid member 251e2121₂₂. In this way, the structure is simple and easy to be implemented, and the first compliant beam unit 251e11 and the second compliant beam unit 251e21 can have at least different sizes, so that the first multistable flexible mechanism 251e can have at least three stable states, to enable the electronic device 100 to switch among the unfolded state, the folded state, and the intermediate hovering state.

Certainly, it may be understood that the length dimension 1₁₂ of the first rigid member 251e112 and the length dimension 1₂₂ of the second rigid member 251e212 may be alternatively the same.

Specifically, the length dimension 1₁₂ of the first rigid member 251e112 ranges from 5 mm to 30 mm. Exemplarily, the length dimension l₁₂ of the first rigid member 251e112 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, mm, or 28 mm.

Specifically, the length dimension 1₂₂ of the second rigid member 251e212 ranges from 5 mm to 30 mm. Exemplarily, the length dimension 1₂₂ of the second rigid member 251e212 is 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, mm, or 28 mm.

Specifically, when the length dimension 1₁₂ of the first rigid member 251e112 and the length dimension l₂₂ of the second rigid member 251e212 are different, an absolute value of a difference between the length dimension 1₁₂ of the first rigid member 251e112 and the length dimension 1₂₂ of the second rigid member 251e212 ranges from 0.5 mm to 10 mm. Exemplarily, the absolute value of the difference between the length dimension 1₁₂ of the first rigid member 251e112 and the length dimension 1₂₂ of the second rigid member 251e212 is 1 mm, 1.5 mm, 2 mm, 2.5 mm, 3 mm, 3.5 mm, 4 mm, 4.5 mm, 5 mm, 5.5 mm, 6 mm, 6.5 mm, or 7 mm.

In still other embodiments, the first rigid member 251e112 is not parallel to the second rigid member 251e212. In other words, an angle θ₁₂ between the first rigid member 251e112 and the first direction A is different from an angle θ₂₂ between the second rigid member 251e212 and the first direction A. In this way, the second compliant beam unit 251e21 and the first compliant beam unit 251e11 can have different shapes, the structure is simple and easy to be implemented, and the first multistable flexible mechanism 251e can have at least three stable states, to enable the electronic device 100 to switch among the unfolded state, the folded state, and the intermediate hovering state. Certainly, it may be understood that, in another example, alternatively, the first rigid member 251e112 and the second rigid member 251e212 may be parallel.

Specifically, the angle θ₁₂ between the first rigid member 251e112 and the first direction A ranges from 0 to 45°. Exemplarily, the angle θ₁₂ between the first rigid member 251e112 and the first direction A is 2°, 5°, 7°, 8°, 10°, 14°, 15°, 18°, 20°, 25°, 28°, 30°, 32°, or 35°.

Specifically, the angle θ₂₂ between the second rigid member 251e212 and the first direction A ranges from 0 to 45°. Exemplarily, the angle θ₂₂ between the first rigid member 251e112 and the first direction A is 2°, 5°, 7°, 8°, 10°, 14°, 15°, 18°, 20°, 25°, 28°, 30°, 32°, or 35°.

Specifically, an angle between the first rigid member 251e112 and the second rigid member 251e212 (i.e., |θ₂₂-θ₁₂|) ranges from 0 to 35°. Exemplarily, the angle between the first rigid member 251e112 and the second rigid member 251e212 (i.e., |θ₂₃-θ₁₃|) is 2°, 3°, 4°, 5°, 6°, 7°, 8°, 9°, 10°, 14°, 15°, 18°, or 20°.

In still other embodiments, the first compliant beam 251e111 and the second compliant beam 251e211 are made of materials with different rigidity, so that rigidity of the first compliant beam 251e111 is different from that of the second compliant beam 251e211. The first flexible beam 251e113 and the second flexible beam 251e213 are made of materials with different rigidity, so that rigidity of the first flexible beam 251e113 is different from that of the second flexible beam 251e213.

An operating principle of the first multistable flexible mechanism 251e is described below based on a structure of the first multistable flexible mechanism 251e.

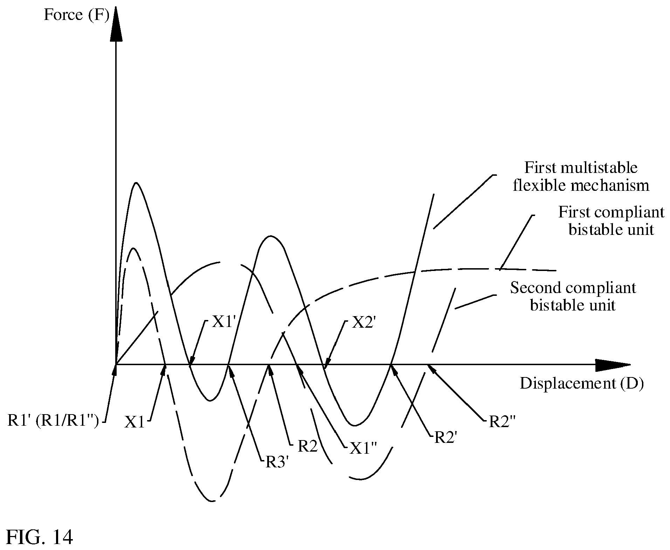

Specifically, referring to FIG. 14, FIG. 14 is a graph of a curve between overall force on the first compliant bistable unit 251e1 and the second compliant bistable unit 251e2 in the first multistable flexible mechanism 251e shown in FIG. 8 to FIG. 13 and moving displacement of a connecting block 251e3. A curve between force on the first compliant bistable unit 251e1 alone and the moving displacement of the connecting block 251e3 and a curve between force on the second compliant bistable unit 251e2 alone and the moving displacement of the connecting block 251e3 are simultaneously shown in the figure.

As shown in FIG. 14, for the first compliant bistable unit 251e1 alone (i.e., the first multistable flexible mechanism 251e does not have the second compliant bistable unit 251e2), the first compliant bistable unit 251e1 has two stable states, i.e., R1 (i.e., a first stable state) and R2 (i.e., a second stable state), and an unstable state of X1. In this case, the first multistable flexible mechanism 251e is a bistable flexible mechanism.

For the second compliant bistable unit 251e2 alone (i.e., the first multistable flexible mechanism 251e does not have the first compliant bistable unit 251e1), the second compliant bistable unit 251e2 also has two stable states, i.e., R1' (i.e., a first stable state) and R2' (i.e., a second stable state), and an unstable state of X1'. In this case, the first multistable flexible mechanism 251e is a bistable flexible mechanism.

The first compliant beam unit 251e11 and the second compliant beam unit 251e21 are different in at least one of size, shape, and material. Therefore, as shown in FIG. 14, the curve between the force on the first compliant bistable unit 251e1 alone and the moving displacement of the connecting block 251e3 and the curve between the force on the second compliant bistable unit 251e2 alone and the moving displacement of the connecting block 251e3 are different. When the first multistable flexible mechanism 251e has both the first compliant bistable unit 251e1 and the second compliant bistable unit 251e2, since "the curve between the force on the first compliant bistable unit 251e1 alone and the moving displacement of the connecting block 251e3 and the curve between the force on the second compliant bistable unit 251e2 alone and the moving displacement of the connecting block 251e3 are different", a curve between force on the first multistable flexible mechanism 251e and the moving displacement of the connecting block 251e3 is obtained from superposition of mechanical properties of the first compliant bistable unit 251e1 and the second compliant bistable unit 251e2. As shown in FIG. 14, due to the superposition of the mechanical properties of the first compliant bistable unit 251e1 and the second compliant bistable unit 251e2, the first multistable flexible mechanism 251e has three stable states of R1' (i.e., a first stable state), R2' (i.e., a second stable state), and R3' (i.e., a third stable state), and two unstable states of X1' and X2'.

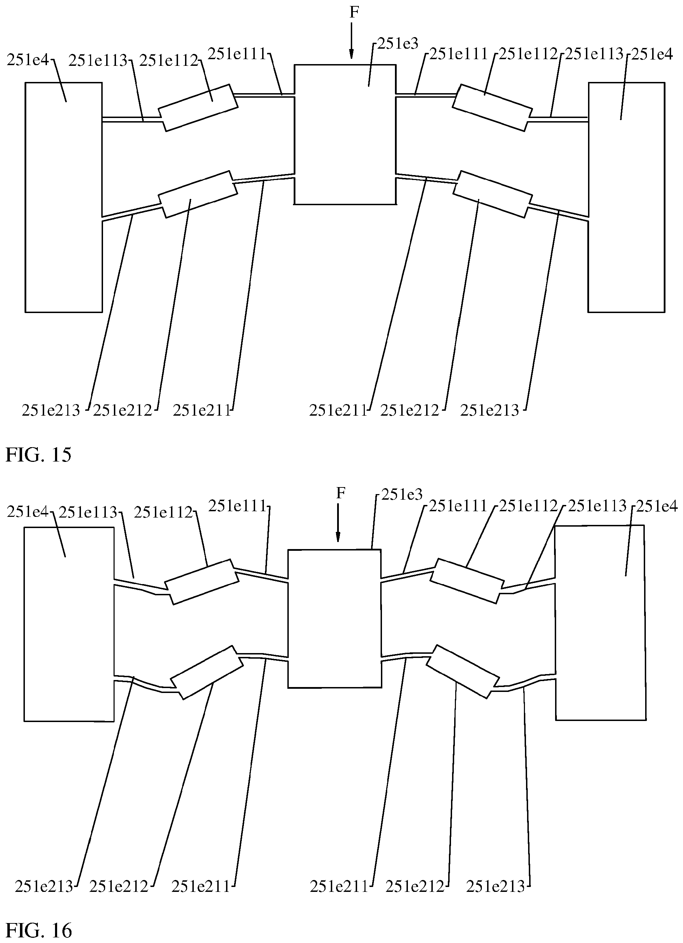

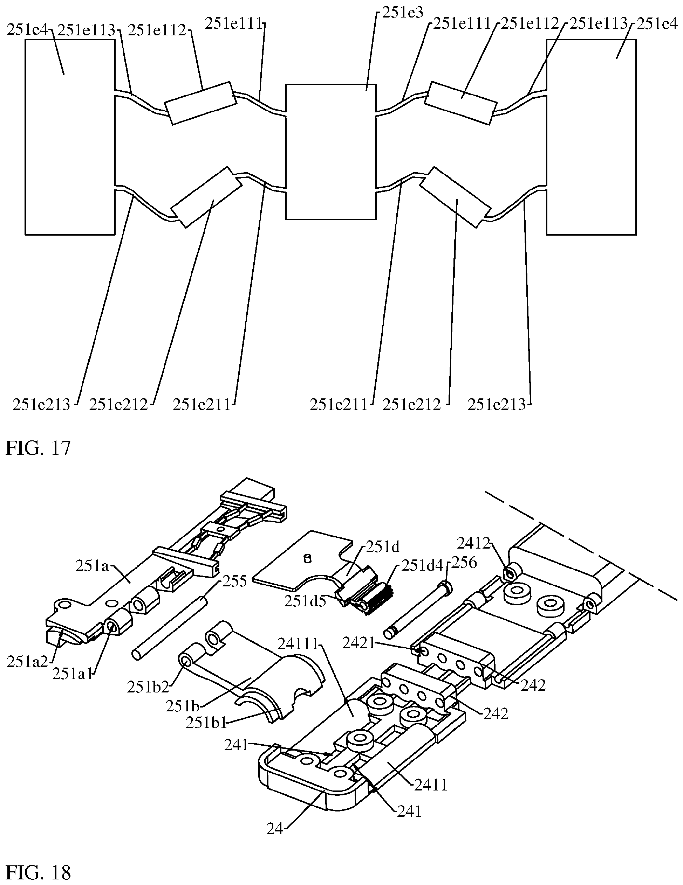

Specifically, referring to FIG. 15 to FIG. 17, FIG. 15 is a schematic diagram of the first multistable flexible mechanism 251e shown in FIG. 8 to FIG. 13 in a first stable state. FIG. 17 is a schematic diagram of the first multistable flexible mechanism 251e shown in FIG. 8 to FIG. 13 in a second stable state. As shown in FIG. 15, the first multistable flexible mechanism 251e is in the first stable state. In this case, the first compliant bistable unit 251e1 and the second compliant bistable unit 251e2 are in a convex shape as a whole, and the two do not deform. When the force exerted by the user on the first housing 21 causes the first connecting plate 251a to rotate with respect to the base 24 to move from the unfolded state to the folded state, as shown in FIG. 16, movement of the connecting block 251e3 along an arrow F may drive the first compliant beam 251e111, the first flexible beam 251e113, the second compliant beam 251e211, and the second flexible beam 251e213 to deform and drive the first rigid member 251e112 and the second rigid member 251e212 to rotate, so as to cause the first compliant bistable unit 251e1 and the second compliant bistable unit 251e2 to deform. Before the connecting block 251e3 moves from the first stable state R1' to the unstable state X1' with the highest energy, the entire first multistable flexible mechanism 251e continuously stores deformation energy. When the connecting block 251e3 moves over the unstable state X1' with the highest energy to the third stable state R3', the first multistable flexible mechanism 251e may automatically release the stored deformation energy and output force to push the connecting block 251e3 to continue moving until the third stable state R3' (the state as shown in FIG. 16) is reached, so as to be in the intermediate hovering state of the electronic device 100.

When the force exerted by the user on the first housing 21 continuously causes the first connecting plate 251a to rotate with respect to the base 24 to move from the intermediate hovering state to the unfolded state, as shown in FIG. 17, the connecting block 251e3 continuously moves along the arrow F and may drive the first compliant beam 251e111, the first flexible beam 251e113, the second compliant beam 251e211, and the second flexible beam 251e213 to further deform and drive the first rigid member 251e112 and the second rigid member 251e212 to further rotate, so as to cause the first compliant bistable unit 251e1 and the second compliant bistable unit 251e2 to continuously deform. Before the connecting block 251e3 moves from the third stable state R3' to the unstable state X2' with the highest energy, the entire first multistable flexible mechanism 251e continuously stores deformation energy again. When the connecting block 251e3 moves over the unstable state X2' with the highest energy to the second stable state R2', the first multistable flexible mechanism 251e may automatically release the stored deformation energy and output force to push the connecting block 251e3 to continue moving (in this process, even if the user does not exert force on the first housing 21, the first multistable flexible mechanism 251e may also spontaneously push the connecting block 251e3 to continue moving under the stored deformation energy) until the second stable state R2' (the state as shown in FIG. 17) is reached, so as to be in the folded state of the electronic device 100. It may be understood that the motion process from the folded state to the unfolded state is opposite to the above motion process. Details are not described in detail herein.

Based on the above, in this embodiment of this application, the first compliant bistable unit 251e1 and the second compliant bistable unit 251e2 are designed to be different in at least one of material, size, and shape, so that the first compliant bistable unit 251e1 and the second compliant bistable unit 251e2 correspond to different force-displacement curves, and the first multistable flexible mechanism 251e can have at least three stable states, to enable the electronic device 100 to switch among the unfolded state, the folded state, and the intermediate hovering state.

In the rotary mechanism 23 according to this embodiment of this application, the first multistable flexible mechanism 251e including the first compliant bistable unit 251e1 and the second compliant bistable unit 251e2 is provided, and the first compliant bistable unit 251e1 and the second compliant bistable unit 251e2 are designed to be different in at least one of material, size, and shape. In this way, the first multistable flexible mechanism 251e can have at least three stable states, so as to realize folding, unfolding, and the intermediate hovering state between the folded state and the unfolded state of the electronic device 100. Moreover, the entire first multistable flexible mechanism 251e has advantages such as fewer parts, a simple structure, easy assembly, high reliability, no friction and no wear, being conducive to realization of integrated arrangement of the first multistable flexible mechanism 251e and the first connecting plate 251a, and overall flattening of the first multistable flexible mechanism 251e and the first connecting plate 251a, which can facilitate the connection between the first multistable flexible mechanism 251e and the first connecting plate 251a as a whole and the first swing arm 251d, simplify the structure of the rotary mechanism 23, and facilitate the thin design of the electronic device 100.

It may be understood that, when there are a plurality of intermediate hovering states, a variety of different compliant bistable units between the fixed portion 251e4 and the connecting block 251e3z are superposed or a plurality of compliant bistable units form different structural layouts, provided that folding, unfolding, and intermediate hovering of the rotary mechanism 23 are realized by using a multistable flexible mechanism, both of which fall within the scope of protection of this application.

On the basis of the above embodiment, referring to FIG. 18, FIG. 18 is a schematic exploded view of a partial structure of the rotary mechanism 23 shown in FIG. 8, in which the rotary mechanism 23 is in the unfolded state. The base 24 is provided with a first hinge hole 241 running through the base 24 in a thickness direction of the base 24. An inner wall of the first hinge hole 241 is provided with a first rib 2411. A side surface of the first rib 2411 forms a part of the above supporting surface M4, and a side surface of the first rib 2411 away from the supporting surface M4 forms a first arc surface 24111. An extension path of the first arc surface 24111 may be a major arc (that is, an arc with a central angle greater than 180°), a minor arc (that is, an arc with a central angle less than 180°), or a semi-circular arc (that is, an arc with a central angle equal to 180°), which is not specifically limited herein. In the embodiment shown in FIG. 18, the extension path of the first arc surface 24111 is a minor arc.

The first connector 251b is provided with a first arc-shaped rib 251b1. An extension path of the first arc-shaped rib 251b1 may be a major arc (that is, an arc with a central angle greater than 180°), a minor arc (that is, an arc with a central angle less than 180°), or a semi-circular arc (that is, an arc with a central angle equal to 180°), which is not specifically limited herein. In the embodiment shown in FIG. 18, the extension path of the first arc-shaped rib 251b1 is a minor arc. The first arc-shaped rib 251b1 may fit and be accommodated in the first hinge hole 241, cooperate with the first arc surface 24111, and can rotate around a center line of the first arc surface 24111 in the first hinge hole 241. Therefore, hinging of the first connector 251b to the base 24 is realized. This structure is simple and easy to be implemented.

Still referring to FIG. 18, the first connector 251b is further provided with a first shaft hole 251b2. The first connecting plate 251a is provided with a second shaft hole 251a1. The rotary assembly 25 further includes a first rotary shaft 255. The first rotary shaft 255 is disposed through the second shaft hole 251a1 and the first shaft hole 251b2. Therefore, a rotational connection between the first connecting plate 251a and the first connector 251b is realized.

Still referring to FIG. 18, the base 24 is provided with a positioning block 242. The positioning block 242 is provided with a first pivot hole 2421, and the first swing arm 251d is provided with a second pivot hole 251d5. The rotary assembly 25 further includes a first pivot shaft 256. The first pivot shaft 256 is disposed through the first pivot hole 2421 and the second pivot hole 251d5, so as to realize a rotatable connection between the first swing arm 251d and the base 24.

On the basis of the above embodiment, referring back to FIG. 8 and FIG. 9, the first door panel 26 is hinged to the first connecting plate 251a. Moreover, the first connecting plate 251a is located on one side of the first door panel 26 away from the supporting surface M5. The first hinge 251c and the first connecting plate 251a are located on a same side of the base 24. Moreover, the first hinge 251c is hinged to one side of the base 24. Besides, when the rotary mechanism 23 switches between the unfolded state and the folded state, the first door panel 26 and the first hinge 251c are slidable with respect to each other in a direction perpendicular to the first direction A.

In this way, the first connecting plate 251a, the first connector 251b, the first door panel 26, the first hinge 251c, and the base 24 can constitute a slider-crank mechanism. The force exerted by the user on the first housing 21 may act on the first connecting plate 251a, and when the force acting on the first connecting plate 251a causes the first connecting plate 251a to rotate with respect to the base 24, the first door panel 26 may be driven to rotate with respect to the base 24 under mechanical linkage of the first connecting plate 251a, the first connector 251b, the first hinge 251c, and the like. In addition, due to the sliding fit between the first door panel 26 and the first hinge 251c, when the first connecting plate 251a drives the first door panel 26 to rotate, the first door panel 26 can slide with respect to the base 24 in a direction perpendicular to the first direction A, thereby driving one end of the first door panel 26 near the base 24 to move in a direction away from the base 24 or close to the base 24. It may be understood that, in another example, alternatively, the rotary assembly 25 may not include the first connector 251b and the first hinge 251c, provided that the first door 26 can slide with respect to the base 24 in the direction perpendicular to the first direction A when the first connecting plate 251a drives the first door panel 26 to rotate. Moreover, since there is a connection relationship between the first door panel 26 and the first connecting plate 251a as well as between the first swing arm 251d and the first connecting plate 251a, linkage between various components can be realized when external force is applied to the first connecting plate 251a.

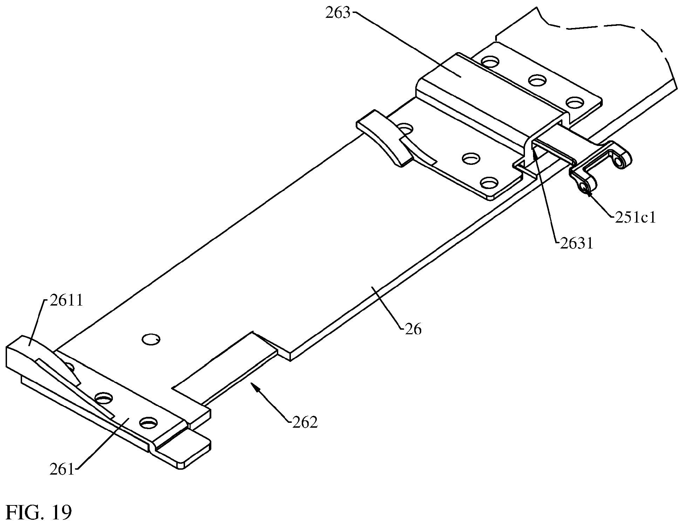

Still referring to FIG. 18, an end surface of one end of the first connecting plate 251a along the first direction A is provided with a first arc-shaped slot 251a2. A center line of the first arc-shaped slot 251a2 extends along the first direction A. Still referring to FIG. 19, FIG. 19 is a schematic diagram of a partial structure of the first door panel 26 in the rotary mechanism 23 shown in FIG. 8. An end portion of the first door panel 26 along the first direction A is provided with a connecting portion 261. Specifically, the connecting portion 261 may be fixed to the first door panel 26 in a manner such as threaded connection, riveting, or bonding, or may be integrally formed with the first door panel 26. The connecting portion 261 is provided with a second arc-shaped rib 2611. An extension path of the second arc-shaped rib 2611 may be a major arc (that is, an arc with a central angle greater than 180°), a minor arc (that is, an arc with a central angle less than 180°), or a semi-circular arc (that is, an arc with a central angle equal to 180°), which is not specifically limited herein. In the embodiment shown in FIG. 19, the extension path of the second arc-shaped rib 2611 is a minor arc. The second arc-shaped rib 2611 may fit and be accommodated in the first arc-shaped slot 251a2, and can rotate around a center line of the first arc-shaped slot 251a2. Therefore, a hinged connection between the first door panel 26 and the first connecting plate 251a is realized.

Still referring to FIG. 19, the first door panel 26 is provided with an avoidance notch 262. The avoidance notch 262 is configured to avoid the first connector 251b, thereby preventing interference of rotation of the first connector 251b with rotation of the first door panel 26, and improving reliability of operation of the rotary mechanism 23.

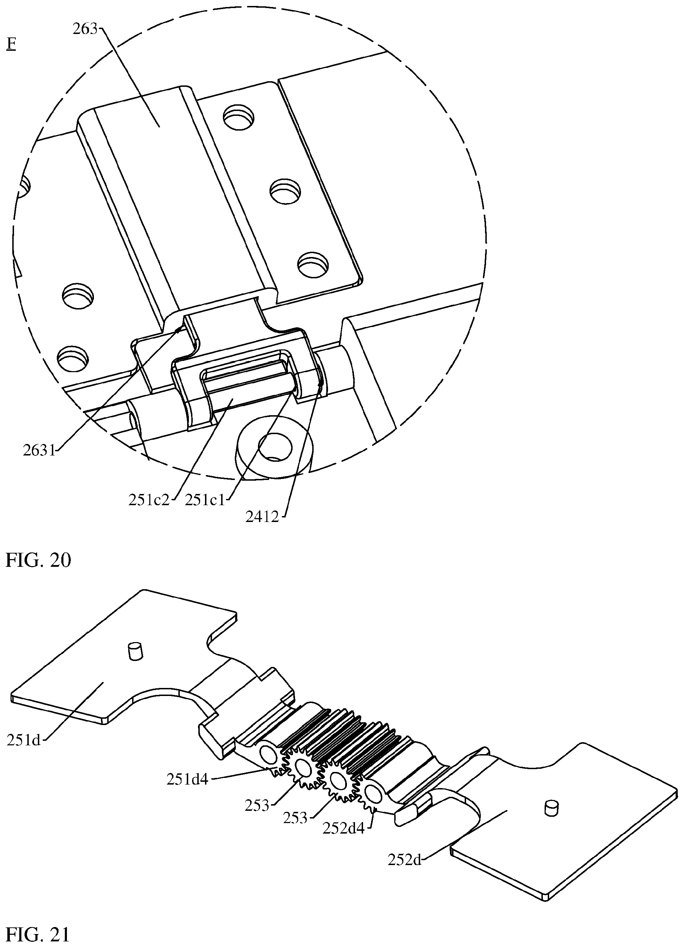

Still referring to FIG. 19 and FIG. 20, FIG. 20 is an enlarged view of a part circled at F according to the rotary mechanism 23 shown in FIG. 9. A sliding block 263 is fixed to a side surface of the first door panel 26 away from the supporting surface M5 of the first door panel 26. A sliding groove 2631 is formed on the sliding block 263. The first hinge 251c is inserted into the sliding groove 2631, so as to be in sliding fit with the first door panel 26.

Still referring to FIG. 20, the base 24 is provided with a third shaft hole 2412, and a center line of the third shaft hole 2412 is parallel to that of the first arc-shaped rib 251b1. An end portion of the first hinge 251c away from the first door panel 26 has a fourth shaft hole 251c1, and the rotary mechanism 23 further includes a second pivot shaft 251c2. The second pivot shaft 251c2 is disposed through the third shaft hole 2412 and the fourth shaft hole 251c1. In this way, the hinging of the first hinge 251c to the base 24 can be realized. Therefore, the implementation is simple and easy to be implemented, and manufacturing costs are low.

On the basis of the above embodiments, referring back to FIG. 8 to FIG. 10 again, the second connecting plate 252a is fixed to the second housing 22. Specifically, the second connecting plate 252a is fixed to the second intermediate frame 221. Exemplarily, the second connecting plate 252a may be fixed to the second intermediate frame 221 in a manner such as threaded connection, riveting, or bonding, or may be integrally formed with the second intermediate frame 221.

The second connecting plate 252a is hinged to the other side of the base 24 (e.g., the other side in the width direction). Specifically, the second connecting plate 252a is hinged to the other side of the base 24 by using the second connector 252b. In other words, one end of the second connector 252b is hinged to the other side of the base 24. The second connector 252b extends along the first direction A with respect to a hinge axis of the base 24. The second connecting plate 252a is hinged to the other end of the second connector 252b, and the second connecting plate 252a extends along the first direction A with respect to a hinge axis of the second connector 252b.

The second swing arm 252d and the second connecting plate 252a are located on a same side of the base 24. Moreover, the second swing arm 252d is hinged to the other side of the base 24. The second swing arm 252d extends along the first direction A with respect to the hinge axis of the base 24. The second swing arm 252d and the second connecting plate 252a are spaced apart in the first direction A. When the rotary mechanism 23 switches between the unfolded state and the folded state, the second swing arm 252d is slidable with respect to the second connecting plate 252a in a direction perpendicular to the first direction A.

The second swing arm 252d, when sliding with respect to the second connecting plate 252a in the direction perpendicular to the first direction A, may slide to a first lock position of the second swing arm 252d with respect to the second connecting plate 252a and a second lock position of the second swing arm 252d with respect to the second connecting plate 252a. When the second swing arm 252d slides to the first lock position with respect to the second connecting plate 252a, the rotary mechanism 23 is in the unfolded state. When the second swing arm 252d slides to the second lock position with respect to the second connecting plate 252a, the rotary mechanism 23 is in the folded state.

The second multistable flexible mechanism 252e is disposed on the second connecting plate 252a. Moreover, the second multistable flexible mechanism 252e has a first stable state and a second stable state. The second multistable flexible mechanism 252e cooperates with the second swing arm 252d, and the second multistable flexible mechanism 252e switches between the first stable state and the second stable state as the second swing arm 252d slides with respect to the second connecting plate 252a.

In the folded state of the rotary mechanism 23, the second multistable flexible mechanism 252e is in the second stable state, so as to lock the second swing arm 252d at the second lock position. In the unfolded state of the rotary mechanism 23, the second multistable flexible mechanism 252e is in the first stable state (the state as shown in FIG. 9), so as to lock the second swing arm 252d at the first lock position. In other words, in the folded state of the rotary mechanism 23, the second multistable flexible mechanism 252e can restrict the sliding of the second swing arm 252d with respect to the second connecting plate 252a, so as to lock the second swing arm 252d at the second lock position. In the unfolded state of the rotary mechanism 23, the second multistable flexible mechanism 252e can also restrict the sliding of the second swing arm 252d with respect to the second connecting plate 252a, so as to lock the second swing arm 252d at the first lock position.

In this way, when the second multistable flexible mechanism 252e locks the second swing arm 252d at the second lock position and no external force is exerted by the user, the second swing arm 252d no longer slides along the second connecting plate 252a, so that the rotary mechanism 23 can be maintained in the current folded state. When the second multistable flexible mechanism 252e locks the second swing arm 252d at the first lock position and no external force is exerted by the user, the second swing arm 252d no longer slides along the second connecting plate 252a, so that the rotary mechanism 23 can be maintained in the current unfolded state. Specifically, structural forms, assembly, and motion manners of the second connecting plate 252a, the second connector 252b, the second swing arm 252d, and the second multistable flexible mechanism 252e are respectively the same as those of the first connecting plate 251a, the first connector 251b, the first swing arm 251d, and the first multistable flexible mechanism 251e. Details are not described herein.

Still referring to FIG. 9 to FIG. 10, the second hinge 252c is hinged to the other side of the base 24. The second door panel 27 is hinged to the second connecting plate 252a. Moreover, the second connecting plate 252a is located on one side of the second door panel 27 away from the supporting surface M6. When the rotary mechanism 23 switches between the unfolded state and the folded state, the second door panel 27 and the second hinge 252c are slidable with respect to each other in a direction perpendicular to the first direction A. In this way, the base 24, the second connecting plate 252a, the second hinge 252c, the second connector 252b, and the second door panel 27 may also constitute a crank-slider mechanism. That is, when external force acts on the second connecting plate 252a to cause the second connecting plate 252a to rotate with respect to the base 24, the second door panel 27 may also be driven to rotate under mechanical linkage of the second connecting plate 252a, the second connector 252b, the second hinge 252c, and the like. Specifically, in this application, structural forms, assembly, and motion manners of the second hinge 252c and the second door panel 27 are respectively the same as those of the first hinge 251c and the first door panel 26. Details are not described herein.

On this basis, referring to FIG. 21, FIG. 21 is a schematic diagram of cooperation among the first swing arm 251d, the second swing arm 252d, and two third gears 253 in the rotary mechanism 23 shown in FIG. 8. To realize the linkage between the first housing 21 and the second housing 22, an end portion of one end of the first swing arm 251d adjacent to the base 24 is configured as a first gear 251d4, and an end portion of one end of the second swing arm 252d adjacent to the base 24 is configured as a second gear 252d4. The first gear 251d4 and the second gear 252d4 are in meshed cooperation.

Specifically, since the first swing arm 251d and the second swing arm 252d are located on opposite sides of the base 24, in order not to affect the cooperation between the first swing arm 251d and the first multistable flexible mechanism 251e on the first connecting plate 251a and the cooperation between the second swing arm 252d and the second multistable flexible mechanism 252e, the first gear 251d4 and the second gear 252d4 are spaced apart, and two third gears 253 in meshed cooperation are provided between the first gear 251d4 and the second gear 252d4. The first gear 251d4 and the second gear 252d4 are in meshed cooperation through the two third gears 253, so as to realize linkage between the first swing arm 251d and the second swing arm 252d. In this way, when the user exerts force on one of the first housing 21 and the second housing 22, the two housings can be driven to simultaneously move. Each of the third gears 253 is rotatably fixed to the base 24. The third gear 253 and the base 24 cooperate in a same manner as the first swing arm 251d and the base 24 cooperate.

The structure of the first multistable flexible mechanism 251e provided in other embodiments is described below.

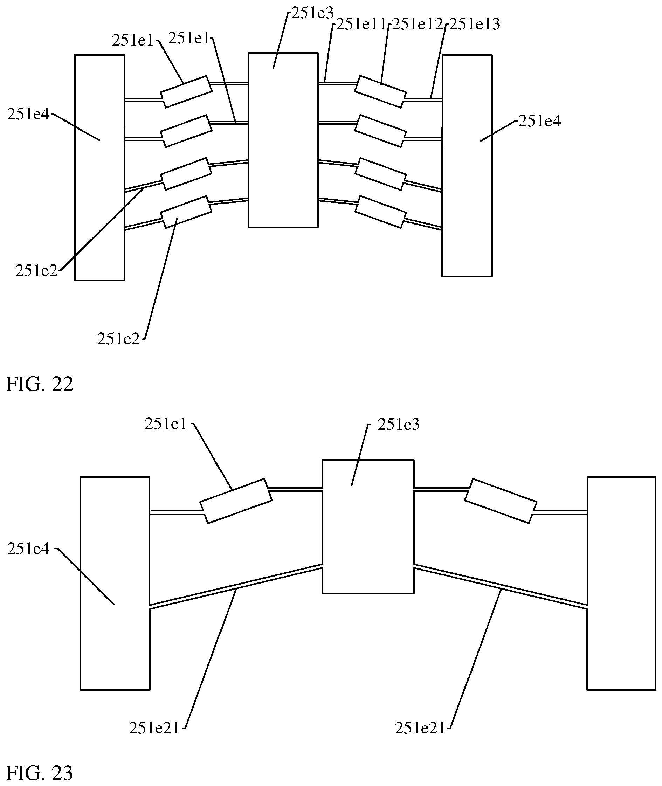

Referring to FIG. 22, FIG. 22 is a schematic diagram of a second first multistable flexible mechanism 251e according to an embodiment of this application. The first multistable flexible mechanism 251e shown in FIG. 22 is different from the first multistable flexible mechanism 251e shown in FIG. 8 to FIG. 18 in that: there are a plurality of first compliant bistable units 251e1 and a plurality of second compliant bistable units 251e2. Moreover, a quantity of the first compliant bistable units 251e1 and a quantity of the second compliant bistable units 251e2 may be the same or different.

"A plurality of" means two or more. Exemplarily, there are two first compliant bistable units 251e1 and two second compliant bistable units 251e2. Certainly, it may be understood that, in another example, there may be a plurality of first compliant bistable units 251e1 and a second compliant bistable unit 251e2, or there may be a first compliant bistable unit 251e1 and a plurality of second compliant bistable units 251e2, provided that there are a plurality of at least one of the first compliant bistable unit 251e1 and the second compliant bistable unit 251e2.

In the rotary mechanism 23 according to this embodiment of this application, a plurality of first compliant bistable units 251e1 and a plurality of second compliant bistable units 251e2 are provided, which is conducive to multiplying driving force used for driving the first swing arm 251d to slide, so that the connecting block 251e3 can stably move, improving damping feel of the rotary mechanism 23.

Referring to FIG. 23, FIG. 23 is a schematic diagram of a third first multistable flexible mechanism 251e according to an embodiment of this application. The first multistable flexible mechanism 251e shown in FIG. 23 is different from the first multistable flexible mechanism 251e shown in FIG. 8 to FIG. 18 in that: the second compliant beam unit 251e21 is in a shape of a sheet with an equal cross-sectional area everywhere. That is, the second compliant beam unit 251e21 is a sheet-shaped elastic piece structure with an equal cross-sectional area everywhere. Exemplarily, rigidity of the second compliant beam unit 251e21 is equal everywhere. Therefore, the second compliant beam unit 251e21 has a simple structure and is easy to be machined and manufactured. Moreover, a shape of the second compliant beam unit 251e21 is different from that of the first compliant beam unit 251e11. In this way, the entire first multistable flexible mechanism 251e can have at least three stable states, so that folding, unfolding, and the intermediate hovering state between the folded state and the unfolded state of the electronic device 100 can be realized. The entire structure is simple, frictionless, and highly reliable.

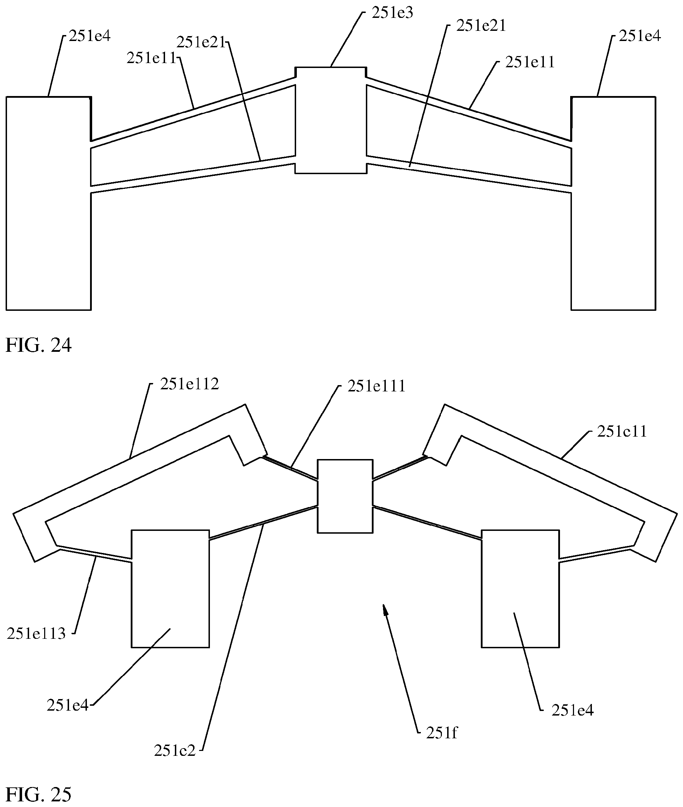

Referring to FIG. 24, FIG. 24 is a schematic diagram of a fourth first multistable flexible mechanism 251e according to an embodiment of this application. The first multistable flexible mechanism 251e shown in FIG. 24 is different from the first multistable flexible mechanism 251e shown in FIG. 8 to FIG. 18 in that: the first compliant beam unit 251e11 is in a shape of a sheet with an equal cross-sectional area everywhere. That is, the first compliant beam unit 251e11 is a sheet-shaped elastic piece structure with an equal cross-sectional area everywhere. That is, the second compliant beam unit 251e21 is a sheet-shaped elastic piece structure with an equal cross-sectional area everywhere. Exemplarily, rigidity of the first compliant beam unit 251e11 is equal everywhere. Therefore, the first compliant beam unit 251e11 has a simple structure and is easy to be machined and manufactured. The second compliant beam unit 251e21 is in a shape of a sheet with an equal cross-sectional area everywhere. That is, the second compliant beam unit 251e21 is a sheet-shaped elastic piece structure with an equal cross-sectional area everywhere. Exemplarily, rigidity of the second compliant beam unit 251e21 is equal everywhere. Therefore, the second compliant beam unit 251e21 has a simple structure and is easy to be machined and manufactured.

Specifically, a length dimension of the second compliant beam unit 251e21 is different from that of the first compliant beam unit 251e11. In this way, when the second compliant beam unit 251e21 and the first compliant beam unit 251e11 are connected to the connecting block 251e3 and the fixed portion 251e4 respectively, non-parallel arrangement of the two can be realized. In this way, the entire first multistable flexible mechanism 251e has at least three stable states, so that folding, unfolding, and intermediate hovering between the folded state and the unfolded state of the electronic device 100 can be realized. The entire structure is simple, frictionless, and highly reliable.

Referring to FIG. 25, FIG. 25 is a schematic diagram of a fifth first multistable flexible mechanism 251e according to an embodiment of this application. The first multistable flexible mechanism 251e shown in FIG. 25 is different from the first multistable flexible mechanism 251e shown in FIG. 8 to FIG. 18 in that: part of the first multistable flexible mechanism 251e is located in the sliding space 251f. Specifically, the first rigid member 251e112 of each of the first compliant beam units 251e11 is located on one side of the corresponding fixed portion 251e4 along a moving direction of the connecting block 251e3. The first flexible beam 251e113 of each of the first compliant beam units 251e11 is located on one side of the corresponding fixed portion 251e4 away from the other fixed portion 251e4, and is connected to the corresponding fixed portion 251e4. Moreover, the first rigid member 251e112 is U-shaped.

The second compliant beam unit 251e21 is in a shape of a sheet with an equal cross-sectional area everywhere. Therefore, the rigidity of the second compliant beam unit 251e21 is equal everywhere. Therefore, the second compliant beam unit 251e21 has a simple structure and is easy to be machined and manufactured.

Moreover, a shape of the second compliant beam unit 251e21 is different from that of the first compliant beam unit 251e11. In this way, the entire first multistable flexible mechanism 251e has at least three stable states, so that folding, unfolding, and intermediate hovering between the folded state and the unfolded state of the electronic device 100 can be realized. The entire structure is simple, frictionless, and highly reliable.

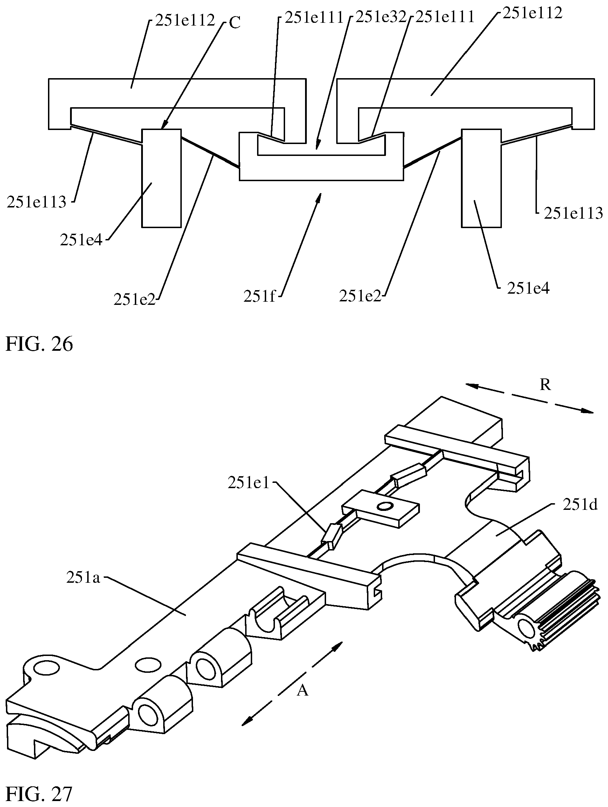

Referring to FIG. 26, FIG. 26 is a schematic diagram of a sixth first multistable flexible mechanism 251e according to an embodiment of this application. The first multistable flexible mechanism 251e shown in FIG. 26 is different from the first multistable flexible mechanism 251e shown in FIG. 8 to FIG. 18 in that: a groove 251e32 is formed on a side surface of the connecting block 251e3 in the moving direction of the connecting block 251e3. The first compliant beam 251e111 of each of the first compliant beam units 251e11 is located in the groove 251e32 and connected to a groove wall of the groove 251e32. The first rigid member 251e112 is located on one side of the connecting block 251e3 facing a surface provided with the groove 251e32. The fixed portion 251e4 has a surface C having the same orientation as the surface of the connecting block 251e3 provided with the groove 251e32, and the first rigid member 251e112 is located on one side facing the surface C. Moreover, the first rigid member 251e112 is U-shaped. The first flexible beam 251e113 of each of the first compliant beam units 251e11 is located on one side of the corresponding fixed portion 251e4 away from the other fixed portion 251e4, and is connected to the corresponding fixed portion 251e4.

The second compliant beam unit 251e21 is in a shape of a sheet with an equal cross-sectional area everywhere. Therefore, the rigidity of the second compliant beam unit 251e21 is equal everywhere. Therefore, the second compliant beam unit 251e21 has a simple structure and is easy to be machined and manufactured.

Moreover, a shape of the second compliant beam unit 251e21 is different from that of the first compliant beam unit 251e11. In this way, the entire first multistable flexible mechanism 251e can have at least three stable states, so that folding, unfolding, and intermediate hovering between the folded state and the unfolded state of the electronic device 100 can be realized. The entire structure is simple, frictionless, and highly reliable.

Referring to FIG. 27, FIG. 27 is a schematic diagram of cooperation of a seventh first multistable flexible mechanism 251e with the first connecting plate 251a and the first swing arm 251d according to an embodiment of this application. This example is different from the examples shown in FIG. 8 to FIG. 26 in that: the first multistable flexible mechanism 251e does not include the second compliant bistable unit 251e2, but includes the first compliant bistable unit 251e2. In this case, the first multistable flexible mechanism 251e is a bistable flexible mechanism. Therefore, the switching of the electronic device 100 between the folded state and the unfolded state is realized.

An operating principle of the first multistable flexible mechanism 251e is described below based on a structure of the first multistable flexible mechanism 251e.

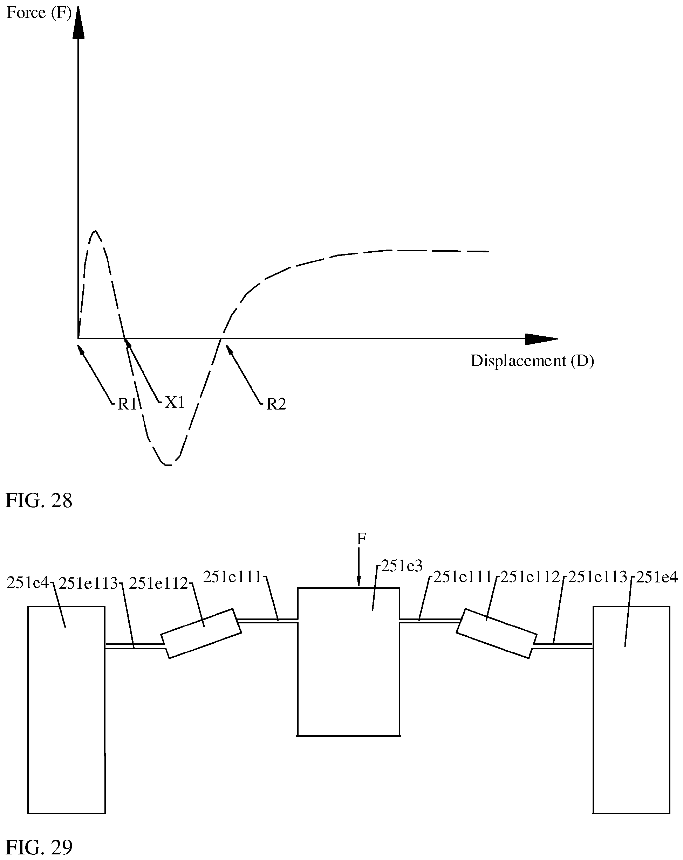

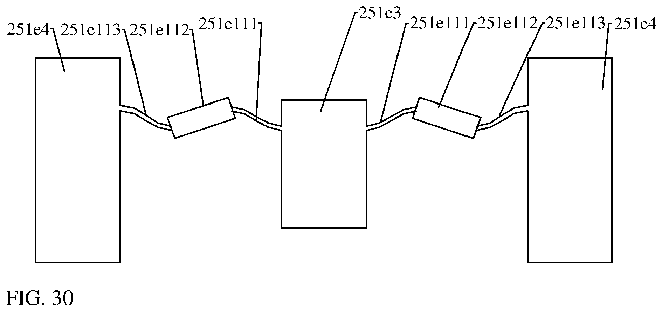

Referring to FIG. 28, FIG. 28 is a graph of a curve between force applied to the first multistable flexible mechanism 251e shown in FIG. 27 and moving displacement of a connecting block. It can be obtained from FIG. 28 that the first multistable flexible mechanism 251e has two stable states R1 (i.e., a first stable state) and R2 (i.e., a second stable state), and an unstable state X1 with the highest energy. Specifically, referring to FIG. 29 and FIG. 30, FIG. 29 is a schematic diagram of the first multistable flexible mechanism 251e shown in FIG. 27 in the first stable state. FIG. 30 is a schematic diagram of the first multistable flexible mechanism 251e shown in FIG. 27 in the second stable state. When the force exerted by the user on the first housing 21 causes the first connecting plate 251a to rotate with respect to the base 24 to move from the unfolded state to the folded state, movement of the connecting block 251e3 along the arrow F may drive the first compliant beam 251e111 and the first flexible beam 251e113 to deform and drive the first rigid member 251e112 to rotate. Before the connecting block 251e3 moves from the first stable state R1 to the unstable state X1 with the highest energy, the entire mechanism continuously stores deformation energy. When the connecting block 251e3 moves over the unstable state X1 with the highest energy to the second stable state R2, the first compliant bistable unit 251e1 may release the stored deformation energy and output force to push the connecting block 251e3 to continue moving until the second stable state R2 is reached, so as to be in the folded state of the electronic device 100. It may be understood that the motion process from the folded state to the unfolded state is opposite to the above motion process. Details are not described in detail herein.

In the rotary mechanism 23 according to this embodiment of this application, when the first multistable flexible mechanism 251e includes only the first compliant bistable unit 251e1 or the second compliant bistable unit 251e2, the entire first multistable flexible mechanism 251e can have two stable states, so as to realize folding and unfolding of the electronic device 100. The entire structure is simple, frictionless, and highly reliable.

Herein, it may be understood that, when the first compliant bistable unit 251e1 and the second compliant bistable unit 251e2 that are described above are the same, the entire first multistable flexible mechanism 251e exhibits bistability characteristics.

Since the support apparatus 20 provided in the embodiments of this application includes the rotary mechanism 23 according to any one of the foregoing embodiments, the two can solve the same technical problem and achieve the same effect.

Since the electronic device 100 provided in some embodiments of this application includes the above support apparatus 20, the two can solve the same technical problem and achieve the same effect.

In the descriptions of this specification, the specific features, structures, materials, or characteristics may be combined in a proper manner in any one or more of the embodiments or examples without departing from the scope of the appended claims.

## Claims

1. A foldable electronic device (100), comprising: a rotary mechanism (23), a first housing (21), a second housing (22), and a foldable screen (10);
the foldable screen (10) comprising a first portion (11), a second portion (12) and a third portion (13) located between the first portion (11) and the second portion (12);
the first housing (21) having a supporting surface (M1) configured to fix and support the first portion (11) of the foldable screen (10);
the second housing (22) having a supporting surface (M2) configured to fix and support the second portion (12) of the foldable screen (10); and
the rotary mechanism (23) being connected between the first housing (21) and the second housing (22) and being configured to support the third portion (13) of the foldable screen (10); and
the rotary mechanism (23) comprising a base (24), a first swing arm (251d), a second swing arm (252d), a first connecting plate (251a), a second connection plate (252a), a first multistable flexible mechanism (251e), and a second multistable flexible mechanism (252e);
the base (24) extending along a first direction (A) and having a supporting surface (M4) configured to at least support the third portion (13) of the foldable screen (10) in an unfolded state;
the first connecting plate (251a) being fixed to the first housing (21) and hinged to a first side of the base (24);
the second connecting plate (252a) being fixed to the second housing (22) and hinged to a second side of the base (24) opposite the first side in the width direction of the base (24);
the first swing arm (251d) being hinged to the first side of the base (24), the first swing arm (251d) being configured to slide with respect to the first connecting plate (251a) in a second direction (R) perpendicular to the first direction (A), wherein, when sliding with respect to the first connecting plate (251a) in the direction (R), the first swing arm (251d) is configured to slide to a first locking position (SZ1) with respect to the first connecting plate (251a) in a folded state of the rotary mechanism (23) and to a second locking position (SZ2) in an unfolded state of the rotary mechanism (23);
the second swing arm (252d) being hinged to the second side of the base (24), the second swing arm (252d) being configured to slide with respect to the second connecting plate (252a) in the second direction (R), wherein, when sliding with respect to the first connecting plate (251a) in the direction (R), the second swing arm (252d) is configured to slide to a first locking position (SZ1) with respect to the first connecting plate (251a) in a folded state of the rotary mechanism (23) and to a second locking position (SZ2) in the unfolded state of the rotary mechanism (23);
the first multistable flexible mechanism (251e) being disposed on the first connecting plate (251a), and configured to cooperate with the first swing arm (251d), wherein in the unfolded state of the rotary mechanism (23), the first multistable flexible mechanism (251e) is in a first stable state so as to lock the first swing arm (251d) at the first locking position (SZ1) and in the folded state of the rotary mechanism (23), the first multistable flexible mechanism (251e) is in a second stable state so as to lock the first swing arm (251d) at the second locking position (SZ2); and
the second multistable flexible mechanism (252e) being disposed on the second connecting plate (252a) and configured to cooperate with the second swing arm (252d), wherein in the unfolded state of the rotary mechanism (23), the second multistable flexible mechanism (252e) is in a first stable state so as to lock the second swing arm (252d) at the first locking position (SZ1) and in the folded state of the rotary mechanism (23), the second multistable flexible mechanism (252e) is in a second stable state so as to lock the second swing arm (252d) at the second locking position (SZ2).

2. The electronic device (100) according to claim 1, wherein
in the unfolded state of the rotary mechanism (23), the supporting surface of the base (24), the supporting surface of the first housing (21), and the supporting surface of the second housing (22) are arranged coplanarly and have a same orientation, and the first multistable flexible mechanism (251e) and the second multistable flexible mechanism (252e) are in the first stable state, so as to lock the first swing arm (251d) and the second swing arm (252d) at the respective first locking position of the first swing arm (251d) with respect to the first connecting plate (251a) and the second connecting plate (252a), respectively; and
in the folded state of the rotary mechanism (23), the supporting surface of the first housing (21) and the supporting surface of the second housing (22) are perpendicular to the supporting surface of the base (24), and the first multistable flexible mechanism (251e) and the second multistable flexible mechanism (252e) are in the second stable state, so as to lock the first swing arm (251d) and the second swing arm (252d) at the respective second locking position of the first swing arm (251d) with respect to the first connecting plate (251a) and the second connecting plate (252a), respectively.

3. The electronic device (100) according to claim 1, wherein the first multistable flexible mechanism (251e) comprises: a first compliant bistable unit (251e1), the first compliant bistable unit (251e1) comprising two first compliant beam units (251e11), the two first compliant beam units (251e11) being arranged in the first direction and symmetrically disposed in the first direction, end portions of one ends, which are adjacent to each other, of the two first compliant beam units (251e11) being respectively fixed with respect to the first swing arm (251d), and end portions of the other ends, which are away from each other, of the two first compliant beam units (251e11) being respectively fixed with respect to the first connecting plate (251a);
wherein a length dimension of an extension trajectory of each of the first compliant beam units (251e11) is greater than a vertical distance between the end portion of the one end of the first compliant beam unit (251e11) and the end portion of the other end of the first compliant beam unit (251e11) in the first direction.

4. The electronic device (100) according to claim 3, wherein the first compliant beam unit (251e11) comprises: a first compliant beam (251e111), a first rigid member (251e112), and a first flexible beam (251e113);
an end portion of one end of the first compliant beam (251e111) being fixed with respect to the first swing arm (251d), an end portion of one end of the first flexible beam (251e113) being fixed with respect to the first connecting plate (251a), and the first rigid member (251e112) being connected between an end portion of the other end of the first compliant beam (251e111) and an end portion of the other end of the first flexible beam (251e113);
wherein rigidity of the first rigid member (251e112) is greater than that of the first compliant beam (251e111), and the rigidity of the first rigid member (251e112) is greater than that of the first flexible beam (251e113).

5. The electronic device (100) according to claim 4, wherein a cross-sectional area of the first rigid member (251e112) is greater than that of the first compliant beam (251e111), and the cross-sectional area of the first rigid member (251e112) is greater than that of the first flexible beam (251e113).

6. The electronic device (100) according to claim 4 or 5, wherein both the first compliant beam (251e111) and the first flexible beam (251e113) are sheet-shaped.

7. The electronic device (100) according to claim 3 or 4, wherein the first compliant beam unit (251e111) is in a shape of a sheet with an equal cross-sectional area everywhere.

8. The electronic device (100) according to any one of claims 3 to 7, wherein the rotary mechanism (23) has an intermediate hovering state, the intermediate hovering state being on a switching path of the rotary mechanism (23) switching between the unfolded state and the folded state; and
the first multistable flexible mechanism (251e) further has a third stable state, the third stable state being on a switching path of the first multistable flexible mechanism (251e) switching between the first stable state and the second stable state, and in the intermediate hovering state of the rotary mechanism (23), the first multistable flexible mechanism (251e) is in the third stable state so as to lock the first swing arm (251d) at a third locking position of the first swing arm (251d) with respect to the first connecting plate (251a), the third locking position being on a switching path of the first swing arm (251d) switching between the first locking position and the second locking position.

9. The electronic device (100) according to claim 8, wherein the first multistable flexible mechanism (251e) further comprises a second compliant bistable unit (251e2), the second compliant bistable unit (251e2) and the first compliant bistable unit (251e1) being arranged in a sliding direction of the first swing arm (251d) with respect to the first connecting plate (251a);
the second compliant bistable unit (251e2) comprising two second compliant beam units (251e21), the two second compliant beam units (251e21) being arranged in the first direction, the two second compliant beam units (251e21) being symmetrically disposed with respect to a symmetry line of the two first compliant beam units (251e21), end portions of one ends, which are adjacent to each other, of the two second compliant beam units (251e21) being respectively fixed with respect to the first swing arm (251d), end portions of the other ends of the two second compliant beam units (251e21) being respectively fixed with respect to the first connecting plate (251a), and a length dimension of an extension trajectory of each of the second compliant beam units (251e21) being greater than a vertical distance between the end portion of the one end of the second compliant beam unit (251e21) and the end portion of the other end of the second compliant beam unit (251e21) in the first direction;
wherein at least one of a material, a shape, and a size of the second compliant beam unit (251e21) is different from that of the first compliant beam unit (251e11).

10. The electronic device (100) according to claim 9, wherein the second compliant beam unit (251e21) comprises: a second compliant beam (251e211), a second rigid member (251e212), and a second flexible beam (251e213);
an end portion of one end of the second compliant beam (251e211) being fixed with respect to the first swing arm (251d), an end portion of one end of the second flexible beam (251e213) being fixed with respect to the first connecting plate (251a), and the second rigid member (251e212) being connected between an end portion of the other end of the second compliant beam (251e211) and an end portion of the other end of the second flexible beam (251e213);
wherein rigidity of the second rigid member (251e212) is greater than that of the second compliant beam (251e211), and the rigidity of the second rigid member (251e212) is greater than that of the second flexible beam (251e213).

11. The electronic device (100) according to claim 10, wherein a cross-sectional area of the second rigid member (251e212) is greater than that of the second compliant beam (251e211), and the cross-sectional area of the second rigid member (251e212) is greater than that of the second flexible beam (251e213).

12. The electronic device (100) according to claim 10 or 11, wherein both the second compliant beam (251e211) and the second flexible beam (251e213) are sheet-shaped.

13. The electronic device (100) according to any one of claims 9 to 12, wherein the first compliant beam unit (251e11) comprises: a first compliant beam (251e111), a first rigid member (251e112), and a first flexible beam (251e113);
an end portion of one end of the first compliant beam (251e111) being fixed with respect to the first swing arm (251d), an end portion of one end of the first flexible beam (251e113) being fixed with respect to the first connecting plate (251a), and the first rigid member (251e112) being connected between an end portion of the other end of the first compliant beam (251e111) and an end portion of the other end of the first flexible beam (251e113); rigidity of the first rigid member (251e112) being greater than that of the first compliant beam (251e111), and the rigidity of the first rigid member (251e112) being greater than that of the first flexible beam (251e113);
wherein a size of the first compliant beam (251e111) is different from that of the second compliant beam (251e211); and/or a size of the first flexible beam (251e113) is different from that of the second flexible beam (251e213); and/or, the first compliant beam (251e111) is not parallel to the second compliant beam (251e211); and/or, the first flexible beam (251e113) is not parallel to the second flexible beam (251e213).

14. The electronic device (100) according to claim 9, wherein the second compliant beam unit (251e2) is in a shape of a sheet with an equal cross-sectional area everywhere.

## Patentansprüche

1. Eine faltbare elektronische Vorrichtung (100), umfassend: einen Rotationsmechanismus (23), ein erstes Gehäuse (21), ein zweites Gehäuse (22) und einen faltbaren Bildschirm (10);
wobei der faltbare Bildschirm (10) einen ersten Abschnitt (11), einen zweiten Abschnitt (12) und einen dazwischenliegenden dritten Abschnitt (13) aufweist;
wobei das erste Gehäuse (21) eine Trägerfläche (M1) aufweist, die dazu eingerichtet ist, den ersten Abschnitt (11) des faltbaren Bildschirms (10) zu fixieren und zu stützen;
wobei das zweite Gehäuse (22) eine Trägerfläche (M2) aufweist, die dazu eingerichtet ist, den zweiten Abschnitt (12) des faltbaren Bildschirms (10) zu fixieren und zu stützen; und
wobei der Rotationsmechanismus (23) zwischen dem ersten Gehäuse (21) und dem zweiten Gehäuse (22) angebracht ist und dazu ausgelegt ist, den dritten Abschnitt (13) des faltbaren Bildschirms (10) zu stützen; und
wobei der Rotationsmechanismus (23) eine Basis (24), einen ersten Schwenkarm (251d), einen zweiten Schwenkarm (252d), eine erste Verbindungsplatte (251a), eine zweite Verbindungsplatte (252a), einen ersten multistabilen flexiblen Mechanismus (251e) und einen zweiten multistabilen flexiblen Mechanismus (252e) umfasst;
wobei sich die Basis (24) entlang einer ersten Richtung (A) erstreckt und eine Trägerfläche (M4) aufweist, die dazu eingerichtet ist, zumindest den dritten Abschnitt (13) des faltbaren Bildschirms (10) im aufgeklappten Zustand zu stützen;
wobei die erste Verbindungsplatte (251a) am ersten Gehäuse (21) befestigt und an einer ersten Seite der Basis (24) angelenkt ist;
wobei die zweite Verbindungsplatte (252a) am zweiten Gehäuse (22) befestigt und an einer zweiten, der ersten Seite gegenüberliegenden Seite der Basis (24) in der Breitenrichtung der Basis (24) angelenkt ist;
wobei der erste Schwenkarm (251d) an der ersten Seite der Basis (24) angelenkt ist, der erste Schwenkarm (251d) dazu eingerichtet ist, relativ zur ersten Verbindungsplatte (251a) in einer zweiten Richtung (R), die senkrecht zur ersten Richtung (A) verläuft, zu gleiten, wobei der erste Schwenkarm (251d), wenn er relativ zur ersten Verbindungsplatte (251a) in Richtung (R) gleitet, dazu eingerichtet ist, im zusammengeklappten Zustand des Rotationsmechanismus (23) in eine erste Verriegelungsposition (SZ1) und im aufgeklappten Zustand des Rotationsmechanismus (23) in eine zweite Verriegelungsposition (SZ2) zu gleiten;
der zweite Schwenkarm (252d) an der zweiten Seite der Basis (24) angelenkt ist, wobei der zweite Schwenkarm (252d) so ausgestaltet ist, dass er relativ zur zweiten Verbindungsplatte (252a) in der zweiten Richtung (R) gleiten kann, wobei, wenn der zweite Schwenkarm (252d) relativ zur ersten Verbindungsplatte (251a) in Richtung (R) gleitet, der zweite Schwenkarm (252d) dazu angeordnet ist, eine erste Verriegelungsposition (SZ1) relativ zur ersten Verbindungsplatte (251a) im zusammengeklappten Zustand des Drehmechanismus (23) und eine zweite Verriegelungsposition (SZ2) im ausgeklappten Zustand des Drehmechanismus (23) einzunehmen;
der erste multistabile flexible Mechanismus (251e) auf der ersten Verbindungsplatte (251a) angeordnet ist und so konfiguriert ist, dass er mit dem ersten Schwenkarm (251d) zusammenarbeitet, wobei sich im ausgeklappten Zustand des Drehmechanismus (23) der erste multistabile flexible Mechanismus (251e) in einem ersten stabilen Zustand befindet, um den ersten Schwenkarm (251d) an der ersten Verriegelungsposition (SZ1) zu verriegeln, und sich im zusammengeklappten Zustand des Drehmechanismus (23) der erste multistabile flexible Mechanismus (251e) in einem zweiten stabilen Zustand befindet, um den ersten Schwenkarm (251d) an der zweiten Verriegelungsposition (SZ2) zu verriegeln; und
der zweite multistabile flexible Mechanismus (252e) auf der zweiten Verbindungsplatte (252a) angeordnet ist und so konfiguriert ist, dass er mit dem zweiten Schwenkarm (252d) zusammenarbeitet, wobei sich im ausgeklappten Zustand des Drehmechanismus (23) der zweite multistabile flexible Mechanismus (252e) in einem ersten stabilen Zustand befindet, um den zweiten Schwenkarm (252d) an der ersten Verriegelungsposition (SZ1) zu verriegeln, und sich im zusammengeklappten Zustand des Drehmechanismus (23) der zweite multistabile flexible Mechanismus (252e) in einem zweiten stabilen Zustand befindet, um den zweiten Schwenkarm (252d) an der zweiten Verriegelungsposition (SZ2) zu verriegeln.

2. Elektronisches Gerät (100) gemäß Anspruch 1, wobei
im ausgeklappten Zustand des Drehmechanismus (23) die Stützfläche der Basis (24), die Stützfläche des ersten Gehäuses (21) und die Stützfläche des zweiten Gehäuses (22) ko-planar angeordnet sind und die gleiche Ausrichtung aufweisen, und der erste multistabile flexible Mechanismus (251e) sowie der zweite multistabile flexible Mechanismus (252e) sich im ersten stabilen Zustand befinden, um den ersten Schwenkarm (251d) und den zweiten Schwenkarm (252d) jeweils an der jeweiligen ersten Verriegelungsposition des ersten Schwenkarms (251d) relativ zur ersten Verbindungsplatte (251a) und der zweiten Verbindungsplatte (252a) zu verriegeln; und
Im gefalteten Zustand des Rotationsmechanismus (23) sind die Stützfläche des ersten Gehäuses (21) und die Stützfläche des zweiten Gehäuses (22) senkrecht zur Stützfläche der Basis (24), und der erste multistabile flexible Mechanismus (251e) sowie der zweite multistabile flexible Mechanismus (252e) befinden sich im zweiten stabilen Zustand, um so den ersten Schwenkarm (251d) und den zweiten Schwenkarm (252d) jeweils an der zweiten Verriegelungsposition des ersten Schwenkarms (251d) relativ zur ersten Verbindungsplatte (251a) und der zweiten Verbindungsplatte (252a) zu arretieren.

3. Das elektronische Gerät (100) gemäß Anspruch 1, wobei der erste multistabile flexible Mechanismus (251e) Folgendes umfasst: eine erste compliant bistabile Einheit (251e1), wobei die erste compliant bistabile Einheit (251e1) zwei erste compliant Balkeneinheiten (251e11) umfasst, die zwei ersten compliant Balkeneinheiten (251e11) in der ersten Richtung angeordnet und in der ersten Richtung symmetrisch positioniert sind, die Endabschnitte der einander benachbarten Enden der beiden ersten compliant Balkeneinheiten (251e11) jeweils am ersten Schwenkarm (251d) befestigt sind und die Endabschnitte der voneinander entfernten anderen Enden der beiden ersten compliant Balkeneinheiten (251e11) jeweils an der ersten Verbindungsplatte (251a) befestigt sind;
wobei eine Längendimension einer Ausdehnungsbahn jeder der ersten compliant Balkeneinheiten (251e11) größer ist als der vertikale Abstand zwischen dem Endabschnitt des einen Endes der ersten compliant Balkeneinheit (251e11) und dem Endabschnitt des anderen Endes der ersten compliant Balkeneinheit (251e11) in der ersten Richtung.

4. Das elektronische Gerät (100) gemäß Anspruch 3, wobei die erste compliant Balkeneinheit (251e11) Folgendes umfasst: einen ersten compliant Balken (251e111), ein erstes starres Element (251e112) und einen ersten flexiblen Balken (251e113);
wobei ein Endabschnitt eines Endes des ersten compliant Balkens (251e111) am ersten Schwenkarm (251d) befestigt ist, ein Endabschnitt eines Endes des ersten flexiblen Balkens (251e113) an der ersten Verbindungsplatte (251a) befestigt ist und das erste starre Element (251e112) zwischen einem Endabschnitt des anderen Endes des ersten compliant Balkens (251e111) und einem Endabschnitt des anderen Endes des ersten flexiblen Balkens (251e113) verbunden ist;
wobei die Steifigkeit des ersten starren Elements (251e112) größer ist als die des ersten compliant Balkens (251e111), und die Steifigkeit des ersten starren Elements (251e112) größer ist als die des ersten flexiblen Balkens (251e113).

5. Das elektronische Gerät (100) nach Anspruch 4, wobei die Querschnittsfläche des ersten starren Elements (251e112) größer ist als die des ersten nachgiebigen Trägers (251e111), und die Querschnittsfläche des ersten starren Elements (251e112) größer ist als die des ersten flexiblen Trägers (251e113).

6. Das elektronische Gerät (100) nach Anspruch 4 oder 5, wobei sowohl der erste nachgiebige Träger (251e111) als auch der erste flexible Träger (251e113) plattenförmig sind.

7. Das elektronische Gerät (100) nach Anspruch 3 oder 4, wobei die erste nachgiebige Trägereinheit (251e111) die Form einer Platte mit überall gleicher Querschnittsfläche hat.

8. Das elektronische Gerät (100) nach einem der Ansprüche 3 bis 7, wobei der Drehmechanismus (23) einen Zwischen-Schwebe-Zustand aufweist, wobei der Zwischen-Schwebe-Zustand auf einem Schaltweg des Drehmechanismus (23) zwischen dem ausgeklappten Zustand und dem zusammengeklappten Zustand liegt; und
die erste multistabile flexible Mechanik (251e) ferner einen dritten stabilen Zustand aufweist, wobei der dritte stabile Zustand auf einem Schaltweg der ersten multistabilen flexiblen Mechanik (251e) zwischen dem ersten stabilen Zustand und dem zweiten stabilen Zustand liegt und sich im Zwischen-Schwebe-Zustand des Drehmechanismus (23) die erste multistabile flexible Mechanik (251e) im dritten stabilen Zustand befindet, um den ersten Schwenkarm (251d) an einer dritten Verriegelungsposition des ersten Schwenkarms (251d) in Bezug auf die erste Anschlussplatte (251a) zu verriegeln, wobei die dritte Verriegelungsposition auf einem Schaltweg des ersten Schwenkarms (251d) zwischen der ersten und der zweiten Verriegelungsposition liegt.

9. Das elektronische Gerät (100) nach Anspruch 8, wobei die erste multistabile flexible Mechanik (251e) ferner eine zweite nachgiebige bistabile Einheit (251e2) umfasst, wobei die zweite nachgiebige bistabile Einheit (251e2) und die erste nachgiebige bistabile Einheit (251e1) in einer Verschieberichtung des ersten Schwenkarms (251d) bezüglich der ersten Anschlussplatte (251a) angeordnet sind;
die zweite nachgiebige bistabile Einheit (251e2), umfassend zwei zweite nachgiebige Balkeneinheiten (251e21), wobei die zwei zweiten nachgiebigen Balkeneinheiten (251e21) in der ersten Richtung angeordnet sind, die beiden zweiten nachgiebigen Balkeneinheiten (251e21) symmetrisch bezüglich einer Symmetrielinie der beiden ersten nachgiebigen Balkeneinheiten (251e21) angeordnet sind, Endabschnitte eines jeweiligen Endes, die einander benachbart sind, der beiden zweiten nachgiebigen Balkeneinheiten (251e21) jeweils fest mit dem ersten Schwenkarm (251d) verbunden sind, Endabschnitte der anderen Enden der beiden zweiten nachgiebigen Balkeneinheiten (251e21) jeweils fest mit der ersten Verbindungsplatte (251a) verbunden sind, und die Längenmaße der Ausdehnungsbahn jeder der zweiten nachgiebigen Balkeneinheiten (251e21) größer sind als der vertikale Abstand zwischen dem Endabschnitt des einen Endes der zweiten nachgiebigen Balkeneinheit (251e21) und dem Endabschnitt des anderen Endes der zweiten nachgiebigen Balkeneinheit (251e21) in der ersten Richtung;
wobei zumindest eines von Material, Form und Größe der zweiten nachgiebigen Balkeneinheit (251e21) sich von der der ersten nachgiebigen Balkeneinheit (251e11) unterscheidet.

10. Elektronisches Gerät (100) nach Anspruch 9, wobei die zweite nachgiebige Balkeneinheit (251e21) umfasst: einen zweiten nachgiebigen Balken (251e211), ein zweites starres Element (251e212) und einen zweiten flexiblen Balken (251e213);
wobei ein Endabschnitt eines Endes des zweiten nachgiebigen Balkens (251e211) fest mit dem ersten Schwenkarm (251d) verbunden ist, ein Endabschnitt eines Endes des zweiten flexiblen Balkens (251e213) fest mit der ersten Verbindungsplatte (251a) verbunden ist, und das zweite starre Element (251e212) zwischen einem Endabschnitt des anderen Endes des zweiten nachgiebigen Balkens (251e211) und einem Endabschnitt des anderen Endes des zweiten flexiblen Balkens (251e213) verbunden ist;
wobei die Steifigkeit des zweiten starren Elements (251e212) größer ist als die des zweiten nachgiebigen Balkens (251e211), und die Steifigkeit des zweiten starren Elements (251e212) größer ist als die des zweiten flexiblen Balkens (251e213).

11. Elektronisches Gerät (100) nach Anspruch 10, wobei der Querschnittsbereich des zweiten starren Elements (251e212) größer ist als der des zweiten nachgiebigen Balkens (251e211), und der Querschnittsbereich des zweiten starren Elements (251e212) größer ist als der des zweiten flexiblen Balkens (251e213).

12. Elektronisches Gerät (100) nach Anspruch 10 oder 11, wobei sowohl der zweite nachgiebige Balken (251e211) als auch der zweite flexible Balken (251e213) plattenförmig ausgestaltet sind.

13. Elektronisches Gerät (100) nach einem der Ansprüche 9 bis 12, wobei die erste nachgiebige Balkeneinheit (251e11) Folgendes umfasst: einen ersten nachgiebigen Balken (251e111), ein erstes starres Element (251e112) und einen ersten flexiblen Balken (251e113);
Ein Endabschnitt eines Endes des ersten nachgiebigen Balkens (251e111) ist in Bezug auf den ersten Schwenkarm (251d) fixiert, ein Endabschnitt eines Endes des ersten flexiblen Balkens (251e113) ist in Bezug auf die erste Verbindungsplatte (251a) fixiert, und das erste starre Element (251e112) ist zwischen einem Endabschnitt des anderen Endes des ersten nachgiebigen Balkens (251e111) und einem Endabschnitt des anderen Endes des ersten flexiblen Balkens (251e113) verbunden; die Steifigkeit des ersten starren Elements (251e112) ist größer als die des ersten nachgiebigen Balkens (251e111), und die Steifigkeit des ersten starren Elements (251e112) ist größer als die des ersten flexiblen Balkens (251e113);
wobei die Größe des ersten nachgiebigen Balkens (251e111) sich von der des zweiten nachgiebigen Balkens (251e211) unterscheidet; und/oder die Größe des ersten flexiblen Balkens (251e113) sich von der des zweiten flexiblen Balkens (251e213) unterscheidet; und/oder der erste nachgiebige Balken (251e111) nicht parallel zum zweiten nachgiebigen Balken (251e211) verläuft; und/oder der erste flexible Balken (251e113) nicht parallel zum zweiten flexiblen Balken (251e213) verläuft.

14. Die elektronische Vorrichtung (100) gemäß Anspruch 9, wobei die zweite nachgiebige Balkeneinheit (251e2) eine Blattform mit überall gleichem Querschnittsbereich aufweist.

## Revendications

1. Un dispositif électronique pliable (100), comprenant: un mécanisme rotatif (23), un premier boîtier (21), un second boîtier (22) et un écran pliable (10);
l'écran pliable (10) comprenant une première partie (11), une deuxième partie (12) ainsi qu'une troisième partie (13) située entre la première partie (11) et la deuxième partie (12);
le premier boîtier (21) ayant une surface de support (M1) conçue pour fixer et supporter la première partie (11) de l'écran pliable (10);
le second boîtier (22) ayant une surface de support (M2) conçue pour fixer et supporter la deuxième partie (12) de l'écran pliable (10); et
le mécanisme rotatif (23) étant connecté entre le premier boîtier (21) et le second boîtier (22) et étant conçu pour supporter la troisième partie (13) de l'écran pliable (10); et
le mécanisme rotatif (23) comprenant une base (24), un premier bras oscillant (251d), un second bras oscillant (252d), une première plaque de connexion (251a), une deuxième plaque de connexion (252a), un premier mécanisme flexible multistable (251e) et un second mécanisme flexible multistable (252e);
la base (24) s'étendant dans une première direction (A) et ayant une surface de support (M4) conçue pour soutenir au moins la troisième partie (13) de l'écran pliable (10) dans un état déplié;
la première plaque de connexion (251a) étant fixée au premier boîtier (21) et articulée à un premier côté de la base (24);
la seconde plaque de connexion (252a) étant fixée au second boîtier (22) et articulée à un second côté de la base (24) opposé au premier côté dans la direction de la largeur de la base (24);
le premier bras oscillant (251d) étant articulé au premier côté de la base (24), le premier bras oscillant (251d) étant conçu pour coulisser par rapport à la première plaque de connexion (251a) dans une seconde direction (R) perpendiculaire à la première direction (A), dans lequel, lors du coulissement par rapport à la première plaque de connexion (251a) dans la direction (R), le premier bras oscillant (251d) est conçu pour coulisser vers une première position de verrouillage (SZ1) par rapport à la première plaque de connexion (251a) dans un état plié du mécanisme rotatif (23) et vers une seconde position de verrouillage (SZ2) dans un état déplié du mécanisme rotatif (23) ;
le second bras oscillant (252d) étant articulé sur le second côté de la base (24), le second bras oscillant (252d) étant configuré pour coulisser par rapport à la seconde plaque de connexion (252a) dans la seconde direction (R), dans lequel, lors du coulissement par rapport à la première plaque de connexion (251a) dans la direction (R), le second bras oscillant (252d) est configuré pour coulisser vers une première position de verrouillage (SZ1) par rapport à la première plaque de connexion (251a) dans un état replié du mécanisme rotatif (23) et vers une deuxième position de verrouillage (SZ2) dans l'état déployé du mécanisme rotatif (23) ;
le premier mécanisme flexible multistable (251e) étant disposé sur la première plaque de connexion (251a) et configuré pour coopérer avec le premier bras oscillant (251d), dans lequel, dans l'état déployé du mécanisme rotatif (23), le premier mécanisme flexible multistable (251e) est dans un premier état stable de manière à verrouiller le premier bras oscillant (251d) à la première position de verrouillage (SZ1) et, dans l'état replié du mécanisme rotatif (23), le premier mécanisme flexible multistable (251e) est dans un second état stable afin de verrouiller le premier bras oscillant (251d) à la seconde position de verrouillage (SZ2) ; et
le second mécanisme flexible multistable (252e) étant disposé sur la seconde plaque de connexion (252a) et configuré pour coopérer avec le second bras oscillant (252d), dans lequel, dans l'état déployé du mécanisme rotatif (23), le second mécanisme flexible multistable (252e) est dans un premier état stable afin de verrouiller le second bras oscillant (252d) à la première position de verrouillage (SZ1) et, dans l'état replié du mécanisme rotatif (23), le second mécanisme flexible multistable (252e) est dans un second état stable pour verrouiller le second bras oscillant (252d) à la seconde position de verrouillage (SZ2).

2. Le dispositif électronique (100) selon la revendication 1, dans lequel
dans l'état déployé du mécanisme rotatif (23), la surface de support de la base (24), la surface de support du premier boîtier (21) et la surface de support du second boîtier (22) sont disposées de manière coplanaire et ont la même orientation, et le premier mécanisme flexible multistable (251e) et le second mécanisme flexible multistable (252e) sont dans le premier état stable, de façon à verrouiller le premier bras oscillant (251d) et le second bras oscillant (252d) dans leur position de verrouillage respective, le premier bras oscillant (251d) par rapport à la première plaque de connexion (251a) et le second bras oscillant (252d) par rapport à la seconde plaque de connexion (252a), respectivement ; et
À l'état replié du mécanisme rotatif (23), la surface d'appui du premier boîtier (21) et la surface d'appui du deuxième boîtier (22) sont perpendiculaires à la surface d'appui de la base (24), et le premier mécanisme flexible multistable (251e) ainsi que le deuxième mécanisme flexible multistable (252e) sont dans le second état stable, de façon à verrouiller le premier bras oscillant (251d) et le deuxième bras oscillant (252d) respectivement à la deuxième position de verrouillage respective du premier bras oscillant (251d) par rapport à la première plaque de connexion (251a) et du deuxième bras oscillant (252d) par rapport à la deuxième plaque de connexion (252a).

3. Dispositif électronique (100) selon la revendication 1, dans lequel le premier mécanisme flexible multistable (251e) comprend : une première unité bistable conforme (251e1), la première unité bistable conforme (251e1) comprenant deux premières unités de poutre conforme (251e11), les deux premières unités de poutre conforme (251e11) étant disposées dans la première direction et positionnées de manière symétrique dans la première direction, les extrémités adjacentes des deux premières unités de poutre conforme (251e11) étant respectivement fixées par rapport au premier bras oscillant (251d), et les autres extrémités, opposées, des deux premières unités de poutre conforme (251e11) étant respectivement fixées par rapport à la première plaque de connexion (251a) ;
la dimension de longueur d'une trajectoire d'extension de chacune des premières unités de poutre conforme (251e11) est supérieure à la distance verticale entre l'extrémité d'une des extrémités de la première unité de poutre conforme (251e11) et l'extrémité de l'autre extrémité de la première unité de poutre conforme (251e11) dans la première direction.

4. Dispositif électronique (100) selon la revendication 3, dans lequel la première unité de poutre conforme (251e11) comprend: une première poutre conforme (251e111), un premier élément rigide (251e112) et une première poutre flexible (251e113);
une extrémité d'une des extrémités de la première poutre conforme (251e111) étant fixée par rapport au premier bras oscillant (251d), une extrémité d'une des extrémités de la première poutre flexible (251e113) étant fixée par rapport à la première plaque de connexion (251a), et le premier élément rigide (251e112) étant relié entre une extrémité de l'autre extrémité de la première poutre conforme (251e111) et une extrémité de l'autre extrémité de la première poutre flexible (251e113);
la rigidité du premier élément rigide (251e112) est supérieure à celle de la première poutre conforme (251e111), et la rigidité du premier élément rigide (251e112) est supérieure à celle de la première poutre flexible (251e113).

5. Le dispositif électronique (100) selon la revendication 4, dans lequel une aire de section transversale du premier élément rigide (251e112) est supérieure à celle de la première poutre conforme (251e111), et l'aire de section transversale du premier élément rigide (251e112) est supérieure à celle de la première poutre flexible (251e113).

6. Le dispositif électronique (100) selon la revendication 4 ou 5, dans lequel la première poutre conforme (251e111) et la première poutre flexible (251e113) sont toutes deux de forme lamellaire.

7. Le dispositif électronique (100) selon la revendication 3 ou 4, dans lequel la première unité de poutre conforme (251e111) a une forme de feuille avec une aire de section transversale constante en tout point.

8. Le dispositif électronique (100) selon l'une quelconque des revendications 3 à 7, dans lequel le mécanisme rotatif (23) présente un état d'arrêt intermédiaire, cet état d'arrêt intermédiaire se situant sur un chemin de commutation du mécanisme rotatif (23) passant de l'état déployé à l'état replié ; et
le premier mécanisme flexible multistable (251e) présente en outre un troisième état stable, ce troisième état stable se trouvant sur un chemin de commutation du premier mécanisme flexible multistable (251e) passant du premier état stable au second état stable, et dans l'état d'arrêt intermédiaire du mécanisme rotatif (23), le premier mécanisme flexible multistable (251e) se trouve dans le troisième état stable afin de verrouiller le premier bras oscillant (251d) dans une troisième position de verrouillage du premier bras oscillant (251d) par rapport à la première plaque de liaison (251a), la troisième position de verrouillage se situant sur un chemin de commutation du premier bras oscillant (251d) passant entre la première position de verrouillage et la seconde position de verrouillage.

9. Le dispositif électronique (100) selon la revendication 8, dans lequel le premier mécanisme flexible multistable (251e) comprend en outre une seconde unité conforme bistable (251e2), la seconde unité conforme bistable (251e2) et la première unité conforme bistable (251e1) étant disposées dans une direction de glissement du premier bras oscillant (251d) par rapport à la première plaque de liaison (251a);
la seconde unité bistable conforme (251e2) comprenant deux secondes unités de poutre conforme (251e21), les deux secondes unités de poutre conforme (251e21) étant disposées dans la première direction, les deux secondes unités de poutre conforme (251e21) étant disposées symétriquement par rapport à une ligne de symétrie des deux premières unités de poutre conforme (251e21), les portions d'extrémité d'une des extrémités, lesquelles sont adjacentes, des deux secondes unités de poutre conforme (251e21) étant respectivement fixées par rapport au premier bras oscillant (251d), les portions d'extrémité des autres extrémités des deux secondes unités de poutre conforme (251e21) étant respectivement fixées par rapport à la première plaque de connexion (251a), et une dimension de longueur de la trajectoire d'extension de chacune des secondes unités de poutre conforme (251e21) étant supérieure à la distance verticale entre la portion d'extrémité de l'une des extrémités de l'unité de poutre conforme secondaire (251e21) et la portion d'extrémité de l'autre extrémité de l'unité de poutre conforme secondaire (251e21) dans la première direction ;
où au moins l'un des éléments suivants : matériau, forme et taille de la seconde unité de poutre conforme (251e21), diffère de ceux de la première unité de poutre conforme (251e11).

10. Le dispositif électronique (100) selon la revendication 9, dans lequel la seconde unité de poutre conforme (251e21) comprend: une seconde poutre conforme (251e211), un second élément rigide (251e212), et une seconde poutre flexible (251e213) ;
une portion d'extrémité d'une des extrémités de la seconde poutre conforme (251e211) étant fixée par rapport au premier bras oscillant (251d), une portion d'extrémité d'une des extrémités de la seconde poutre flexible (251e213) étant fixée par rapport à la première plaque de connexion (251a), et le second élément rigide (251e212) étant connecté entre la portion d'extrémité de l'autre extrémité de la seconde poutre conforme (251e211) et la portion d'extrémité de l'autre extrémité de la seconde poutre flexible (251e213) ;
où la rigidité du second élément rigide (251e212) est supérieure à celle de la seconde poutre conforme (251e211), et la rigidité du second élément rigide (251e212) est supérieure à celle de la seconde poutre flexible (251e213).

11. Le dispositif électronique (100) selon la revendication 10, dans lequel la surface de section transversale du second élément rigide (251e212) est supérieure à celle de la seconde poutre conforme (251e211), et la surface de section transversale du second élément rigide (251e212) est supérieure à celle de la seconde poutre flexible (251e213).

12. Le dispositif électronique (100) selon la revendication 10 ou 11, dans lequel la seconde poutre conforme (251e211) ainsi que la seconde poutre flexible (251e213) sont toutes deux en forme de feuille.

13. Le dispositif électronique (100) selon l'une quelconque des revendications 9 à 12, dans lequel la première unité de poutre conforme (251e11) comprend: une première poutre conforme (251e111), un premier élément rigide (251e112) et une première poutre flexible (251e113) ;
une extrémité d'une des extrémités du premier faisceau conforme (251e111) étant fixée par rapport au premier bras oscillant (251d), une extrémité d'une des extrémités du premier faisceau flexible (251e113) étant fixée par rapport à la première plaque de connexion (251a), et le premier élément rigide (251e112) étant relié entre une extrémité de l'autre extrémité du premier faisceau conforme (251e111) et une extrémité de l'autre extrémité du premier faisceau flexible (251e113) ; la rigidité du premier élément rigide (251e112) étant supérieure à celle du premier faisceau conforme (251e111), et la rigidité du premier élément rigide (251e112) étant supérieure à celle du premier faisceau flexible (251e113) ;
la taille du premier faisceau conforme (251e111) étant différente de celle du second faisceau conforme (251e211) ; et/ou la taille du premier faisceau flexible (251e113) étant différente de celle du second faisceau flexible (251e213) ; et/ou, le premier faisceau conforme (251e111) n'étant pas parallèle au second faisceau conforme (251e211) ; et/ou, le premier faisceau flexible (251e113) n'étant pas parallèle au second faisceau flexible (251e213).

14. Le dispositif électronique (100) selon la revendication 9, dans lequel la deuxième unité de faisceau conforme (251e2) présente une forme de feuille avec une aire de section transversale égale partout.
